(19) Europäisches Patentamt / European Patent Office / Office européen des brevets

(11) **EP 3 398 789 B1**

(12) **EUROPEAN PATENT SPECIFICATION**

(45) Date of publication and mention
of the grant of the patent:
**26.02.2020 Bulletin 2020/09**

(21) Application number: **18179570.9**

(22) Date of filing: **06.12.2016**

(51) Int Cl.:
*B44C 1/17* (2006.01)         *B32B 5/18* (2006.01)
*B32B 37/14* (2006.01)        *B32B 38/10* (2006.01)
*B32B 38/00* (2006.01)        *B41M 3/12* (2006.01)
*B32B 15/082* (2006.01)       *B32B 15/095* (2006.01)
*B32B 23/08* (2006.01)        *B32B 23/20* (2006.01)
*B32B 27/10* (2006.01)        *B32B 27/20* (2006.01)
*B32B 27/30* (2006.01)        *B32B 27/32* (2006.01)
*B32B 27/34* (2006.01)        *B32B 27/36* (2006.01)
*B32B 27/40* (2006.01)        *B32B 3/26* (2006.01)
*B32B 7/04* (2019.01)         *B32B 15/085* (2006.01)
*B32B 27/08* (2006.01)

(54) **TRANSFER MATERIAL, PRINTED MATERIAL, AND MANUFACTURING METHOD FOR PRINTED MATERIAL**

ÜBERTRAGUNGSMATERIAL, DRUCKMATERIAL UND HERSTELLUNGSVERFAHREN FÜR DRUCKMATERIAL

MATÉRIAU DE TRANSFERT, MATÉRIAU IMPRIMÉ ET PROCÉDÉ DE FABRICATION D'UN MATÉRIAU IMPRIMÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.12.2015 JP 2015239756**

(43) Date of publication of application:
**07.11.2018 Bulletin 2018/45**

(62) Document number(s) of the earlier application(s) in accordance with Art. 76 EPC:
**16202362.6 / 3 178 661**

(73) Proprietor: **CANON FINETECH NISCA INC.**
**Misato-shi,**
**Saitama 341-8527 (JP)**

(72) Inventors:
• **SUMIKAWA, Yusuke**
  **Misato-shi, Saitama 341-8527 (JP)**
• **TSUTSUI, Takahiro**
  **Misato-shi, Saitama 341-8527 (JP)**
• **HIRABAYASHI, Hiromitsu**
  **Misato-shi, Saitama 341-8527 (JP)**

(74) Representative: **TBK**
**Bavariaring 4-6**
**80336 München (DE)**

(56) References cited:
**EP-A2- 2 845 744    WO-A1-95/06564**

EP 3 398 789 B1

**Description**

BACKGROUND OF THE INVENTION

Field of the Invention

The present invention relates to a transfer material on which an image is printed, a printed material to which the image printed on the transfer material is transferred, and a manufacturing method for the printed material.

Description of the Related Art

JP 2006 517871 A and JP H08 207450 A propose a technique for transferring an image printed using an ink jet system to a printed material (transfer target material). For example, an image is printed on a color material receiving layer in a transfer material using an ink jet system. Then, the transfer material is placed on a printed material, and the materials are heated to transfer the color material receiving layer on which the image is printed, to the printed material. Furthermore, the inventors have proposed a technique for controlling the molecular weights of inorganic particulates and a water-soluble resin in a color material receiving layer in a transfer material on which an image is formed using an ink jet system (EP 2 845 744 A2). In particular, EP 2 845 744 A2 discloses a transfer material as specified in the preamble of claim 1, and a printed material as specified in the preamble of claim 9.

The ink jet system needs to allow a large amount of ink to be absorbed into the color material receiving layer of the transfer material in order to achieve a sufficient image density. This makes the color material receiving layer and the transfer material itself thick. On the other hand, printed materials such as credit cards need to be very durable, and for example, need to be durable enough to resist changes during long-time immersion tests using water. However, when a print matter to which a color material receiving layer with a surface thereof covered with a transparent sheet (protective sheet) has been transferred is immersed in water for a long time, the color material receiving layer absorbs a large amount of moisture through an end thereof because the end is exposed. Thus, during a subsequent drying process, the entire surface of the transparent sheet may fissure or crack. Such a phenomenon is specific to the ink jet system that applies ink to the color material receiving layer to print an image and does not occur in a thermal transfer system that needs no color material receiving layer absorbing water. That is, in the thermal transfer system, a thermal head or the like is used to heat a transfer layer to form an image, and then, the transfer layer is transferred to a transfer target material. Thus, the thermal transfer system needs no color material receiving layer absorbing water.

JP 2006 517871 A, JP H08 207450 A, and EP 2 845 744 A2 do not describe the water resistance of the color material receiving layer absorbing water as described above. In EP 2 845 744 A2, the transparent sheet (protective sheet) has an increased thickness and an enhanced strength so as to be weather resistant and, more specifically, PET excellent in weatherability is preferred. This transparent sheet is effective for suppressing possible fissuring or cracking that affects the water resistance of the color material receiving layer but has difficulty achieving high water resistance needed for printed materials such as credit cards.

SUMMARY OF THE INVENTION

The present invention provides a transfer material, a printed material, and a manufacturing method for the printed material.

The present invention in its first aspect provides a transfer material as specified in claims 1 to 8.

The present invention in its second aspect provides a printed material as specified in claim 9.

The present invention in its third aspect provides a manufacturing method for a printed material as specified in claim 10.

In the present invention, moisture in the color material receiving layer is discharged to the outside through the protective sheet, allowing a highly water-resistant printed material to be provided.

Further features of the present invention will become apparent from the following description of exemplary embodiments (with reference to the attached drawings).

BRIEF DESCRIPTION OF THE DRAWINGS

Fig. 1A, Fig. 1B, and Fig. 1C are each a sectional view of a transfer material;
Fig. 2 is a diagram illustrating an image that is printed on the transfer material;
Fig. 3 is a diagram illustrating a first manufacturing apparatus for a printed material;

Figs. 4A to 4H are sectional views of different configuration examples of the transfer material;
Fig. 5 is a diagram illustrating a manufacturing method for a printed material;
Fig. 6 is a diagram illustrating another example of the manufacturing method for a printed material;
Fig. 7 is a diagram illustrating yet another example of the manufacturing method for a printed material;
Fig. 8 is a diagram illustrating still another example of the manufacturing method for a printed material;
Fig. 9 is a diagram illustrating a manufacturing apparatus for a printed material;
Fig. 10 is a diagram illustrating a manufacturing apparatus for a printed material;
Fig. 11 is a diagram illustrating a manufacturing apparatus for a printed material;
Fig. 12 is a diagram illustrating a manufacturing apparatus for a printed material;
Fig. 13 is a diagram illustrating a diagram illustrating a fissuring mechanism in immersion water resistance tests for a transparent sheet;
Figs. 14A to 14F are sectional views of different configuration examples of the printed material;
Fig. 15A and Fig. 15B are each a sectional view of a printed material subjected to immersion water resistance tests;
Fig. 16A and Fig. 16B are each a sectional view illustrating that contaminated water attaches to a surface of a transparent sheet;
Fig. 17 is a diagram illustrating a different example of a pore forming method based on foaming;
Fig. 18 is a diagram illustrating a different example of a pore forming method using porous particles;
Fig. 19 is a diagram illustrating a different example of a pore forming method using hollow particles;
Fig. 20 is a diagram illustrating a different example of piercing performed on a transparent sheet;
Fig. 21 is a diagram illustrating a further different example of piercing performed on a transparent sheet;
Fig. 22 is a diagram illustrating a further different example of piercing performed on a transparent sheet;
Fig. 23 is a diagram illustrating a further different example of piercing performed on a transparent sheet;
Figs. 24A to 24C are diagrams illustrating different examples of pore forming methods based on crazing;
Figs. 25A to 25C are diagrams illustrating different examples of piercing methods;
Fig. 26 is a diagram illustrating still another example of the manufacturing method for a printed material;
Fig. 27 is a diagram illustrating still another example of the manufacturing method for a printed material;
Fig. 28 is a diagram illustrating still another example of the manufacturing method for a printed material;
Fig. 29 is a sectional view of a printed material in a second invention immersed for a long time;
Fig. 30 is a sectional view of the printed material in the second invention;
Fig. 31A and Fig. 31B are diagrams illustrating different examples of printed materials each including a transparent sheet with a plurality of layers;
Fig. 32A and Fig. 32B are diagrams illustrating different examples of transfer materials each including a transparent sheet with a plurality of layers;
Fig. 33 is a diagram illustrating that contaminated water attaches to the printed material;
Fig. 34 is a diagram illustrating another example in which contaminated water attaches to the printed material;

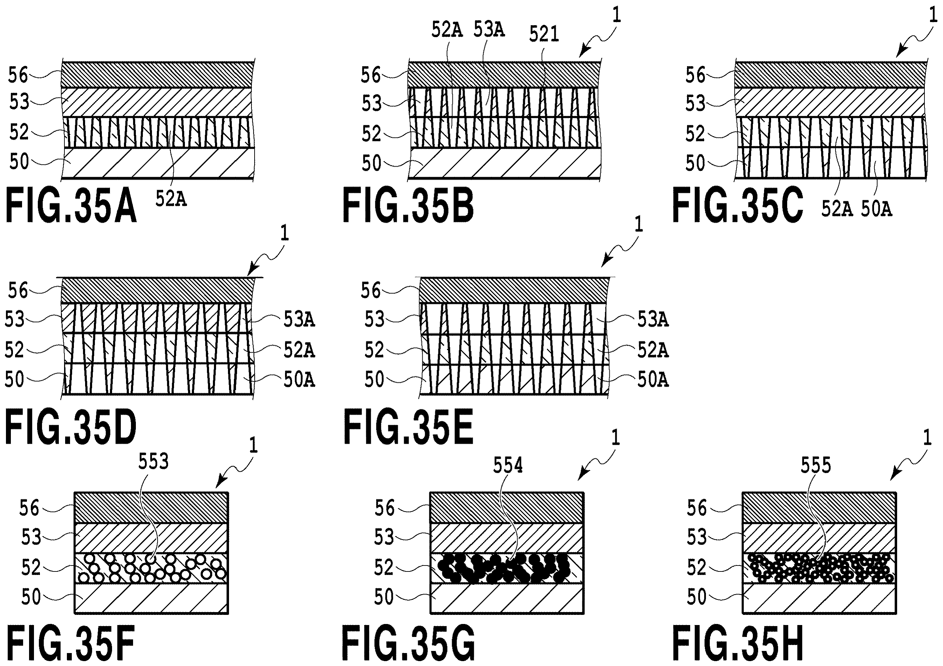

Figs. 35A to 35H are sectional views illustrating different examples of transfer materials each including a primer layer;
Fig. 36 is a sectional view of a transfer material in a second invention;
Fig. 37 is a sectional view of a printed material in the second invention;
Fig. 38 is a diagram of a different example of a manufacturing method for a printed material in the second invention; and
Figs. 39A to 39C are diagrams illustrating that the transfer material in the present invention has been thermocompression-bonded to the image substrate.

## DESCRIPTION OF THE EMBODIMENTS

The present invention will be described below with reference to the drawings. However, the present invention is not limited to embodiments below but includes all objects having matters specifying the invention. Members with the same structures are denoted by the same reference numerals throughout the drawings. Description of these members may be omitted.

Through earnest examinations concerning the above-described object, the inventors have successfully developed an ink jet printed material and the like that, when immersed in water for a long time, enables prevention of possible fissuring of a transparent sheet (protective sheet) . First, a mechanism in which a transparent sheet in a conventional ink jet printed material immersed in water fissures will be described with reference to the drawings.

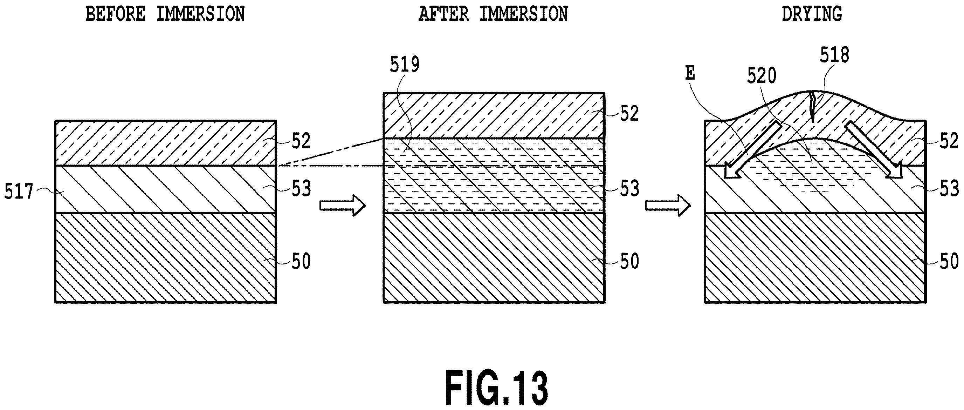

Fig. 13 is a sectional view depicting a conventional common ink jet printed material not subjected to immersion water resistance tests. The ink jet printed material is structured such that a transparent sheet 52, a color material receiving layer 53, and an image substrate 55 are sequentially laminated. A surface of the color material receiving layer 53 is covered with the transparent sheet 52, which is a water-insoluble resin, and fails to absorb moisture. However, an end 517 of the color material receiving layer 53 is exposed externally, and thus, when the ink jet printed material is immersed in water, the color material receiving layer 53 absorbs a large amount of moisture through the end 517.

Fig. 13 depicts a change in the ink jet printed material immersed in water for a long time which change is observed when the ink jet printed material is taken out of the water. The color material receiving layer 53 significantly swells upon absorbing a large amount of moisture through the end 517. A portion 519 is a swollen portion. The color material receiving layer 53 may independently swell to approximately 1.5 times the initial volume thereof when the ink jet printed material is immersed in water for 48 hours. Then, when the ink jet printed material is taken out of the water, the moisture in the color material receiving layer 53 starts to vaporize. At this time, since the surface of the color material receiving layer 53 is covered with the transparent sheet 52, the moisture is prevented from vaporizing through the surface and vaporizes only through the end 517 exposed externally. Thus, in the color material receiving layer 53 from which the moisture has vaporized, the portion 519 swollen with absorbed water contracts similarly to a portion 520. The contraction of the color material receiving layer 53 starts at the end 517, and thus, stress generated during the contraction concentrates at a central portion 518 of the transparent sheet 52. Thus, the portion 518 of the transparent sheet 52 fissures, and the portion 518 may partly fracture, with a crack formed on a surface of the portion 518.

That is, the color material receiving layer swollen all over the surface thereof as a result of absorption of water sequentially dries and contracts, losing the flexibility thereof. The color material receiving layer is thus fixed to the image substrate. Consequently, with distortion gradually accumulated in the center of the color material receiving layer still swollen with absorbed water, the drying and the contraction progress toward the central portion of the color material receiving layer. As described above, distortion concentrates at the portions of the color material receiving layer and the transparent sheet that dry and contract in a delayed fashion. Then, a fissure or a crack is expected to be formed in a portion of the transparent sheet that fails to resist stress generated during the contraction.

As described above, the cause of fissuring of the transfer material is that moisture vaporizes from the color material receiving layer only through the end thereof, with the stress of the contraction concentrating at one or more particular positions of the transparent sheet. Focusing on this, the inventors have established a configuration that disperses the stress of the transparent sheet resulting from absorption and vaporization of moisture into and from the color material receiving layer. That is, in the present invention, passages are formed in the transparent sheet forming a surface of the printed material (transfer target material) to allow moisture to be discharged through the surface. Thus, unwanted moisture absorbed into the color material receiving layer can be tentatively vaporized through the entire front layer surface of the transparent sheet. As described above, the stress concentrated in the transparent sheet is dispersed while the color material receiving layer stretched as a result of absorption of water is tentatively dried. Consequently, possible fissuring of the transparent sheet in immersion water resistance tests has been successfully avoided.

(First Invention)

A first invention will be described below.

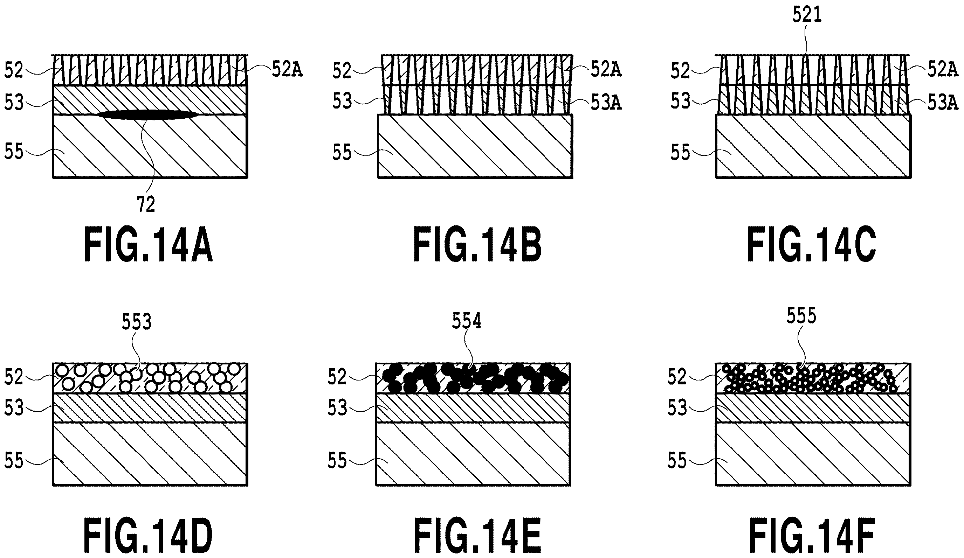

A transparent sheet functions as a protective sheet that protects the surface of a printed material. In the first invention, pores are formed in the transparent sheet forming the surface of the printed material such that the pores penetrate the transparent sheet and reach a color material receiving layer. Figs. 14A to 14F each depict a printed material produced by transferring a color material receiving layer 53 and a transparent sheet 52 in a transfer material in the present invention to a substrate 55 of the printed material. An inverted image 72 is printed on the color material receiving layer 53 as described below. The transparent sheet 52 in the present invention has pores 52A, and thus, moisture absorbed into the color material receiving layer 53 can be vaporized through surfaces 521, 553, 554, and 555 of the transparent sheet 52 via the pores 52A in the transparent sheet 52. In the printed material, the pores 52A is preferably formed at least in the transparent sheet 52 as depicted in Fig. 14A, and the pores 52A may also be formed in the color material receiving layer 53 as depicted in Figs. 14B and Fig. 14C. As depicted in Figs. 14D to 14F, an open-cell structure 553, 554, or 555 may be formed in which a large number of gaps are formed in the transparent sheet 52 such that each gap continues into an adjacent gap so as to form the pores 52A penetrating the transparent sheet 52. The pores will be described below. The pores 52A in the transparent sheet 52 are configured to be made permeable to moisture or humidity. That is, the pores 52A has the property of allowing the water coming into contact with the transparent sheet 52 to permeate the transparent sheet 52 in a liquid or gaseous state.

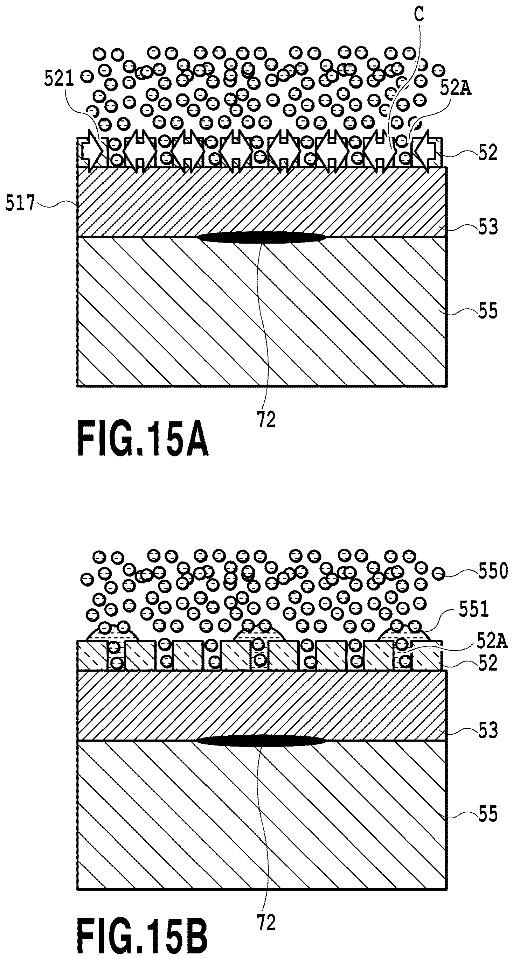

Fig. 15A illustrates that the printed material in each of Figs. 14A to 14F immersed in water for a long time has been taken out of the water. When the printed material 73 in the present invention is taken out of the water, the moisture absorbed into the color material receiving layer 53 vaporizes not only through the end 517 of the color material receiving layer 53 but also through the surface 521 of the transparent sheet 52. When the moisture in the color material receiving layer 53 is vaporized also through the surface of the transparent sheet, the stress generated during the contraction of the color material receiving layer is widely dispersed all over the surface of the transparent sheet 52 as depicted by arrow C. As a result, possible fissuring of the transparent sheet 52 can be prevented.

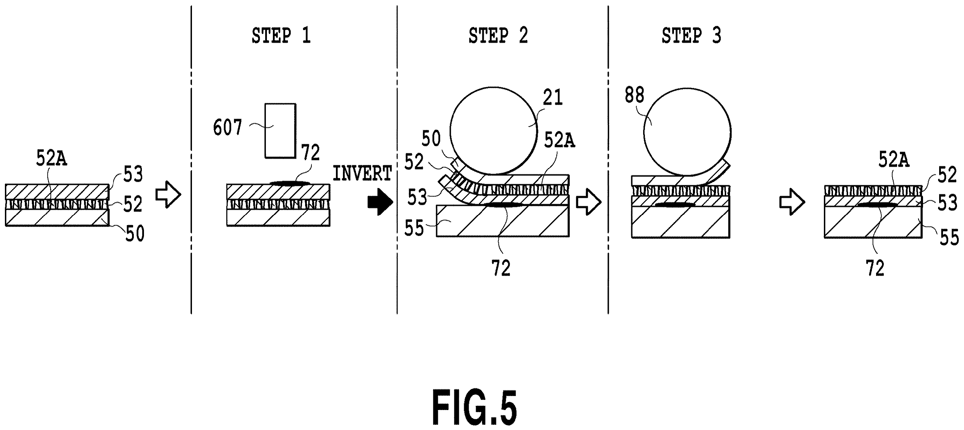

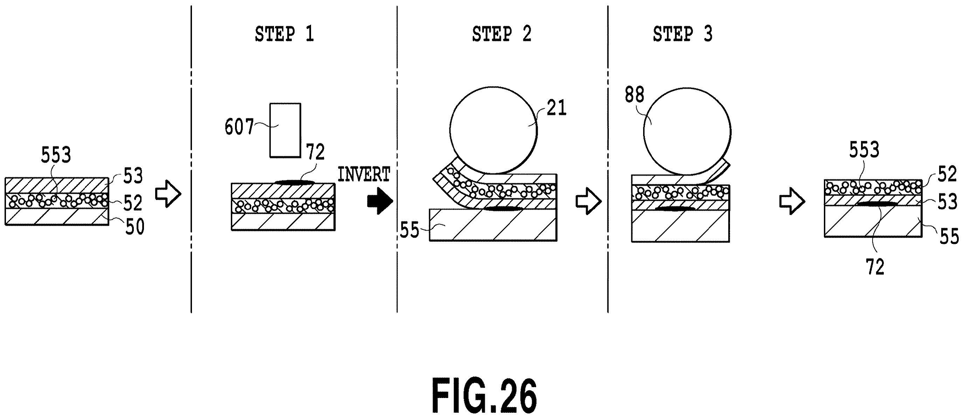

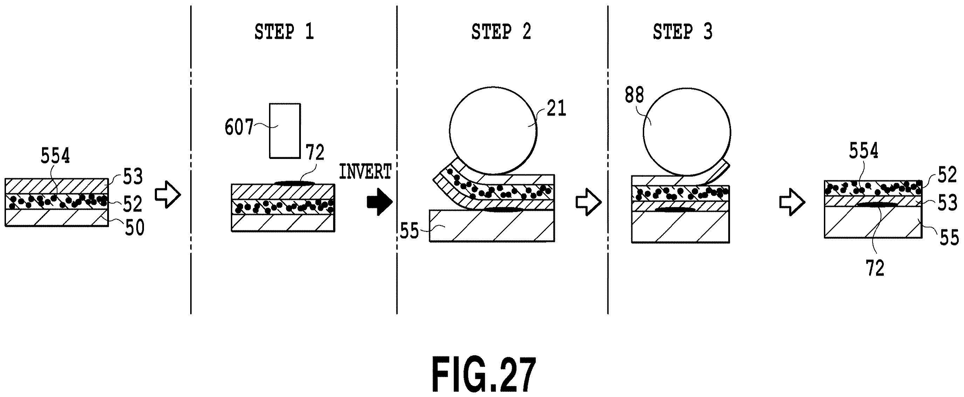

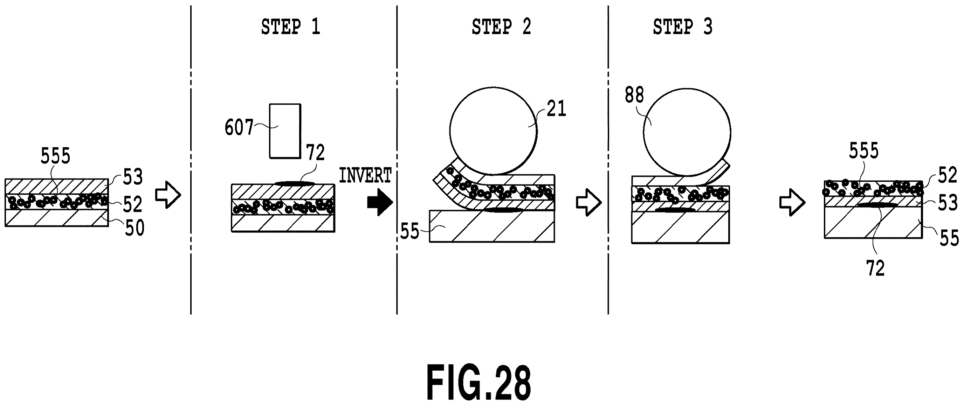

In the printed material in the present embodiment, first, the inverted image 72 is printed on the color material receiving layer 53 of the transfer material using a print head 607 based on the ink jet system (step 1) as depicted in Figs. 5 to 8 and 25, 26, 27, and 28. Then, the transfer material and the image substrate 55 are thermocompression-bonded together using a heat roller 21, to transfer the transfer material to the image substrate 55 (step 2). Finally, the substrate sheet 50 is peeled off using a peeling roll 88 (step 3) to provide a printed material in which the color material receiving layer with the image printed therein and the protective sheet are laminated together. The transparent sheet 52 forming the surface of the printed material has the pores 52A.

[1] Transfer[2 Material

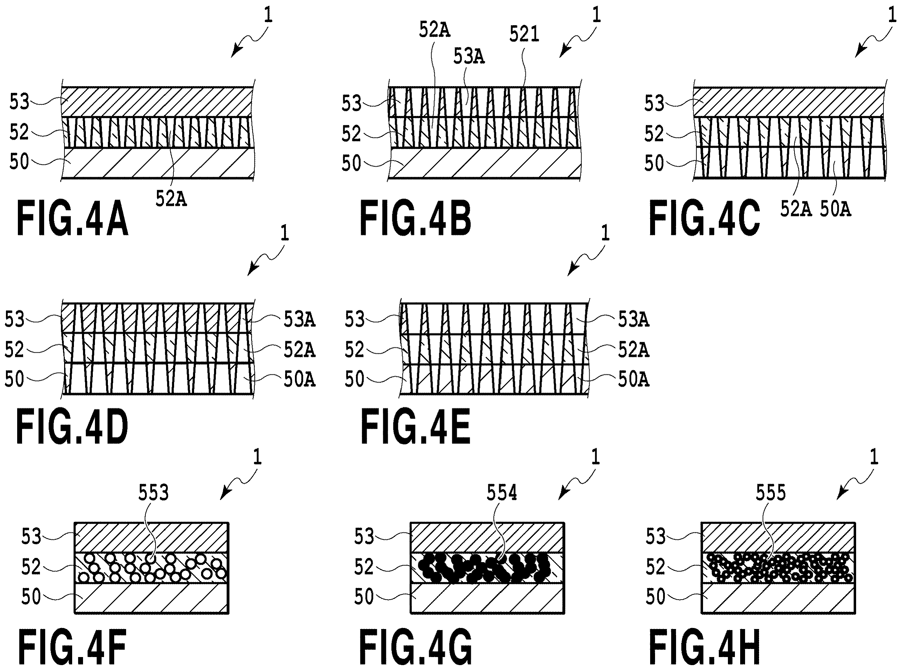

The transfer material in the present embodiment is a transfer material used for an ink jet printing system having a laminate structure in which the substrate sheet, the transparent sheet, and the color material receiving layer are laminated in this order. The transparent sheet enables moisture to be discharged out of the system. More preferably, in the transfer material, the color material receiving layer contains at least a water-soluble resin, and the transparent sheet is at least permeable to moisture or humidity due to the porous structure thereof. Much more preferably, the transparent sheet is permeable both to humidity and moisture. Figs. 4A to 4H are sectional views of different configuration examples of the transfer material. A transfer material 1 has a laminate structure in which the substrate sheet 50, the transparent sheet 52, and the color material receiving layer 53 are laminated in this order. The color material receiving layer 53 in each of Figs. 4A to 4E contains a water-soluble resin that can absorb at least moisture. The pores 52A are formed at least in the transparent sheet 52 and allow the substrate sheet 50 and the color material receiving layer 53 to communicate with each other.

In the transfer material 1 in Fig. 4A, the pores 52A are formed only in the transparent sheet 52. In the transfer material 1 in Fig. 4B, the pores 52A are formed in the transparent sheet 52 and pores 53A are formed in the color material receiving layer 53. In the transfer material 1 in Fig. 4C, the pores 52A are formed in the transparent sheet 52, and pores 50A are formed in the substrate sheet 50. In the transfer material 1 in each of Figs. 4D and 4E, the pores 52A, 53A, and 50A are formed in the transparent sheet 52, the color material receiving layer 53, and the substrate sheet 50, respectively. In the transparent sheet 52 in each of Figs. 4F to 4H, a large number of gaps are formed such that each gap continues into an adjacent gap and the connected gaps penetrate the transparent sheet 52 between the opposite ends thereof. The gaps form open-cell structures 553, 554, and 555 in which each gap continues into an adjacent gap so as to form the pores 52A penetrating the transparent sheet 52.

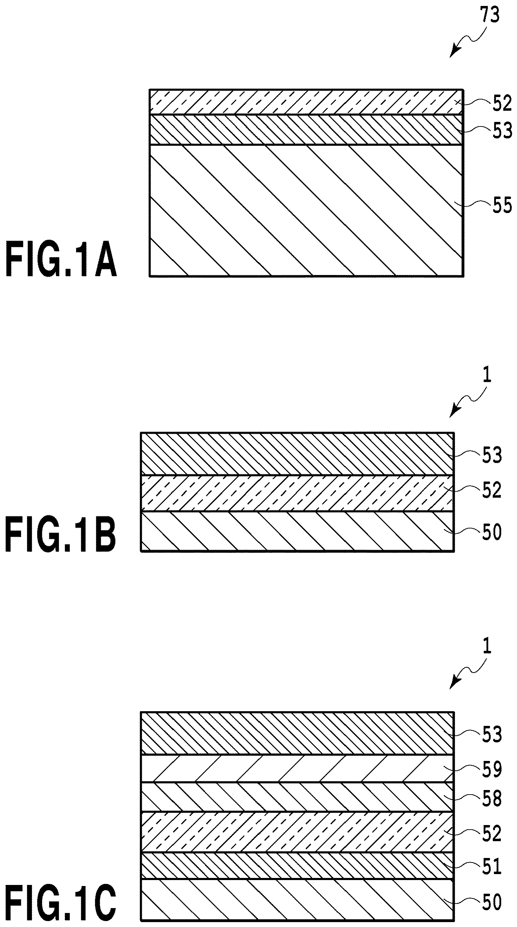

In the transfer material 1, after an image is formed in the color material receiving layer 53, the color material receiving layer 53 is transferred to the image substrate 55 of the printed material together with the transparent sheet 52 as depicted in Figs. 14A to 14F. Therefore, the transfer material 1 functions as an intermediate sheet including the color material receiving layer 53 and the transparent sheet 52, which are transferred to the printed material. Fig. 14A is a sectional view of a printed material produced using the transfer material 1 in Fig. 4C. Fig. 14B is a sectional view of a printed material produced using the transfer material 1 in Fig. 4C or Fig. 4D. Fig. 14C is a sectional view of a printed material produced using the transfer material 1 in Fig. 4B or Fig. 4E. Fig. 14D, Fig. 14E, and Fig. 14F are sectional views of printed materials produced using the transfer materials 1 in Fig. 4F, 4G, and 4H, respectively. The transfer material 1 may be configured such that the pores 52A are not pre-formed in the transparent sheet 52 as depicted in Fig. 1B. In this case, the pores 52A may be formed in the transparent sheet 52 before or after one of the following steps 1 to 3.

[1-1] Color Material Receiving Layer

The color material receiving layer receives ink for an ink jet printing system and contains at least a water-soluble resin. The color material receiving layer may be either a swelling absorbing type that mainly includes a water-soluble resin to receive ink in a network structure of a water-soluble polymer or a gap absorbing type that contain a water-soluble resin and at least inorganic particulates to receive ink in a fine gap structure.

When the color material receiving layer 53 is of the swelling absorbing type that mainly includes a water-soluble resin, water is absorbed at a low speed. Thus, even when the printed material is immersed in water, the transparent sheet 52 is unlikely to fissure if the immersion lasts only a short time. The printed material with such a color material receiving layer 53 transferred thereto is slightly advantageous in terms of water resistance, but the color material receiving layer 53 absorbs ink at a reduced speed. Thus, the swelling absorbing color material receiving layer adequately functions under limited conditions but may be unsuitable for high-speed printing due to a limited printing speed for images. The swelling absorbing color material receiving layer is swollen by the moisture in the ink to form recesses and protrusions on the surface of the color material receiving layer. This may weaken the adhesion of the color material receiving layer to the image substrate.

The gap absorbing color material receiving layer includes a composition containing a water-soluble resin and at least inorganic particulates. If the color material receiving layer 53 is of the gap absorbing type, when the printed material is immersed in water, water is more likely to enter the printed material through a part of the color material receiving layer located at the end of the printed material as described above. This may affect the water resistance to make the transparent sheet likely to fissure or crack. However, in the present invention, since the pores are formed in the transparent sheet, even if the color material receiving layer absorbs a large amount of moisture, fissuring or cracking of transparent sheet caused by stress concentration is unlikely to occur. Furthermore, in the gap absorbing color material receiving layer, the ink can be quickly absorbed through the gaps defined by the inorganic particulates, enabling high-speed ink jet printing. Unlike the swelling absorbing color material receiving layer, the gap absorbing color material receiving layer is kept smooth without swelling. In particular, when pigment ink is used, a pigment component in the pigment ink is fixed to the surface of the color material receiving layer. On the other hand, moisture and a solvent component in the ink permeate to the inside of the color material receiving layer and separate from the pigment component (solid-liquid separation). Thus, during transfer, the surface of the color material receiving layer is dry. Since the gaps defined by the inorganic particulates make the surface of the color material receiving layer dry, when the transfer material is thermocompression-bonded to the image substrate, the moisture or solvent in the ink is restrained from being rapidly boiled. This allows suppression of insufficient and inappropriate adhesion between the transfer material and the substrate of the printed material and remaining of bubbles between the transfer material and the image substrate of the printed material.

Since the color material receiving layer contains the inorganic particulates, when the substrate sheet is peeled off from the transfer material after transfer, the crack is easier to form at the gap between the inorganic particulates in the color material receiving layer. This allows possible burrs to be prevented from remaining at the end of the printed material. Thus, the color material receiving layer 53 is preferably of the gap absorbing type. That is, in the present invention, images can be printed at high speed utilizing the gap absorbing color material receiving layer without impairing water resistance.

[1-1-1] Inorganic Particulates

The inorganic particulates are an inorganic material. The inorganic particulates have a function to form, in the color material receiving layer, gaps that receive a color material.

The type of the inorganic material contained in the inorganic particulates is not particularly limited. However, the inorganic material preferably has a large absorptive capacity and an excellent color developing property and enables high-quality images to be formed. Examples of the inorganic material include calcium carbonate, magnesium carbonate, kaolin, clay, talc, hydrotalcite, aluminum silicate, calcium silicate, magnesium silicate, diatomaceous earth, alumina, colliodal alumina, aluminum hydroxide, an alumina hydrate of boehmite structure, an alumina hydrate of pseudo-boehmite structure, lithopone (a mixture of barium sulfate and zinc sulfide), and zeolite.

Among the inorganic particulates of any of these inorganic materials, alumina particulates are preferable which are at least one type of material selected from a group consisting of alumina and alumina hydrates. Examples of the alumina hydrate include an alumina hydrate of boehmite structure and an alumina hydrate of pseudo-boehmite structure. The alumina, the alumina hydrate of a boehmite structure, and the alumina hydrate of pseudo-boehmite structure are preferable in that these materials allow enhancement of transparency of the color material receiving layer and the printing density of images.

The inorganic particulates preferably have the average particle size thereof precisely controlled, and the average particle size is preferably 120 to 200 nm. When the average particle size is preferably 120 nm or more or more preferably 140 nm or more, ink absorbability of the color material receiving layer can be enhanced to suppress possible bleeding or beading of the ink in printed images. When the average particle size is preferably 200 nm or less or more preferably 170 nm or less, light scattering caused by the inorganic particulates can be suppressed to enhance transparency of the color material receiving layer. Furthermore, the number of inorganic particulates per unit area of the color material receiving layer can be increased, allowing the ink absorbability to be enhanced. Therefore, the printing density of images can be increased, allowing the colors of print images to be restrained from being dull. This allows enhancement of transparency (permeability) of the color material receiving layer and visibility of images from the transparent sheet side. Even when pigment ink that is unlikely to permeate the color material receiving layer is used as color materials, ink application density is increased, eliminating the need to increase the thickness of the color material receiving layer in order to allow the color material receiving layer to receive a large amount of ink. Thus, the transfer material and the printed material as a whole can be made thin.

The average particle size and polydispersity index as used herein can be determined by analyzing values measured by a dynamic light scattering method, using a cumulant approach described in "Chapter 1 Light Scattering in Structure of Polymer (2) Scattering Experiments and Morphological Observations" (published by KYORITSU SHUPPAN CO., LTD. and edited by The society of Polymer Science, Japan) or J. Chem. Phys., 70(B), 15 Apl., 3965 (1979). The average particle size and the polydispersity index defined in the present embodiment can be easily measured using, for example, a laser particle size analyzer PARIII (manufactured by OTSUKA ELECTRONICS Co., Ltd.) .

One type of inorganic particulates may be used alone or two or more types of inorganic particulates may be mixed together. "Two or more types" of inorganic particulates include inorganic particulates of different materials and inorganic particulates with different characteristics such as different average particle sizes or different polydispersity indices.

[1-1-2] Water-Soluble Resin

The water-soluble resin is a resin that adequately mixes with water or that has a solubility of 1 (g/100 g) or more, at 25°C. For the swelling color material receiving layer, the water-soluble resin acts as a layer that receives ink in the network structure of a water-soluble polymer. For the gap absorbing type, the water-soluble resin functions as a binder that binds inorganic particulates together.

Examples of the water-soluble resin include starch, gelatin, casein, and modified materials thereof; cellulose derivatives such as methylcellulose, carboxymethylcellulose, and hydroxyethylcellulose; polyvinyl alcohols (completely saponified polyvinyl alcohol, partially saponified polyvinyl alcohol, low saponified polyvinyl alcohol, or the like) and modified resins thereof (cation modified resin, anion modified resin, modified resin, and the like); and resins such as urine-based resin, melamine-based resin, epoxy-based resin, epichlorohydrin-based resin, polyurethane-based resin, polyethyleneimine-based resin, polyamide-based resin, polyvinyl pyrrolidone-based resin, polyvinyl butyral-based resin, poly (meth)acrylic acid or copolymer resin thereof, acrylamid-based resin, maleic anhydride-based copolymer resin, and polyester-based resin.

Among the water-soluble resins, saponified polyvinyl alcohol is preferable which is obtained by hydrolyzing (saponifying) polyvinyl alcohol, particularly polyvinyl acetate. Polyvinyl alcohol can be bonded to the image substrate by dissolved when the transfer material is transferred to image substrate. Since vinyl acetate group contained in saponified polyvinyl alcohol is expected to contribute to adhesive, when PVC or PET-G having a high affinity for vinyl acetate group is used as an image substrate, the polyvinyl alcohol allows strengthening of the adhesion (transfer performance) between the image substrate and the color material receiving layer and is thus particularly preferably used.

The color material receiving layer is preferably a composition containing polyvinyl alcohol with a degree of saponification of 70 to 100 mol%. The saponification means the percentage of the amount by mole of a hydroxyl group relative to the total amount by mole of an acetate group and the hydroxyl group.

Setting the degree of saponification preferably to 70 mol% or more and more preferably to 86 mol% or more allows the color material receiving layer to be provided with the appropriate hardness. Therefore, during a peeling step, the color material receiving layer can be more appropriately cut off, allowing suppression of possible burrs at the ends of the color material receiving layer. This also enables a reduction in the viscosity of a coating liquid containing inorganic particulates and polyvinyl alcohol. Therefore, the coating liquid can be easily applied to the transparent sheet, allowing the transfer material to be more effectively and efficiently produced. Setting the degree of saponification preferably to 100 mol% or less and more preferably to 90 mol% provides the color material receiving layer with appropriate flexibility. This improves the adhesive strength between the transparent sheet and the color material receiving layer to allow suppression of peel-off of the color material receiving layer from the transparent sheet due to insufficient adhesive strength. Furthermore, the color material receiving layer can be provided with appropriate hydrophilicity, facilitating absorption of ink. Therefore, a high-quality image can be printed on the color material receiving layer.

Examples of the saponified polyvinyl alcohol having a degree of saponification falling within the appropriate range of values include completely saponified polyvinyl alcohol (a degree of saponification of 98 to 99 mol%), partially saponified polyvinyl alcohol (a degree of saponification of 87 to 89 mol%), and low-saponification polyvinyl alcohol (a degree of saponification of 78 to 82 mol%). In particular, partially saponified polyvinyl alcohol is preferable.

The color material receiving layer is preferably a composition containing polyvinyl alcohol with a weight-average degree of polymerization of 2,000 to 5,000.

The color material receiving layer can be provided with appropriate flexibility by setting the weigh-average degree of polymerization preferably to 2,000 or more and more preferably to 3,000 or more. Therefore, during a peeling step, the color material receiving layer can be more appropriately cut off, allowing suppression of possible burrs at the ends of the color material receiving layer. The color material receiving layer can be provided with appropriate hardness by setting the weigh-average degree of polymerization preferably to 5,000 or less and more preferably to 4,500 or less. This improves the adhesive strength between the transparent sheet and the color material receiving layer to allow suppression of peel-off of the color material receiving layer from the transparent sheet due to insufficient adhesive strength. This also enables a reduction in the viscosity of a coating liquid containing inorganic particulates and polyvinyl alcohol. Therefore, the coating liquid can be easily applied to the transparent sheet, allowing the transfer material to be more effectively and efficiently produced. Furthermore, the pores in the color material receiving layer can be prevented from being filled and can be appropriately kept open, facilitating absorption of ink. Therefore, a high-quality image can be printed on the color material receiving layer.

The values of the weight-average degree of polymerization are calculated in compliance with a method described in JIS-K-6726.

One type of water-soluble resin may be used alone or two or more types of water-soluble resins may be mixed together. "Two or more types" of water-soluble resins include water-soluble resins with different characteristics such as different degrees of saponification or different degrees of weight-average degrees of polymerization.

The amount of the water-soluble resin is preferably 3.3 to 20 pts.wt. relative to 100 pts.wt. of inorganic particulates. Possible fissuring and dusting of the color material receiving layer are hindered by setting the amount of the water-soluble resin preferably to 3.3 pts.wt. or more and more preferably to 5 pts.wt.. Absorption of ink is facilitated by setting the amount of the water-soluble resin preferably to 20 pts.wt. and more preferably to 15 pts.wt..

[1-1-3] Cationic Resin

The color material receiving layer may contain a cationic resin. A cationic resin is a resin having cationic groups (for example, quarternary ammonium) in molecules.

[1-1-4] Thickness

The thickness of the color material receiving layer is not particularly limited but is preferably large in terms of ink absorption. For the printed material in the present invention, image information is viewed from the transparent sheet side, which is opposite to an ink jet printing surface. Consequently, the transparency of the color material receiving layer itself needs to be taken into account. Although depending on an ink droplet diameter for ink jet printing, the color material receiving layer preferably has a thickness of 40 $\mu$m or less in view of trade-off between ink absorption and thermocompression bonding and transfer, and swelling and contraction of the color material receiving layer at the time of absorption of moisture. More preferably, a thickness of 30 $\mu$m or less enables the transparency of the color material receiving layer to be further improved and also enhances heat conduction when the color material receiving layer is thermocompression-bonded and transferred to the image substrate. This allows enhancement of the adhesion (transfer performance) between the image substrate and the color material receiving layer. A thickness of 30 $\mu$m or less also enables a reduction in stress resulting from swelling and contraction of the color material receiving layer during moisture absorption.

Depending on the ink droplet diameter for ink jet printing, appropriate image printing may be achieved when the color material receiving layer has a thickness of 2 $\mu$m or more. More preferably, when the color material receiving layer has a thickness of 5 $\mu$m or more, ink absorption can be stably achieved, resulting in an appropriate ink absorption rate and high ink fixability. That is, the color material receiving layer preferably has a thickness of 5 to 30 $\mu$m. In the present invention, not only has a balance need to be kept between the thickness of the transparent sheet and the thickness of the color material receiving layer but the configuration of the pores also needs to be appropriately selected according to an application.

[1-2] Transparent Sheet

The transfer material 1 includes the transparent sheet 52 as depicted in Figs. 4A to 4H, and the transparent sheet 52 includes passages through which moisture in the color material receiving layer can be discharged to the outside. Specifically, as described above, the transparent sheet 52 has the pores 52A penetrating between the substrate sheet 50 and the color material receiving layer 53. When the transfer material 1 is used in which the pores 52A are not pre-formed in the transparent sheet 52 as depicted in Fig. 1B, the pores 52A are formed at least in the transparent sheet 52 of the transfer material 1 before or after any of the following steps 1 to 3.

The pores are configured to allow the transparent sheet to be made permeable to moisture or humidity. That is, the transparent sheet has the property of allowing water coming into contact with the transparent sheet to pass through the sheet in a liquid or gaseous state. Thus, in the printed material in the present invention, moisture evaporates and diffuses through the entire surface of the transparent sheet 52 to suppress possible fissuring even in water resistance tests in which the color material receiving layer 53 was allowed to absorb a large amount of moisture and then dried, as depicted in Fig. 15B.

As described above, the transparent sheet is permeable to moisture and effectively suppresses possible fissuring caused by absorption and vaporization of water into and from the color material receiving layer. After the printed material is produced, the moisture-permeable transparent sheet with the pores reaching the color material receiving layer is permeable not only to water vapor 550 but also to liquid water 551 as depicted in Fig. 15B. This promotes vaporization of moisture absorbed by the color material receiving layer through the entire surface of the transparent sheet.

[1-2-1] Size of the Pores

When the printed material is immersed in water, air present inside each of the pores in the transparent sheet forms a meniscus of water at an inlet of the pore, allowing suppression of absorption of water through the surface of the transparent sheet. To achieve this, each of the pores preferably has a size of 100 $\mu$m or less. Moreover, when a large amount of moisture is absorbed into the color material receiving layer, a meniscus of water is unlikely to be formed at the inlet of the pore on the side of the transparent sheet that contacts the color material receiving layer. Therefore, pores with a reduced diameter act as capillary tubes to transport the moisture in the color material receiving layer to the front layer of the transparent sheet via the pores in the transparent sheet, allowing promotion of vaporization of the moisture.

When the thickness of the transparent sheet is sufficiently large compared to the thickness of the color material receiving layer, setting the size of each pore in the transparent sheet to within the range from 100 to 300 μm allows permeation of a certain amount of moisture, enabling possible fissuring to be prevented. That is, the transparent sheet having a sufficient thickness compared to the thickness of the color material receiving layer has a sufficient strength and can absorb stress involved in absorption and swelling and in drying and contraction. Thus, even when the transparent sheet is not highly permeable to water or humidity, fissuring is unlikely to occur. However, when the thickness of the transparent sheet is significantly small compared to the thickness of the color material receiving layer, the transparent sheet has a relatively low strength, whereas the color material receiving layer relatively significantly contracts. Thus, the transparent sheet is likely to fissure. In this case, the transparent sheet needs to be made more permeable to water and humidity. For example, pores each of 100 μm or less are densely arranged to make the transparent sheet more permeable to water and humidity per unit area, allowing prevention of fissuring. Pores each of more than 300 μm are expected to further strictly prevent fissuring but hinder making formation of a meniscus of water at the inlet of the pore when the printed material is immersed in water. In this case, absorption of the color material receiving layer via the transparent sheet is promoted, whereas liquid contaminants and the like are likely to enter the transparent sheet. Therefore, the size of the pores needs to be selected to fall within the preferable range according to the application.

[1-2-2] Thickness

The thickness of the transparent sheet is not particularly limited. Not only are the pores in the transparent sheet effective as described above but the water resistance of the transparent sheet can also be improved by setting the thickness of the transparent sheet in connection with the thickness of the color material receiving layer. That is, as long as the thickness of the transparent sheet is sufficiently large compared to the thickness of the color material receiving layer, the transparent sheet has a sufficient strength, as described above. Consequently, the transparent sheet is unlikely to fissure even when not highly permeable to water or humidity. However, when the thickness of the transparent sheet is small compared to the thickness of the color material receiving layer, the transparent sheet has a relatively low strength and is likely to fissure and thus needs to be made more permeable to humidity and water. The water permeability and humidity permeability of the transparent sheet can be controlled based on the average diameter of the pores as described above and also based on the density of the pores. The ratio (A/B) of the thickness A of the transparent sheet to the thickness B of the color material receiving layer preferably falls within the range indicated by Expression (1A).

$$0.07 \leq (A/B) \leq 3.00 \quad (1A)$$

A high ratio (A/B) provides the transparent sheet with a strength sufficient to absorb the stress of contraction and thus makes the transparent sheet unlikely to fissure even when the transparent sheet is not highly permeable to water or humidity. Depending on the utilization purpose of the printed material, the transparent sheet, which serves as a protective layer, may need to be several tens of μm or more in thickness in view of long-term storage stability and weatherability of images or security thereof. In this case, in view of the bonding force between the image substrate of the printed material and the color material receiving layer of the transparent sheet and the bonding force between the color material receiving layer and the transparent sheet, stress is relaxed by forming pores in the transparent sheet according to the degree of absorption and swelling of the color material receiving layer containing the water-soluble resin and the degree of drying and contraction of the color material receiving layer. For example, for a thick transparent sheet, the diameter of each pore is reduced or the distribution density of the pores is reduced. On the other hand, when the ratio (A/B) is low, the thickness of the transparent sheet is small compared to the thickness of the color material receiving layer and the transparent sheet is likely to fissure. Thus, the transparent sheet 52 is made more permeable to water and humidity.

The transparent sheet is preferably 1 to 40 μm in thickness in practical terms. Setting the thickness of the transparent sheet to 5 μm or more allows the water resistance and abrasion resistance of the transparent sheet to be further enhanced. An excessively increased thickness of the transparent sheet leads to the need for high energy for heat transfer during thermocompression bonding of the transparent sheet and the color material receiving layer to the image substrate. The excessively increased thickness also hinders, during drying after immersion water resistance tests, the progress of vaporization of moisture from the color material receiving layer via the pores in the transparent sheet. Thus, the transparent sheet is desirably 40 μm or less in thickness. More preferably, when the transparent sheet has a

thickness of 20 $\mu$m or less, not only are the transparency and the protection function, which are the basic functions of the transparent sheet, provided but balance can also be easily established between the basic functions and incidental functions such as energy provided during thermocompression bonding and water permeability.

[1-2-3] Distribution Density of the Pores

The distribution density of the pores in the transparent sheet is not particularly limited but is preferably 5 to 2,000,000 per 1 cm$^2$. Setting the distribution density to 5 or more per 1 cm$^2$ allows vaporization of an approximate amount of water needed for stress dispersion, through the surface of the transparent sheet. Setting the distribution density to 2,000,000 or less allows the transparent sheet to be kept appropriately strong and transparent.

Not only the average diameter of the pores in the transparent sheet but also the distribution density of the pores allows the degree of moisture permeability to be controlled, enabling further suppression of possible fissuring. In the present inventor's examinations, fissuring occurred when the transparent sheet had no porous structure and relied only on vaporization of moisture through the ends of the transparent sheet. When pores were formed all over the surface of the transparent sheet at intervals of 5 mm, slight striped shrinks were observed and no fissure was created. When pores were formed all over the surface of the transparent sheet at intervals of 2 mm, even slight creases were not formed on the surface of the dried transparent sheet, allowing the printed material to be made resistant to water.

That is, possible fissuring was prevented when, in the configuration in which the transparent sheet with a thickness of approximately 10 $\mu$m was provided on the gap-absorbing color material receiving layer with a thickness of approximately 20 $\mu$m as a protective layer, the distribution density of the pores in the transparent sheet was set so as to form one or more pores per 4 mm$^2$. In a normal environment, the transfer material is dried in approximately 30 minutes as a result of vaporization of absorbed moisture. Thus, a moisture permeability of 5g/m$^2\cdot$h or more of the transparent sheet enables the water resistance to be further enhanced. That is, when the moisture permeability of the transparent sheet is set equal to or larger than the above-described value, stress resulting from contraction of the color material receiving layer having absorbed water is more widely dispersed, allowing possible fissuring to be more strictly prevented.

[1-2-3-1] Area of the Pores

The total pore area of the entire transparent sheet surface is not particularly limited. The ratio (C/D) of the total pore area (C) of the transparent sheet surface to the total area (D) of the color material receiving layer at the end thereof is indicative of the ratio of vaporization from the surface of the transparent sheet to vaporization from the end of the color material receiving layer. The total pore area of the surface of the transparent sheet is controllably adjusted so as to set the C/D preferably to 0.02 to 50, more preferably 0.1 to 10, and much more preferably to 0.2 to 5. When the C/D is set preferably to 0.02 or more, more preferably to 0.1 or more, and much more preferably to 0.2 or more, the rate of vaporization of moisture from the surface of the transparent sheet can be increased to suppress stress concentration due to vaporization of moisture from the end of the transparent sheet, preventing possible fissuring. When the C/D is set preferably to 50 or less, more preferably to 10 to less, and much more preferably to 5 or less, a decrease in the strength of the transparent sheet can be suppressed to enhance the abrasion resistance. A C/D of 0.02 or less increases the rate of vaporization from the end of the color material receiving layer to prevent the stress from being sufficiently dispersed, leading to the possibility of fissuring. A C/D of 50 or more may reduce the strength of the transparent sheet and thus the abrasion resistance.

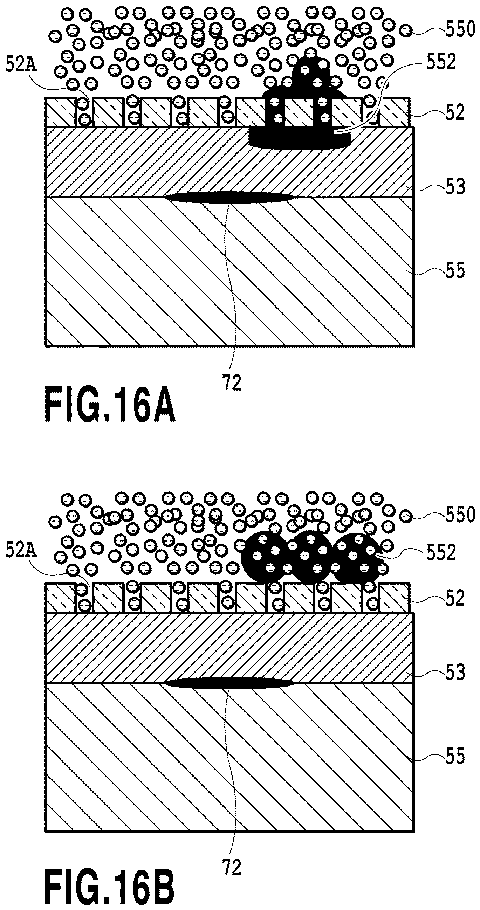

If liquid contaminants such as contaminated water attaches to the surface of the transparent sheet, contaminated water 552 may permeate the transparent sheet 52 through the pores 52A and come into contact with the color material receiving layer 53. The contaminated water 552 may then be absorbed into the color material receiving layer 53 as depicted in Fig. 16A. In this case, a part of the information printed as the inverted image 72 may be colored with the contaminated water 552 coming into contact with the background side, and the part of the information may disappear. The transparent sheet is configured on the surface of the printed material in order to protect the printed material. The protection performance can be roughly classified into four categories (1) to (4). A protection capability (1) is directed to protection from liquid contaminants such as water, chemicals, and contaminated water. A protection capability (2) is directed to protection from gaseous contaminants such as ozone and pollutant gases. A protection capability (3) is directed to protection from optical degradation caused by ultraviolet light. A protection capability (4) is directed to protection from mechanical forces such as rubbing, scratches, and dents. The protection capabilities (2), (3), and (4) are not significantly affected by the pores in the transparent sheet. However, if the pores in the transparent sheet are permeable to water, the protection capability (1), directed to protection from liquid contaminants, may be slightly degraded.

Preferably, as depicted in Fig. 16B, the pores 52A in the transparent sheet 52 are made permeable to humidity and hindered from transmitting moisture. Consequently, the transparent sheet 52 is permeable to the water vapor 550 but is hindered from transmitting liquid water, chemicals, and contaminants (contaminated water 552) to pass. Therefore, even if the contaminated water 552 attaches to the surface of the transparent sheet 52, the contaminated water 552 fails to reach the color material receiving layer 53. The printed information is protected from the liquid contaminants, and the original protection function of the transparent sheet is prevented from being impaired. Since the transparent sheet is permeable to water vapor due to the humidity permeability of the pores 52A, even during a process in which the color material receiving layer having absorbed a large amount of moisture is dried, the stress of contraction of the color material receiving layer 53 can be dispersed all over the surface of the transparent sheet 52. Thus, possible fissuring can be suppressed. As described above, when the pores in the transparent sheet are hindered from transmitting moisture, liquid contaminants such as water, chemicals, and contaminated water are prevented from entering the transparent sheet through the surface thereof, allowing the original protection performances of the transparent sheet to be maintained. The humidity permeability of the pores allows possible fissuring to be suppressed.

The humidity permeability and the moisture permeability of the transparent sheet with the pores are controlled mainly based on the average diameter of the pores. When the average diameter of the pores in the transparent sheet is set to 0.001 to 0.8000 $\mu$m, possible fissuring of the transparent sheet can be prevented without impairing the performance of protection from contamination of the color material receiving layer with liquid. Each water droplet is approximately 100 $\mu$m in size. Pores each with a diameter of approximately 10 $\mu$ are difficult to allow moisture to pass because a meniscus is normally formed at the tip of the pore due to the surface tension of water. However, depending on conditions such as the action of pressure, wettability of an inner surface of the pore, and capillary force, even pores each with a diameter of approximately 1 $\mu$m may allow moisture to pass . Thus, setting the average diameter of each pore to 0.8000 $\mu$m or less enables the pore to be sufficiently hindered from transmitting moisture and to substantially suppress permeation of liquid moisture. Furthermore, the easiness of permeation of moisture varies according to environmental conditions such as temperature, humidity, and atmospheric pressure, and viscosity and surface tension associated with impurities and soluble components contained in water, and thus, setting the average diameter of the pores to 0.2000 $\mu$m or less allows moisture to be sufficiently hindered from passing through in practical terms . In connection with the size of water molecules in water vapor, setting the average diameter of the pores to 0.0004 $\mu$m or more allows the water vapor to pass through, while setting the average diameter to 0.001 $\mu$m or more allows sufficiently practical humidity permeability to be achieved. More preferably, in view of uniformity of porous structures, setting the average diameter of the pores to 0.002 $\mu$m or more allows water vapor to stably pass through.

Therefore, setting the average diameter of the pores in the transparent sheet to 0.002 to 0.2000 $\mu$m allows the moisture permeability to be sufficiently kept low while adequately suppressing possible fissuring of the transparent sheet. This enables the performance of protection from surface contamination to be improved to an acceptable level in practical terms. However, liquid contaminants may enter the color material receiving layer through the ends thereof. However, due to a variation in the degree of permeation diffusion in the transfer material among components of contaminated water, the distance from the end of the color material receiving layer that the contamination components advance is less than several millimeters. Furthermore, in terms of mechanical constraints for conveyance accuracy of the printed material and the like, information is rarely printed at the ends of the printed material. Thus, during actual use, disappearance of information resulting from liquid contaminants is inhibited.

[1-2-4] Resin

The transparent sheet 52 in the present example contains two types of resin (resin E1 and resin E2) having different glass transition temperatures. The resin E1 and E2 will be described below in detail.

[1-2-4-1] State of the resin

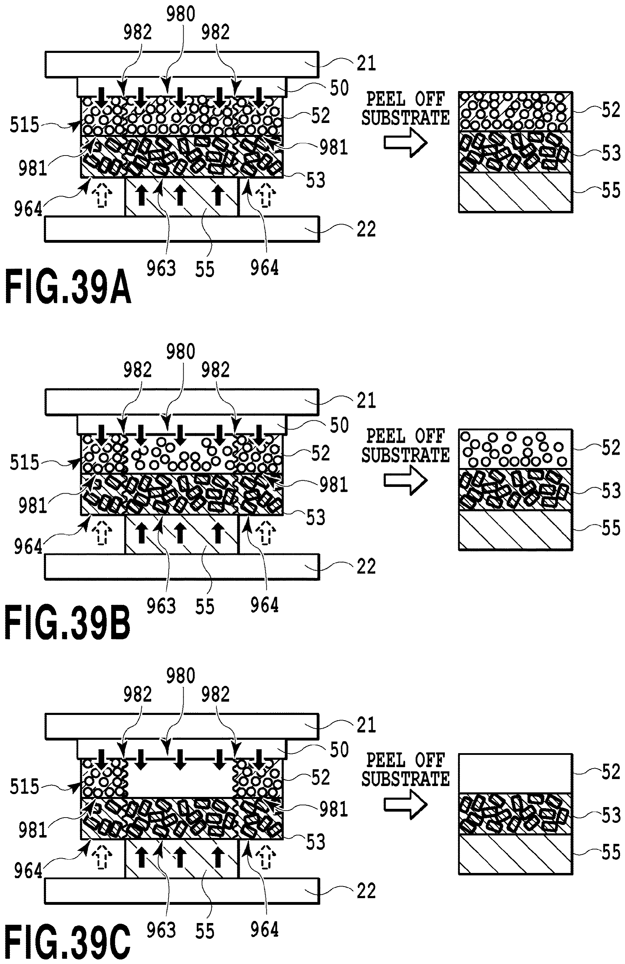

Preferably, the resin E1 is formed into a film, and at least the resin E2 remains particles. The phrase "formed into a film" for the resin means that the resin has been heated at the glass transition temperature or higher. The phrase "remaining particles" or "kept in particle form" for the resin means that the resin has not been subjected to the heating at the glass transition temperature or higher. When a drying temperature for the coated emulsion is equal to or higher than the glass transition temperature Tg1 of the resin E1 and equal to or lower than the glass transition temperature Tg2 of the resin E2, a transparent sheet can be manufactured in which the resin E1 is formed into a film, whereas least the resin E2 remains particles. In this configuration, during thermocompression bonding, a film state can be controllably varied between a portion 980 of the transparent sheet in a portion 963 in which the image substrate 55 adheres to the color material receiving layer 53 and a portion 981 of the transparent sheet in a portion 964 in which the image substrate 55 does not adhere to the color material receiving layer 53 as depicted in Fig. 39A. That is, during thermocompression bonding, heat from a heat roll is easily transmitted through the portion 980 of the transparent sheet, and thus, the emulsion E2 is partly formed into a film and partly remains particles (Fig. 39B) or the resin E2 in the transparent sheet is totally formed into a film (Fig. 39C) . At this time, the force of bonding between the emulsion E2 partly or totally formed into a film and the resin E1 previously formed into a film is strengthened, enabling an increase in the film strength of the transparent sheet. In the portion 981 of the transparent sheet, no heat is transmitted, allowing the resin E2 to remain particles. Since the film state varies between the portion 980 of the transparent sheet and the portion 981 of the transparent sheet, a crack is easy to form starting at a boundary portion 982 during a peeling step. As described above, cutoff of the transparent sheet can be improved by using two types of resin and varying the film state of the resin E2 utilizing the temperature during thermocompression bonding.

[1-2-4-2] Glass Transition Temperature of the resin

The glass transition temperature (Tg) refers to a temperature at which an amorphous solid that is as hard as crystals (a high modulus of rigidity) and exhibits low fluidity (an immeasurably high viscosity) when heated at low temperature rapidly decreases in rigidity and viscosity within a certain narrow temperature range to increase in fluidity. The glass transition temperature (Tg) is a value calculated in accordance with the Fox's Formula based on the glass transition temperature (Tg) of a homopolymer of each monomer and the mass fraction (the copolymerization rate of a mass standard) of the monomer.

In the present example, the unit of a numerical value representing the glass transition temperature is "°C" unless otherwise specified. For example, the glass transition temperature of a copolymer of three types of monomers a, b, and c is determined in accordance with Expression (9).

$$1/Tg = Wa/Tga + Wb/Tgb + Wc/Tgc \quad (9)$$

Tga, Tgb, and Tgc: the glass transition temperatures of homopolymers of the monomers a, b, and c,
W: the weight of each monomer, and
Tg: the glass transition temperature of the copolymer.

As the Tgs of the homopolymers, values described in well-known documents are adopted. Specifically, as the Tgs of the homopolymers, the technique disclosed herein uses the following values.

| | |
|---|---|
| 2-ethylhexylacrylate | -70°C |
| n-butylacrylate | -55°C |
| ethylacrylate | -22°C |
| methylacrylate | 8°C |
| methylmethacrylate | 105°C |
| isobornylacrylate | 94°C |
| isobornylmethcrylate | 180°C |
| vinyl acetate | 32°C |
| 2-hydroxyethylacrylate | -15°C |
| styrene | 100°C |
| acrylic acid | 106°C |
| methacrylate acid | 130°C |

As the Tgs of the homopolymers other than the Tgs illustrated above, numerical values described in "Polymer Handbook" (third edition, John Wiley & Sons, Inc., 1989) are used. For Tgs not described in "Polymer Handbook" (third edition, John Wiley & Sons, Inc., 1989), values obtained using a measurement method described below are used (see Japanese Patent Laid-Open No. 2007-51271).

[1-2-4-3] Resin E1

In the present example, the resin E1 is formed into a film when a transparent sheet is formed. Turning the resin E1 into a film enables an increase in the area of contact with the color material receiving layer. As a result, the bonding between the transparent sheet and the color material receiving layer is enhanced to allow the transparent sheet (protective layer) and the color material receiving layer to be prevented from being peeled off from each other during tests on tape peeling or the like.

[1-2-4-4] Tg of the Resin E1

The glass transition temperature Tg1 of the resin E1 is higher than 50°C and lower than 90°C. The Tg1 is more preferably higher than 55°C and lower than 80°C and much more preferably higher than 55°C and lower than 70°C. Setting the Tg1 higher than 50°C and more preferably higher than 55°C increases the glass transition temperature of the resin E1 to make the film portion of the transparent sheet hard and difficult to stretch. Thus, when the transparent sheet is cut off at the end thereof, the film can be prevented from being stretched and the end can be kept regular. Consequently, the transparent sheet can be appropriately cut at the end thereof. In addition, controllably adjusting the Tg1 to within the above-described range makes the resin less compatible with fat and sweat on the hand and suppresses stretching of the film. Even when brought into contact with the hand, the transparent sheet is unlikely to adhere to the hand and is restrained from being sticky. Increasing the Tg1 enhances a force exerted between the molecular chains of the resin resin to make the resin less soluble to chemicals such as alcohol. This allows the chemical resistance of the printed material to be significantly improved. When the Tg1 is set preferably to lower than 90°C, more preferably to lower than 80°C, and much more preferably to lower than 70°C, a film can be easily formed when a transparent sheet is formed, and the transparent sheet can more appropriately adhere to the color material receiving layer. The film can also be made less fragile to allow prevention of, for example, peel-off of the transparent sheet in water resistance tests. Furthermore, during an actual manufacturing process, keeping the drying temperature perfectly constant is difficult and the drying temperature varies to some degree. If the drying temperature varies, when the value Tg1 is close to the value Tg2, excessive heat may be generated when an attempt is made to turn the E1 into a film. Then, the drying temperature may exceed the Tg2, and keeping the E2 in particle may be difficult. Therefore, preferably, the Tg1 and the Tg2 satisfy a relation indicated by Expression (13) illustrated below and are different from each other by approximately 10°C. Then, even when the drying temperature varies, excessive heat is prevented from being generated, and the E1 and the E2 are likely to remain in film form and in particle form, respectively. A glass transition temperature Tg1 of 50°C or lower makes the resin compatible with the fat and sweat on the hand and is likely to make the transparent sheet sticky. Furthermore, when the transparent sheet is formed into a roll, blocking is likely to occur. A glass transition temperature Tg1 of 90°C or higher makes formation of the E1 into a film difficult and weakens the bonding between the transparent sheet and the color material receiving layer. Thus, the transparent sheet is likely to be peeled off. Moreover, the film becomes fragile, and the transparent sheet is likely to be peeled off in water resistance tests.

$$Tg2 - Tg1 \geq 10 \quad (13)$$

[1-2-4-5] Adhesion between Resin E1 and Color Material Receiving Layer

Improving affinity between the resin E1 and the water-soluble resin during thermocompression bonding, reducing the intermolecular distance between the resin E1 formed into a film and the water-soluble resin in the color material receiving layer. Thus, the resin E1 and the water-soluble resin can firmly adhere to each other due to intermolecular forces, including hydrogen bonds and Van der Waals' forces, allowing the adhesion between the transparent sheet and the color material receiving layer to be strengthened.

[1-2-4-6] Material of the Resin E1

Examples of a preferable material for the resin E1 include resins such as an acrylic-based resin, a vinyl acetate resin, a vinyl chloride resin, an ethylene/vinyl acetate copolymer resin, a polyamide resin, a polyester resin, a polyurethane resin, and a polyolefin resin, and copolymer resins thereof. Among these resins, the acrylic resin is particularly preferably used because the resin can be formed into a film at relatively low temperature, with the resultant coating film having high transparency, and with a high affinity with saponified polyvinyl alcohol to allow the adhesion to be strengthened.

The acrylic-based resin may be (meth)acrylic acid ester alone or a copolymer containing the (meth)acrylic acid ester. Specific examples of the (meth)acrylic acid ester include methyl (meth)acrylate, ethyl (meth)acrylate, isopropyl (meth)acrylate, (meth)acrylic acid-n-butyl, (meth)acrylic acid-n-hexyl, (meth)acrylic acid-n-octyl, (meth) acrylic acid-2-ethylhexyl, isononyl (meth) acrylate, and lauryl (meth) acrylate. Any of these (meth) acrylic acid esters may be used alone or in combination. Moreover, monomers that can be copolymerized with the (meth) acrylic acid esters may be additionally used through polymerization. Examples of such monomers include unsaturated carbonic acids such as (meth) acrylic acid, crotonic acid, maleic acid, fumatic acid, and itaconic acid; monomers including a hydroxy group such as hydroxylethyl (meth)acrylate, hydroxylpropyl (meth)acrylate, (meth) acrylic acid (4), and hydroxylbutyl described in Japanese Patent Laid-Open No. 2002-121515; monomers having an alkoxyl group such as methoxyethyl (meth)acrylate and ethoxyethyl (meth) acrylate; monomers having a glycidyl group such as glycidyl (meth)acrylate and arylglycidylether; monomers having a (meth)acrylonitrilenitrile group; monomers having an aromatic ring such as styrene, phenyl (meth)acrylate, and benzyl (meth)acrylate; monomers having an amide group such as (meth)acrylamide; monomers having an N-alkoxy group and monomers having an N-alkoxyalkyl group such as N-methoxymethyl (meth)acrylamide and N-methoxyethyl (meth)acrylamide; monomers having an N-alkylol group such as N-methylol (meth)acrylamide and N-butylol (meth)acrylamide; monomers having a group of halogen atoms bonded together such as vinyl chloride, vinyl bromide, allyl chloride, 2-chloroethyl (meth)acrylate, chloromethlstyrene, vilyn fluoride; and olefin-based monomers such as ethylene, propylene, and butadiene. Partial crosslinking can also be achieved utilizing reactive groups of the materials listed above.

The resin used for the present embodiment may be synthesized using a well-known technique or may be a commercially available material. The Tg of the resin used for the resin may be adjusted by varying the monomer components and the ratio of the monomer components. The resin E1 may be a single type of resin or a blend of a plurality of resins.

[1-2-4-7] Resin E2

In the present embodiment, the resin E2 remains particles when a transparent sheet is formed. Keeping the resin E2 in particle form allows the transparent sheet to be appropriately cut off at the end thereof during transfer.

[1-2-4-8] Tg of the Resin E2

The glass transition temperature Tg2 of the resin E2 is equal to or higher than 90°C and equal to or lower than 120°C. The glass transition temperature Tg2 is more preferably 95 to 115°C and much more preferably 100 to 110°C. The glass transition temperature Tg of the resin is equal to or higher than 90°C, more preferably equal to or higher than 95°C, and much more preferably equal to or higher than 100°C.

This range allows, during thermocompression bonding, the film state to be controllably varied between the portion 980 of the transparent sheet in the portion 963 in which the image substrate 55 adheres to the color material receiving layer 53 and the portion 981 of the transparent sheet in the portion 964 in which the image substrate 55 does not adhere to the color material receiving layer 53 as depicted in Fig. 39A. That is, during thermocompression bonding, heat from a heat roll is easily transmitted through the portion 980 of the transparent sheet, and thus, the resin E2 is partly formed into a film and partly remains particles (Fig. 39B) or the resin E2 in the transparent sheet is totally formed into a film (Fig. 39C) . In the portion 981 of the transparent sheet, no heat is transmitted, allowing the resin E2 to remain particles. Consequently, in the peeling step, a crack is easy to form starting at the boundary portion 982.

Moreover, the above-described range makes the resin in the resin E2 difficult to stretch and less compatible with fat and sweat on the hand, preventing the transparent sheet from being sticky. In addition, the above-described range reduces solubility to chemicals such as alcohol and enhances chemical resistance. When the glass transition temperature Tg of the resin is set equal to or lower than 120°C, more preferably equal to or lower than 115°C, and much more preferably equal to or lower than 110°C, thermal energy during thermocompression bonding is efficiently controllably reduced to allow prevention of possible thermal deformation caused by application of excessive thermal energy to the image substrate. In the present invention, the color material receiving layer can be transferred to the image substrate by setting the temperature of polyvinyl alcohol (PVA), which is the water-soluble resin in the color material receiving layer, equal to or higher than approximately 90°C, which corresponds to the glass transition temperature. Thus, when the color material receiving layer is thermocompression-bonded to the image substrate, the above-described temperature range allows the transparent sheet located closer to the heat roll to be heated to the Tg2 or higher during the process in which the color material receiving layer is heated to approximately 90°C. Thus, during transfer, the resin E2 can be formed into a film and the film can be transferred, without application of excessive thermal energy. A glass transition temperature Tg2 of lower than 90°C makes the resin compatible with the fat and sweat on the hand and is likely to make the transparent sheet sticky. Such a temperature is also likely to cause blocking. Moreover, a crack is difficult to form, and the transparent sheet is inappropriately cut off. A glass transition temperature Tg2 of higher than 120°C leads to the need for high thermal energy during thermocompression bonding and the likelihood of thermal deformation resulting from application of excessive thermal energy to the image substrate.

[1-2-4-9] Material of the Resin E2

As a polymer material contained in the resin E2, a polymer material similar to that of the resin E1 may be used. However, an acrylic-based resin or a urethane-based resin is preferably used because such a resin has a low affinity to allow the transparent sheet to be more appropriately peeled off from the substrate sheet. The urethane-based resin is particularly preferable for the resin E2. The urethane-based resin makes the transparent sheet appropriately soft and restrains the transparent sheet from being sticky. The urethane-based resin further makes the film less fragile and less soluble to chemicals. Even when immersed in a chemical such as alcohol, the film is unlikely to be subjected to cracking, peel-off, and the like. The film further offers enhanced chemical resistance. The resin E2 is preferably of a type different from the type of the resin E1. The use of different types of resins makes the resins less likely to be compatible with each other and easily allows the film and particles to remain coexisting. When the acrylic-based resin is used as the resin E1, the resin E2 is particularly preferably the urethane resin.

The urethane resin may be obtained by, for example, variously combining any of the polyol and diisocyanate compounds listed below and synthesizing the combination of the compounds through polyaddition reaction. The urethane resin is preferably, though not limited to, a polyether urethane resin resulting from synthesis of a polyether-based polyol compound and the diisocyanate compound. The polyetherurethane resin is unlikely to be hydrolyzed, and thus, serves to enhance durability including the durability of the printed material.

Any polyol compound may be used without limitation so long as the compound is diol containing two hydroxy groups or polyol containing three or more hydroxy groups . For example, any of the following may be used alone or in combination: polyether-based polyol, polyester-based polyol, polycarbonate-based polyol, acrylic-based polyol, polybutadiene-based polyol, polyolefin-based polyol, caprolactone modified polyol, polyesteramide polyol, polyurethane polyol, epoxy polyol, epoxy modified polyol, alkyd modified polyol, castor oil, and fluorine-containing polyol.

Specific examples of the polyether-based polyol include polyol obtained by using, as a starting material, a compound with at least two active hydrogen groups, for example, polyhydric alcohol such as ethylene glycol, propylen glycol, butylene glycol, tetramethylene gycol, glycerin, trimethylolpropane, pentaerythritol, sorbitol, or sucrose, an aliphaticamine compound such as ethylenediamine, an aromaticamine compound such as toluenediamine or diphenylmethane-4,4-diamine, or alkanolamine such as ethanolamine or diethanolamine, and adding alkylene oxide represented by ethylene oxide, propylene oxide, butylene oxide, or polyoxytetramethylene oxide to the starting material.

Specific examples of the polyester-based polyol include a condensation polymer of at least one selected from the group consisting of ehtylene glycol, propylene glycol, butanediolpentanediol, hexanediol, glycerin, 1,1,1-trimethylolpropane, and other low-molecular-weight polyols and at least one selected from the group consisting of glutaric acid, adipic acid, pimeric acid, suberic acid, sebacic acid, dimer acid, other low-molecular-weight aliphatic carboxylic acids and olygomer acids; and a ring-opened polymer such as propiolactone or valerolactone.

Other examples of polyol include polymer polyol; polycarbonate polyol; polybutadiene polyol; polybutadiene polyol with hydrogen addition; acrylic polyol; and low-molecular-weight polyols such as ethylene glycol, diethylene glycol, propylene glycol, dipropylene glycol, butanediol, pentanediol, and hexanediol

Any diisocyanate compound may be used without limitation. Examples of the diisocyanate compound include methylenediisocyanate, ethylenediisocyanate, isophoronediisocyanate, hexamethylenediisocyanate, 1,4-cyclohexanediisocyanate, 2,4-toluenediisocyanate, 2,6-toluenediisocyanate, 1,3-xylylenediisocyanate, 1,5-naphthalenediisocyanate, m-phenylenediisocyanate, p-phenylenediisocyanate, 3,3'-dimethyl-4,4'-diphenylmethanediisocyanate, 3, 3'-dimethylbiphenylenediisocyanate, 4,4'-biphenylenediisocyanate, dicyclohexylmethanediisocyanate, and methylenebis (4-cyclohexylisocyanate)

[1-2-4-10] Average Particle Size of the Resin E2

The average particle size of the resin E2 is not particularly limited but is preferably 1 to 200 nm, more preferably 5 to 150 nm, and much more preferably 10 to 50 nm. When the average particle size is set preferably to 1 nm or more, more preferably to 5 nm or more, and much more preferably to 10 nm or more, it is easy during thermocompression bonding to keep, in particle form, the resin E2 in the portion 980 of the transparent sheet in the portion 964 in which the image substrate does not adhere to the color material receiving layer. Therefore, a crack is easy to form at the boundary portion 980 of the transparent sheet in the portion 963 in which the image substrate 55 adheres to the color material receiving layer. Then, during the peeling step following transfer, possible burrs at the end of the transparent sheet are prevented to allow the transparent sheet to be appropriately cut off at the end thereof. In the transfer material in the present invention, since the resin E2 remains particles, the particle size of the resin E2 significantly affects the transparency of the transparent sheet. The transparent sheet can be made appropriately transparent by setting the average particle size of the resin E2 preferably to 200 nm or less, more preferably to 150 nm or lee, and much more preferably to 50 nm. When the average particle size is smaller than these values, a small crack is easy to form, allowing the transparent sheet to be appropriately cut off at the end thereof. When the average particle size of the E2 is smaller than 1 nm, the particles are excessively small, and thus, the transparent sheet is similar to a film. Then, during transfer, a crack is difficult to form, hindering the transparent sheet from being appropriately cut off. An average particle size of more than 200 nm of the E2 may reduce transparency.

[1-2-4-11] Mixture Ratio of the Resins E1 and E2

In the present invention, the ratio of the resin E1 to the resin E2 (E1/E2) preferably satisfies Expression (3) illustrated below, more preferably satisfies $5.0 \leq (E1/E2) \leq 50.0$, and much more preferably satisfies $10.0 \leq (E1/E2) \leq 35.0$. When the (E1/E2) is set to 65.0 or less, more preferably to 50.0 or less, and much more preferably to 35.0 or less, the amount of the resin E2 and thus the amount of particle components increase, allowing the resin E2 to be easily kept in particle form. Thus, a crack is easy to form in at the boundary portion of the portion 980 of the transparent sheet in the portion 963 in which the image substrate 55 adheres to the color material receiving layer. This prevents possible burrs at the end of the transparent sheet to allow the transparent sheet to be appropriately cut off.

That is, this range allows, during thermocompression bonding, the film state to be controllably varied between the portion 980 of the transparent sheet in the portion 963 in which the image substrate 55 adheres to the color material receiving layer 53 and the portion 981 of the transparent sheet in the portion 964 in which the image substrate 55 does not adhere to the color material receiving layer 53 as depicted in Fig. 39A. During thermocompression bonding, heat from the heat roll is easily transmitted through the portion 980 of the transparent sheet, and thus, the resin E2 is partly formed into a film and partly remains particles (Fig. 39B) or the resin E2 in the transparent sheet is totally formed into a film (Fig. 39C).

When the (E1/E2) is set to 3.0 or more, more preferably to 5.0 or more, and much more preferably to 10.0 or more, the amount of the E1 and thus the amount of film formation components increase to enhance the film strength. The contact area between the transparent sheet and the color material receiving layer increases to allow the adhesion between the color material receiving layer and the transparent sheet to be strengthened. In particular, the range $10.0 \leq (E1/E2) \leq 35.0$ allows both prevention of fissuring and strengthened adhesion and appropriate cutoff of the transparent sheet at the end thereof to be achieved at high level. A ratio (E1/E2) of more than 65.0 reduces the particle components to make the transparent sheet similar to a film. Then, a crack is difficult to form, hindering the transparent sheet to be appropriately cut off. A ratio (E1/E2) of less than 3.0 reduces the E1, which serves as a binder for the E2, possibly causing peel-off or dusting of the resins of the transparent sheet during formation of the color material receiving layer. This may preclude the color material receiving layer from being uniformly formed. Moreover, a reduced amount of film components weakens the adhesion between the transparent sheet and the color material receiving layer, making the transparent sheet likely to peel off.

$$3.0 \leq (E1/E2) \leq 65.0 \quad (3)$$

If the ratio (E1/E2) of the resin E1 to the resin E2 is less than 10 (the rate of the resin E2 is more than 9.1%), when an resin is used for the transparent sheet of the transfer material including the transparent sheet and the color material receiving layer and is partly formed into a film and partly kept in particle form, the transparent sheet may fail to resist contraction of the color material receiving layer while the color material receiving layer is being dried during coating of transparent sheet with the color material receiving layer. Therefore, the transparent sheet may be likely to fissure. This phenomenon is specific to a type of transfer material that contains the color material receiving layer and occurs only when an aqueous coating liquid containing the water-soluble compound and the inorganic particulates is applied onto the transparent sheet. The phenomenon does not occur in a transfer material including only a substrate and a protective layer. In particular, the transfer material preferably used for the ink jet system as in the present invention needs to absorb a large amount of ink into the color material receiving layer, leading to an increased thickness of the color material receiving layer and an increased amount of contraction of the color material receiving layer during coating and drying. Thus, fissuring is likely to occur during coating. When the resin E1 with a glass transition temperature Tg1 of higher than 50°C is used as an resin formed into a film in the transparent sheet in view of adhesion, appropriate cutoff of the transparent sheet, chemical resistance, and prevention of stickiness, the resin resin is hard and difficult to stretch and is very likely to suffer a fissuring phenomenon resulting from contraction. As described above, precisely controlling the ratio of the E1 to the E2 is important when the substrate, the color material receiving layer, and the transparent sheet are sequentially laminated, the transparent sheet includes the resins E1 and E2, the resin E1 formed into a film has a glass transition temperature Tg1 of higher than 50°C, and the resin E2 remains particles as in the present invention.

When the transparent sheet in the present embodiment is in abutting contact with the substrate sheet, materials for the transparent sheet and the substrate sheet are preferably selected such that the transparent sheet and the substrate sheet are laminated to each other so as to relatively weakly adhere to each other. Consequently, during transfer, the substrate sheet is easily peeled off from the transparent sheet, whereas the adhesion between the color material receiving layer and the image substrate can be strengthened, allowing transfer to be more appropriately achieved.

When the transfer material in the present embodiment is thermocompression-bonded to the image substrate and the substrate sheet is then peeled off, an image printed on the color material receiving layer can be viewed via the transparent sheet as an original image. When the transfer material is thermocompression-bonded to the image substrate, the transparent sheet functions as a protective layer for the image printed on the color material receiving layer.

The transparent sheet has a total light transmittance of 50% or more and preferably 90% or more as measured in compliance with JIS K7375. Therefore, the transparent sheet includes, in addition to a colorless transparent sheet, a translucent sheet and a colored transparent sheet. When dye ink is used as ink used to print an image in the color material receiving layer, the transparent sheet preferably contains a UV protection agent in order to prevent the dye from being decomposed (light degradation) by ultraviolet ray. Examples of the UV protection agent include an ultraviolet absorber such as a benzotriazole-based compound or a benzophenone compound; and an ultraviolet scattering agent such as titanium oxide or zinc oxide.

[1-2-5] Formation Method for the Pores

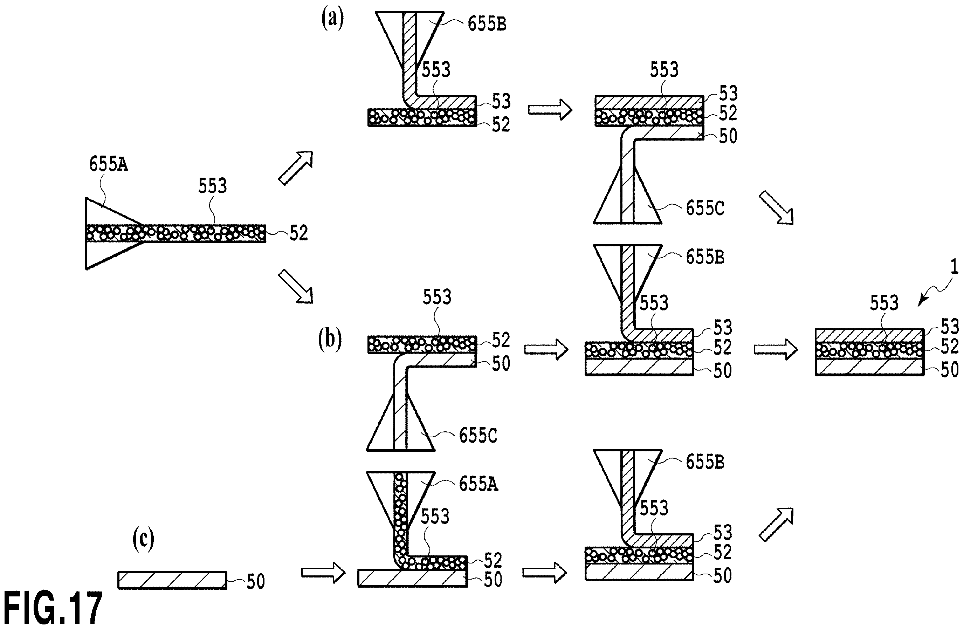

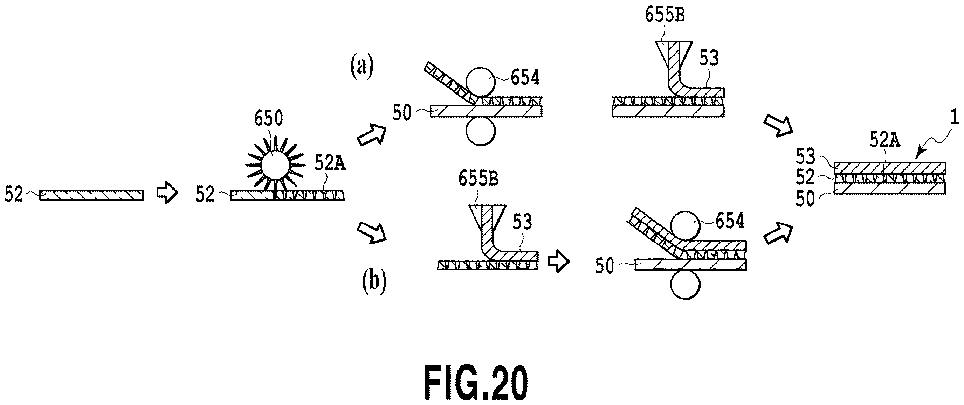

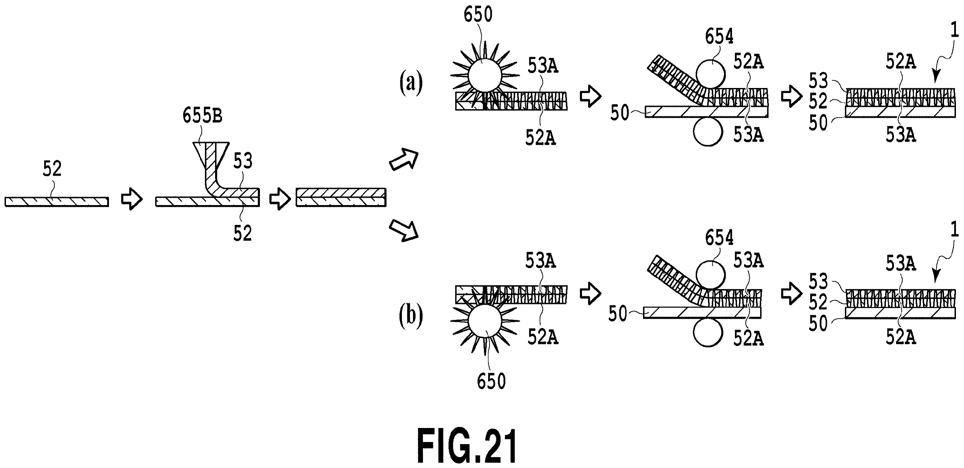

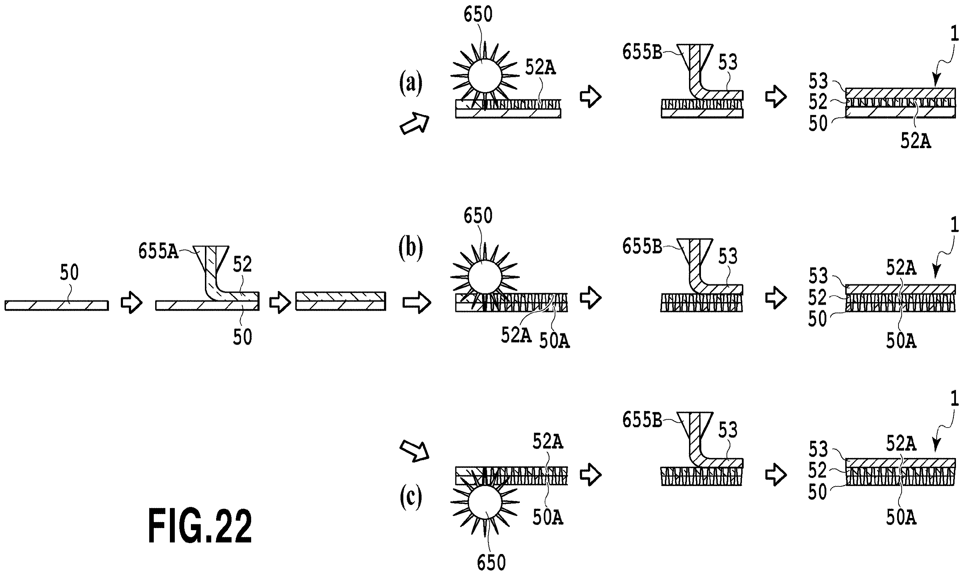

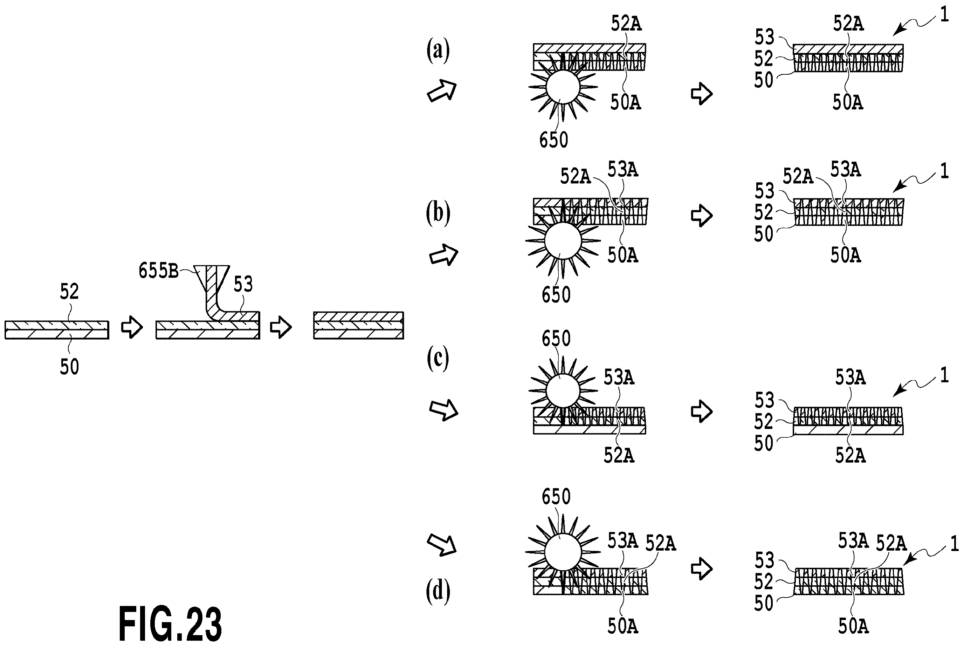

When the transparent sheet contains resin as a main component and is formed into a film on the substrate sheet, various methods may be applied to form pores in the transparent sheet. For example, during a film formation step for the transparent sheet or the subsequent step, pores with an open-cell structure may be configured as depicted in Fig. 17, Fig. 18, and Fig. 19 using components included in the component materials of the transparent sheet. As described below, in Fig. 17, Fig. 18, and Fig. 19, the pores with the open-cell structure are configured using a foaming agent, porous particles, and hollow particles. Alternatively, as depicted in Fig. 20 and Fig. 21, a transparent sheet with a porous structure may be pre-produced and adhesively laminated on the substrate sheet. This will be described below in detail. Moreover, as Fig. 22 and Fig. 23, after a transparent sheet is formed on the substrate sheet, pore formation may be executed in which desired pores are formed in the transparent sheet. This will be described below in detail. As described above, the pores in the transparent sheet may have any structure so long as the pores penetrate between the substrate sheet and the color material receiving layer. Of course, a well-known method may be used to form the pores, and the most suitable formation method may be selected according to the purpose and the application.

[1-2-6] Foaming Agent

When a foaming agent is used to form an open-cell structure in a transparent sheet, the transparent sheet is formed by mechanically stirring the coating liquid containing the resin to form and disperse a large number of fine bubbles in the coating liquid.

Specifically, as depicted in Fig. 17, the coating liquid containing the resin is stirred to disperse a large number of fine bubbles 553, and the resultant coating liquid is formed into a thin transparent sheet 52 using a die coater 655A. In a portion (a) of Fig. 17, on the transparent sheet 52, a color material receiving layer 53 is formed using a die coater 655B, and then a substrate sheet 50 is formed using a die coater 65C. In a portion (b) of Fig. 17, on the transparent sheet 52, the substrate sheet 50 is formed using the die coater 655C, and then, the color material receiving layer 53 is formed using the die coater 655B. In a portion (c) of Fig. 17, on the prepared substrate sheet 50, the transparent sheet 52 is formed using the die coater 655A, and then, the color material receiving layer 53 is formed using the die coater 655B. As a result, the transfer material 1 is manufactured which includes the transparent sheet 52 with the open-cell structure with the continuous bubbles 553 as depicted in Fig. 4F.

A method for mechanically stirring the coating liquid contained in the transparent sheet 52 is not particularly limited. Stirring may be performed using a well-known foaming machine with impellers, a stirrer such as a homomixer or a cowless dissolver utilized for emulsification, dispersion, or the like, or a continuous foaming machine. Desirably, resin is further added to the coating liquid containing the resin in order to stabilize formation of a film based on foaming. The resin may be similar to the water-soluble resin added to the color material receiving layer but is not limited to such resins. Each of such resins may be used alone or two or more of such resins may be mixed together.

For the coating liquid containing the resin and the resin as described above, a material referred to as a foam stabilizer or a foaming agent and producing a surface activating effect may be selected and blended into the coating liquid as needed, in order to enhance the stability of the bubbles. For example, particularly the foaming capability of the resin liquid and the stability of bubbles dispersed and contained in the coating liquid can be enhanced by blending of the an anionic surfactant such as a higher fatty acid, a modified higher fatty acid, alkali salt of higher fatty series, and amine salt of higher fatty series. A material for the foam stabilizer or foaming agent is not limited and may be selected in view of fluidity of the resin liquid and effectiveness and efficiency of coating operations.

The blending ratio of the foam stabilizer or the foaming agent to the resin liquid is preferably 0 to 30 wt% and more preferably 1 to 20 wt% with respect to 100 wt% solids in the resin liquid. A blending ratio of more than 30 wt% allows a large number of bubbles to be controllably reduced in size but undesirably reduces the transparency of the transparent sheet produced using the bubbles, degrading the visibility of the printed image.

For the coating liquid containing the resin and the resin, a volume ratio of the volume after foaming to the volume before foaming (hereinafter referred to as a foaming ratio) may be set in view of balance with the composition of the resin liquid. The foaming ratio is preferably more than 0.5 and 10 or less and more preferably 1.0 or more and 5 or less. The foaming ratio is a measure indicative of the rate of bubbles contained in the coating liquid of the water dispersion resin containing bubbles . A foaming ratio of 0.5 or less is not preferable because such a ratio hinders formation of an open-cell stricture adequate for providing the transparent sheet with moisture permeability or humidity permeability. A foaming ratio of 10 or more is not preferable because such a ratio reduces the thickness of the resin liquid film (wall) containing the bubbles, degrading the functions of the protective layer other than water resistance. In this case, the amount of air contained increases to enhance thermal insulation performance of the transparent sheet, possibly degrading transfer performance. Moreover, the thickness of the resin film (wall) surrounding the pores in the pore-containing resin layer decreases consistently with the concentration of solids in the water dispersion resin liquid, degrading the functions of the protective layer.

[1-2-7] Porous Particles

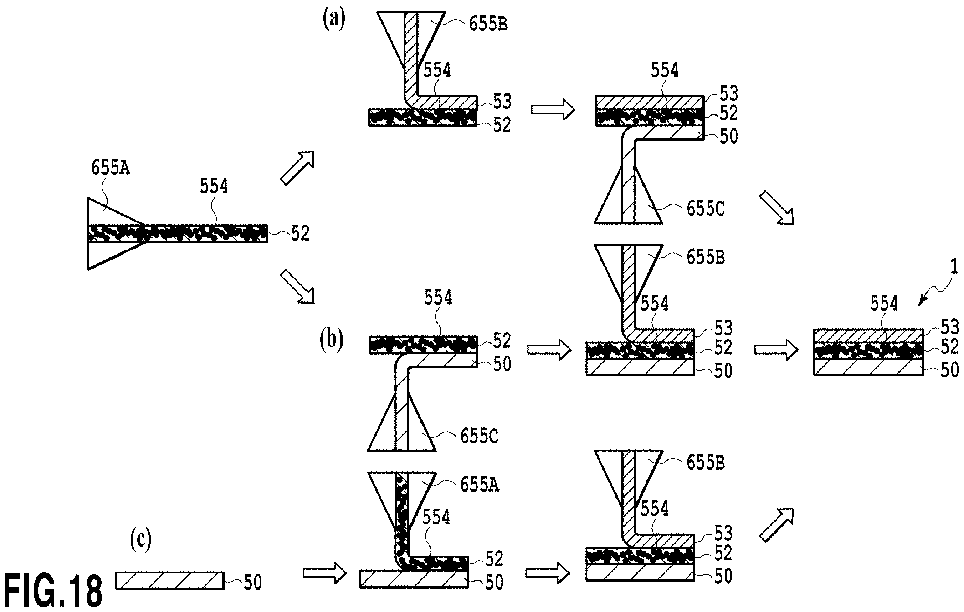

When an open-cell structure is configured in a transparent sheet using porous particles, the transparent sheet containing as a main component a resin containing the porous particles is formed on the substrate sheet, and the porous particles are coupled together to form pores penetrating between the substrate sheet and the color material receiving layer. For example, as depicted in Fig. 18, the die coater 655A is used to form a transparent sheet 52 using a resin material containing porous particles 554.

In a portion (a) of Fig. 18, on the transparent sheet 52, the color material receiving layer 53 is formed using the die coater 655B, and then, the substrate sheet 50 is formed using the die coater 655C. In a portion (b) of Fig. 18, on the transparent sheet 52, the substrate sheet 50 is formed using the die coater 655C, and then, the color material receiving layer 53 is formed using the die coater 655B. In a portion (c) of Fig. 18, on the prepared substrate sheet 50, the transparent sheet 52 is formed using the die coater 655A, and then, the color material receiving layer 53 is formed using the die coater 655B. As a result, the transfer material 1 is manufactured which includes the transparent sheet 52 with the open-cell structure in which porous portions of the porous particles 554 are continuous with one another as depicted in Fig. 4G.

A material for the porous particles is not particularly limited, and both an organic material and an inorganic material are available. However, in view of heat resistance, porous inorganic particulates are preferably used. Examples of the inorganic material include calcium carbonate, magnesium carbonate, kaolin, clay, talc, hydrotalcite, aluminum silicate, calcium silicate, magnesium silicate, diatomaceous earth, alumina, colliodal alumina, aluminum hydroxide, an alumina hydrate of boehmite structure, an alumina hydrate of pseudo-boehmite structure, lithopone (a mixture of barium sulfate and zinc sulfide), and zeolite. The density of the pores may be controlled according to the content of the porous particles. The content of the porous particles is preferably 1 to 30% with respect to the total amount of the resin. A content of 1% or less reduces the water permeability and increases the likelihood of fissuring. A content of 30% or more increases the water permeability and causes an excessive amount of liquid to be absorbed, degrading the protection performance of the transparent sheet.

[1-2-8] Hollow Resin Particles

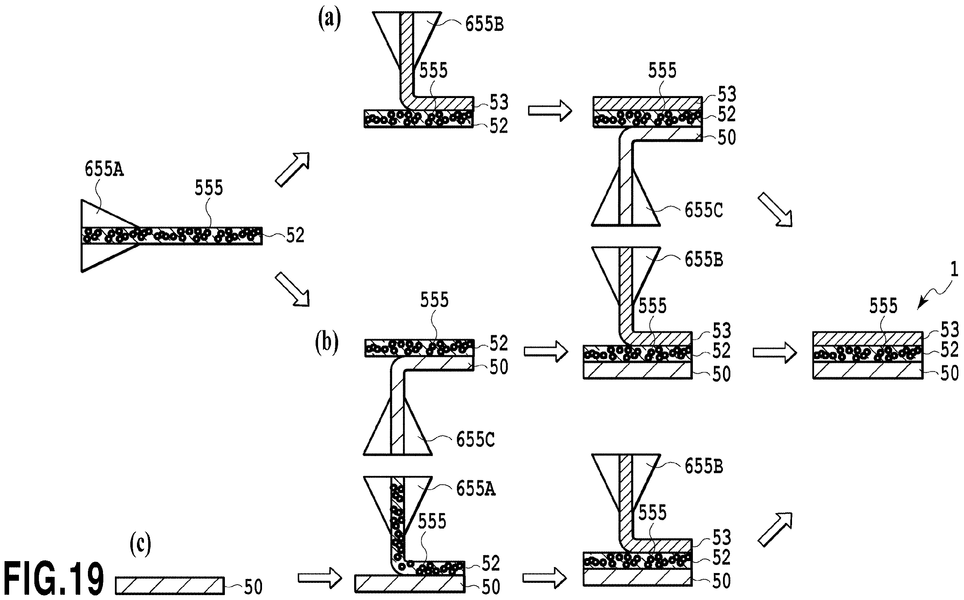

When an open-cell structure is configured in a transparent sheet using hollow particles, the transparent sheet containing as a main component a resin containing the hollow particles is formed on the substrate sheet, and the hollow particles are coupled together to form pores penetrating between the substrate sheet and the color material receiving layer. For example, as depicted in Fig. 19, the die coater 655A is used to form a transparent sheet 52 using a resin material containing hollow particles 555.

In a portion (a) of Fig. 19, on the transparent sheet 52, the color material receiving layer 53 is formed using the die coater 655B, and then, the substrate sheet 50 is formed using the die coater 655C. In a portion (b) of Fig. 19, on the transparent sheet 52, the substrate sheet 50 is formed using the die coater 655C, and then, the color material receiving layer 53 is formed using the die coater 655B. In a portion (c) of Fig. 19, on the prepared substrate sheet 50, the transparent sheet 52 is formed using the die coater 655A, and then, the color material receiving layer 53 is formed using the die coater 655B. As a result, the transfer material 1 is manufactured which includes the transparent sheet 52 with the open-cell structure in which hollow portions of the hollow particles 555 are continuous with one another as depicted in Fig. 4H.

A material for the hollow resin particles is not particularly limited, and both an organic material and an inorganic material are available. However, in view of heat resistance, hollow inorganic particulates are preferably used. Examples of the material include glass, shirasu, silica, alumina, and ceramic. The density of the pores can be controlled according to the content of the hollow particles. The content of the hollow particles is preferably 1 to 30% with respect to the total amount of the resin. A content of 1% or less reduces the water permeability and increases the likelihood of fissuring. A content of 30% or more increases the water permeability and causes an excessive amount of liquid to be absorbed, degrading the protection performance of the transparent sheet.

A material for the hollow particles is not particularly limited, and both an organic material and an inorganic material are available. The hollow inorganic particulates are excellent in heat resistance and may be glass, shirasu, silica, alumina, or ceramic. Several examples of hollow resin particulates are available which are manufactured by different methods. For example, methods (1) to (5) are available.

A foaming agent is contained in polymer particles and is subsequently allowed to foam to form hollow particles.

A volatile material such as butane is sealed in a polymer and is subsequently gasified and expanded to form hollow particles.

A polymer is dissolved and a jet such as air is blown against the resultant polymer to seal bubbles in the polymer.

A polymeric monomer component is dispersed in water to produce a water droplet resin, and the resin is polymerized to form hollow particles.

An alkali swelling material is contained inside polymer articles, an alkali liquid is allowed to permeate the polymer articles to swell the alkali swelling material to form hollow particles.

When hollow resin particles are used to form pores through which the color material receiving layer communicates with the outside air, in the substrate sheet and the transparent sheet, the pores need to have an open-cell structure. Each of the hollow particles used preferably have fine holes in a shell thereof. Of the methods (1) to (5), the method (4) or (5) is preferable for manufacturing such hollow particles. The hollow particles manufactured using the methods (1) to (3) each have no fine holes in the shell thereof. When contained in the transparent sheet, the hollow particles are unlikely to discharge water out from the system. The density of the pores can be controlled according to the content of the hollow particles. The content of the hollow particles is preferably 1 to 30% with respect to the total amount of the resin. A content of 1% or less reduces the water permeability and increases the likelihood of fissuring. A content of 30% or more increases the amount of air contained to enhance thermal insulation performance of the substrate sheet, possibly degrading transfer performance.

[1-2-9] Stretching

As a transparent sheet, a film pre-formed to have a porous structure may be used. Stretching may be executed on the film to form pores in the film. For example, pores 521 may be formed by using a stretching apparatus 656 to stretch a film used as a raw material for the transparent sheet 52.

The film for the transparent sheet 52 may be a waterproof humidity-permeable film produced compounding an ePTFE film resulting from stretching of polytetrafluoroethylene (PTFE) with a polyurethane polymer. In this case, 1,400 million fine holes are formed per 1 square centimeter to allow both waterproofness and humidity permeability to be achieved. The film has a water pressure resistance of 45,000 mm or more and a humidity permeability of 13500 g/m$^2$/24hrs as measured in accordance with the JIS L1099B-2. Such a film may be used as a single layer or may be combined with other water-permeable films to form multiple layers. The film may be laminated to the substrate sheet as a transparent sheet. That is, any transparent film in which a porous structure is configured to penetrate the film may be used as a transparent sheet for the transfer material. The film may be a porous film formed by stretching a film that contains polyethylene as a main component and in which calcium carbonate is dispersed or a porous film formed by stretching a film containing polyolefin as a main component and containing no inorganic filler. Such a film also provides a stable porous structure and may thus be used as a water-permeable transparent sheet or a waterproof, humidity-permeable transparent sheet.

[1-2-10] Crazing

A processing method for configuring a porous structure in the resin film is not limited to the above-described stretching but may be crazing.

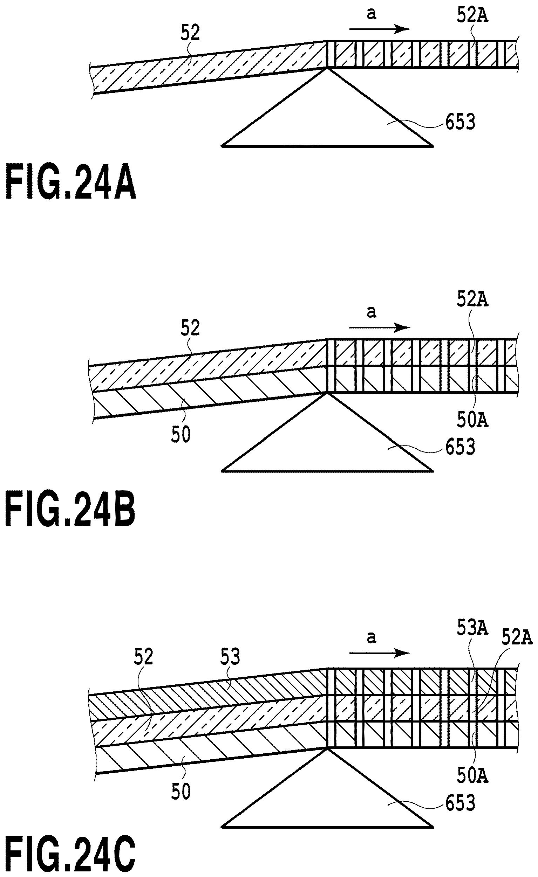

For example, a porous structure may be configured in the resin film using a crazing apparatus. That is, a crazing unit 653 bends a transparent polyvinylidene fluoride film, in other words, a film that is a raw material for the transparent sheet 52, through a predetermined angle 652 substantially parallel to a molecule orientation direction of the film, and stretches the film in the direction of arrow (a) with pressure applied to an upper surface and a lower surface of the film. Thus, as depicted in Fig. 24A, striped crazes that are fine, continuous fissure-like patterns are formed in the film, which is a raw material for the transparent sheet 52, substantially parallel to the molecule orientation direction. The crazes form the pores 52A. As depicted in Fig. 24B, when the substrate sheet 50 is joined to the film, which is a raw material for the transparent sheet 52, before the resultant structure is subjected to crazing, pores 52A and 40A are formed. As depicted in Fig. 24C, when the substrate sheet 50 and the color material receiving layer 53 are joined to the film, which is a raw material for the transparent sheet 52, before the resultant structure is subjected to crazing, pores 52A, 40A, and 53A are formed.

The crazes are classified into surface crazes appearing on the surface of the resin film and internal crazes generated inside the resin film. The crazes may be coupled together to form, in the transparent sheet 52, pores 52A penetrating the transparent sheet 52. In other words, in the crazing, molecule bundles (fibrils) and holds (voids) may be formed in the film for the transparent sheet 52 and partly coupled together to form pores 52A penetrating the film such that the film as a whole provides a sponge structure. The film with the pores 52A formed therein may be used as the water-permeable transparent sheet 52 or the waterproof, humidity-permeable transparent sheet 52. The crazes may be lost by relaxation of stress resulting from thermal treatment or the like. However, the crazes reappear when the film is stretched again, and thus, the porous structure in the transparent sheet 52 can be adjusted by laminating the transparent sheet 52 to the substrate sheet 50 while applying appropriate tension to the crazed transparent sheet 52. The size of each of the pores 52A can be adjusted based on, for example, a force exerted to draw the film during crazing and pressures applied to the upper surface and lower surface of the film. The porous structure can be configured by crazing a polyvinylidene fluoride film, and for example, a polystyrene, polyethylene, polypropylene, polyester, or polyamide film may also be used.

«Pore Formation Processing after Formation of the Transparent Sheet»

[1-2-11] Piercing

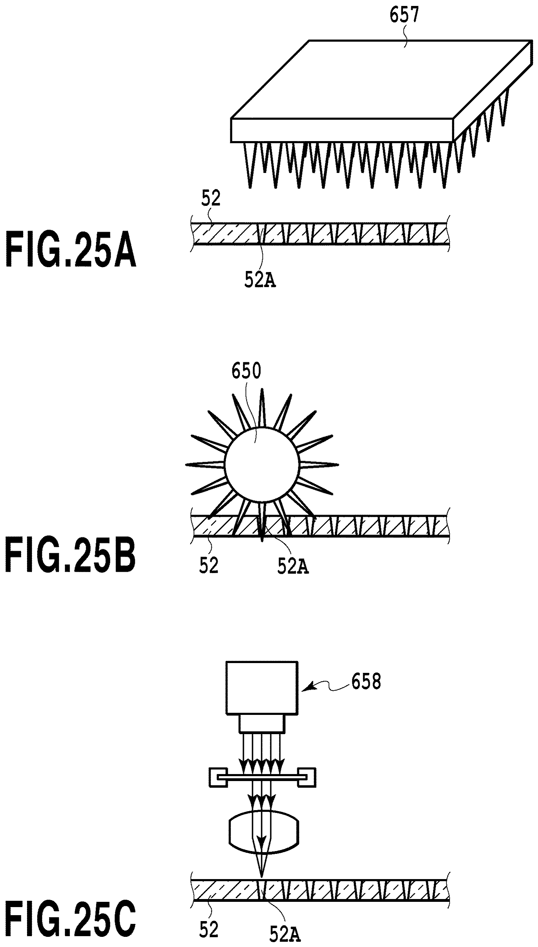

When the transparent sheet 52 has no porous structure as in Fig. 1B, the pores 52A may be formed in the transparent sheet 52 using various piercing processes. Examples of the piercing process may include mechanical piercing using needles 657 as depicted in Fig. 25A, a spur 650 as depicted in Fig. 25B or a tooth form, or laser processing using a laser processing apparatus 658 as depicted in Fig. 25C.

After the transparent sheet 52 alone is pierced as depicted in Fig. 20, the substrate sheet 50 and the color material receiving layer 53 may be laminated to the transparent sheet 52 as depicted a portion (a) or a portion (b) of Fig. 20. Alternatively, as depicted in a portion (a) or a portion (b) of Fig. 21, after the transparent sheet 52 and the color material receiving layer 53 are laminated to each other, the laminate may be pierced from the transparent sheet 52 side or from the color material receiving layer 53 side, and then, the substrate sheet 50 may be laminated to the transparent sheet 52. Alternatively, after the transparent sheet 52 and the substrate sheet 50 are laminated to each other as depicted in Fig. 22, the laminate may be pierced as depicted in a portion (a), a portion (b), or a portion (c) of Fig. 22, and then, the color material receiving layer 53 may be laminated to the transparent sheet 52. In the portion (a) of Fig. 22, the transparent sheet 52 is pierced. In the portion (b) of Fig. 22, the transparent sheet 52 and the substrate sheet 50 are pierced from the transparent sheet 52 side. In the portion (c) of Fig. 22, the transparent sheet 52 and the substrate sheet 50 are pierced from the substrate sheet 50 side. Alternatively, after the transparent sheet 52, the substrate sheet 50, and the color material receiving layer 53 are laminated to one another as depicted in Fig. 23, the laminate may be pierced as depicted in a portion (a), a portion (b), a portion (c), or a portion (d) of Fig. 23. In the portion (a) of Fig. 23, the transparent sheet 52 and the substrate sheet 50 are pierced from the substrate sheet 50 side. In the portion (b) of Fig. 23, the transparent sheet 52, the substrate sheet 50, and the color material receiving layer 53 are pierced from the substrate sheet 50 side. In the portion (c) of Fig. 23, the transparent sheet 52 and the color material receiving layer 53 are pierced from the color material receiving layer 53 side. In the portion (d) of Fig. 23, the transparent sheet 52, the substrate sheet 50, and the color material receiving layer 53 are pierced from the color material receiving layer 53 side.

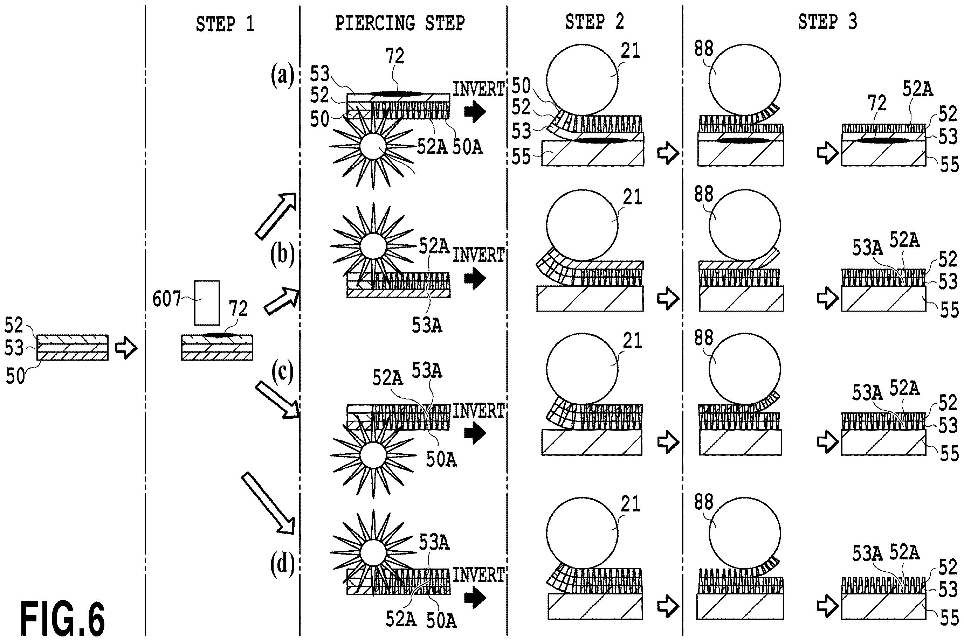

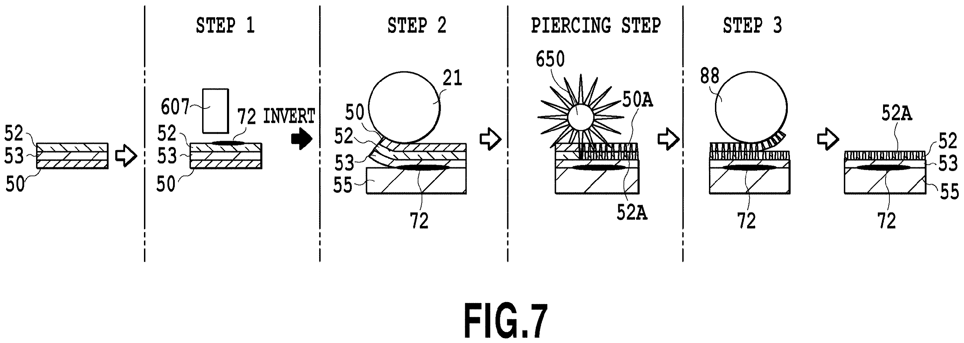

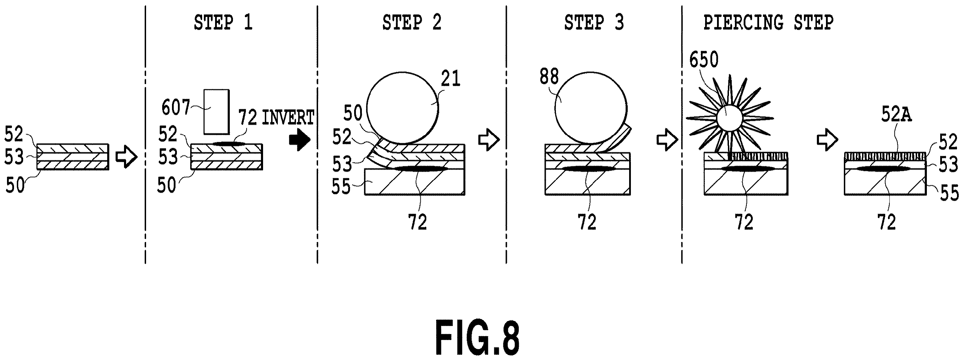

In the example in Fig. 23, the transfer material 1 is pierced on which the inverted image 72 has not been formed yet. However, as depicted in Figs. 6 to 8, the piercing may be performed after the inverted image 72 is printed on the transfer material 1 (step 1). In the case in Fig. 6, after the transfer material 1 with the inverted image 72 printed thereon is pierced (piercing step), the color material receiving layer 53 is transferred to the image substrate 55 of the printed material (step 2), and then, the substrate sheet 50 is peeled off (step 3), as depicted in a portion (a), a portion (b), a portion (c), and a portion (d) of Fig. 6. In the case in Fig. 7, after the color material receiving layer 53 is transferred to the image substrate 55 (step 2), the transfer material is pierced (piercing step), and then, the substrate sheet 50 is peeled off (step 3). In the case in Fig. 8, after the color material receiving layer 53 is transferred to the image substrate 55 (step 2) and the substrate sheet 50 is peeled off (step 3), the transfer material is pierced (piercing step).

As described above, preferably, at least before the printed material is actually used, the pores 52A have been formed which penetrate the transparent sheet 52 covering the surface of the printed material.

[1-2-12] Piercing (Needles)

An easy method for forming a porous structure in the transparent sheet is to press needles or a tooth form with pointed tips against the transparent sheet to form pores penetrating the transparent sheet as depicted in Figs. 25A and 25B.

When the transparent sheet is a thin resin film, the piercing can be achieved by pressing the transparent sheet at a low pressure. When the transparent sheet is a slightly thick resin film, a more stable porous structure can be obtained by mechanically piercing the transparent sheet with the resin film heated even before and after the glass transition temperature is reached. A suitable porous structure can be continuously formed with the transparent sheet so as to be efficiently pierced by using a needle row, a needle roller, a spur row, a tooth form, or a tooth form roll that is formed of metal or ceramics and that is machined to have pointed tips. Moreover, the pointed tips are subjected to diamond processing so as to be made more durable. The piercing of the transparent sheet may be executed not only on the transparent sheet alone but also on the transparent sheet laminated onto the substrate sheet, the transparent sheet laminated to the color material receiving layer, or the transparent sheet to which the substrate sheet and the color material receiving layer are sequentially laminated, as described above. When the transparent sheet is exposed, the transparent sheet is preferably mechanically pierced from the exposed surface side thereof. When the transparent sheet is sandwiched between other layers such as the substrate sheet and the color material receiving layer, the transparent sheet may be mechanically pierced via the other layers so as to be penetrated with the mechanical strengths of the other layers such as the thicknesses and materials of thereof taken into account. In this case, fine pores are also formed in the substrate sheet, the color material receiving layer, and the like. However, the diameter and density of the pores may be adjusted so as to avoid affecting the conveyance of the transfer material and ink jet printing characteristics.

As described above, the transparent sheet can be pierced after the color material receiving layer and the transparent sheet are transferred to the image substrate. Since the transparent sheet is preferably mechanically pierced while being heated as described above, the transparent sheet is preferably mechanically pierced immediately after peel-off of the substrate sheet is executed which follows thermocompression bonding of the transfer material to the image substrate. When the piercing process is executed using a spur row with pointed tips, the spur row can be provided with a function to convey and discharge the image substrate. Similarly, when the piercing process is executed using a spur row or a needle roller during a film formation and lamination step for the transparent sheet and the transparent sheet, the spur row or the needle roller can also be provided with a function to convey films. As described above, the printed material may be mechanically provided with a porous structure that penetrates the transparent sheet. A method and an apparatus configuration for this purpose are not particularly limited.

[1-2-13] Piercing (Laser)

As depicted in Fig. 25C, the laser processing apparatus 658 may be used as an easy processing method for applying a porous structure to the transparent sheet.

When the transparent sheet is a thin resin film, an appropriate, stable porous structure can be efficiently applied by using a well-known laser processing apparatus. For example, Japanese Patent No. 2706498 describes a laser processing method involving sensing the level of laser light reflected from a surface of a workpiece and shifting to processing of a next pore. This processing method may be applied as a method for applying a porous structure to the transparent sheet. The pore diameter of each of the pores formed in the transparent sheet can be set by selection of a laser light source and adjustment of a laser system such as a condensing lens for laser light. The intervals between the pores can be set using an optical scanning system including a reflecting mirror. Like the mechanical piercing, the piercing process based on laser processing may be executed not only on the transparent sheet alone but also on the transparent sheet laminated onto the substrate sheet or to the color material receiving layer or a transparent sheet with the substrate sheet, the transparent sheet, and the color material receiving layer sequentially laminated. When the transparent sheet is exposed, the exposed surface of the transparent sheet is preferably irradiated with laser light for piercing. When the transparent sheet is sandwiched between other sheets such as the substrate sheet and the color material receiving layer, the transparent sheet can be pierced by irradiating the other layers with laser light with optical characteristics of the other layers such as the thicknesses and materials thereof taken into account. In this case, pores may also be formed in the substrate sheet, the color material receiving layer, and the like. However, the diameter and density of the pores may be adjusted so as to avoid affecting the conveyance of the transfer material and ink jet printing characteristics. Furthermore, a reflecting film for laser light may be formed as needed on a surface of another layer opposite to the side irradiated with laser light, to allow the transparent sheet to efficiently absorb the laser light. Moreover, particulates that are likely to absorb laser light may be dispersed through the resin in the transparent sheet to enhance the capability of piercing based on laser light.

[1-3] Substrate Sheet

The transparent sheet in the present embodiment includes the substrate sheet 50 as in the case of the transfer material 1 in Fig. 1B. The substrate sheet (also referred to as a "peel-off liner" or a "separator") is a sheet member serving as a substrate for a releasable layer described below or the color material receiving layer.

The material for the substrate sheet may be a resin film or the like. For example, as the substrate sheet, a resin film utilized as a substrate film for a conventional thermal transfer sheet may be utilized without any change.

The material contained in the substrate sheet may be, for example, a resin film formed of resin such as polyester (PET or the like), nylon (aliphatic polyamide), polyimide, cellulose acetate, cellophane, polyethylene, polypropylene, polycarbonate, polyvinyl alcohol, polyvinyl chloride, polyvinylidene chloride, polystyrene, chlorinated rubber, fluorine resin, or ionomer. Among these resin films, a PET film that is excellent in heat resistance is preferable. For the resin film, one type of resin film may be used alone or two or more types of resin films may be compounded with or laminated to one another.

The thickness of the substrate sheet may be determined as needed in view of material strength and the like and is not particularly limited. However, the substrate sheet is preferably 5 to 200 $\mu$m in thickness. With the thickness of the substrate sheet set preferably to 5 $\mu$m or more and more preferably to 10 $\mu$m or more, when the color material receiving layer is laminated to the substrate sheet, the resultant laminate can be prevented from being curled. When the transfer material is rolled, the thickness of the transfer material is preferably set to 5 μm or more to allow the transfer material to be more efficiently and effectively conveyed on the manufacturing apparatus. When the transfer material is in the form of a cut sheet, the thickness of the transfer material is preferably set to 30 μm or more to prevent the cut sheet from being curled.

When the thickness of the substrate sheet is set to 200 μm or less, preferably to 60 μm or less, and more preferably to 50 μm or less, heat transfer can be appropriately achieved when the transfer material is thermocompression-bonded to the image substrate.

[1-4] Releasable Layer

The transfer material may include a releasable layer 51 similarly to the transfer material 1 in Fig. 1C. The releasable layer 51 is a layer of a composite containing a releasing agent and is provided between the substrate sheet 50 and the transparent sheet 52. Provision of the releasable layer 51 allows the substrate sheet 50 to be easily peeled off from the transparent sheet 52.

The type of the releasing agent is not particularly limited, and a preferred material is excellent in releasability and is not easily dissolved by heat generated by a heat roller or a thermal ink jet print head. For example, a silicone-based material such as silicone wax represented by waxes or silicone resin and a fluorine-based material such as fluorine resin are preferable because these materials are excellent in releasability.

The thickness of the releasable layer may be determined as needed in view of releasability and the like and is not particularly limited. However, the thickness of the releasable layer is preferably 0.1 to 10 μm in a dry state. When the thickness of the releasable layer is set preferably to 0.1 μm or more and more preferably 1 μm, the substrate sheet and the transparent sheet can be restrained from being fused together. When the thickness of the releasable layer is set preferably to 10 μm or less and more preferably to 5 μm or less, heat transfer can be appropriately achieved when the transfer material is thermocompression-bonded to the image substrate.

If the surface of the transparent sheet is matted, the releasable layer preferably contains various types of particles or a surface of the releasable layer that is in abutting contact with the transparent sheet is preferably matted. Matting has the advantage of allowing glossiness of the transparent sheet to be appropriately controlled.

[1-5] Laminate Structure

The transfer material is basically a laminate structure in which the substrate sheet 50, the transparent sheet 52, and the color material receiving layer 53 are sequentially laminated, similarly to the transfer material 1 depicted in Fig. 1B and Figs. 4A to 4H. The phrase "the substrate sheet, the transparent sheet, and the color material receiving layer are sequentially laminated" means that the substrate sheet, the transparent sheet, and the color material receiving layer are laminated in this order regardless of whether any other layer is interposed between the substrate sheet and the transparent sheet and the color material receiving layer. In the present invention, the anchor layer 59 or the hologram layer 58 may be provided between the transparent sheet 52 and the color material receiving layer 53. Thus, a structure in which the anchor layer 59 or the hologram layer 58 is present between the transparent sheet 52 and the color material receiving layer 53, like the transfer material 1 in Fig. 1C, is also included in the laminate structure in which "the substrate sheet, the transparent sheet, and the color material receiving layer are sequentially laminated".

The transfer material is preferably a laminate structure in which the substrate sheet 50, the transparent sheet 52, and the color material receiving layer 53 are in abutting contact with one another, like the transfer material 1 depicted in Fig. 1B and Figs. 4A to 4H. That is, in a preferred structure, no other layer (and no sheet) is interposed between the substrate sheet 50 and the transparent sheet 52 or between the transparent sheet 52 and the color material receiving layer 53. This is because strict thickness limitation is imposed on credit cards and the like, which are target printed materials, so that the printed material is desirably thinned by reducing the number of laminated layers and sheets.

When the transfer material 1 includes the releasable layer 51, as in the case of Fig. 1C, the transfer material is preferably a laminate structure in which the color material receiving layer 53, the transparent sheet 52, the releasable layer 51, and the substrate sheet 50 are sequentially laminated.

[1-6] Manufacturing Method

For the transfer material, during or after the film formation step for the transparent sheet, a material contained, as a component, in the component materials of the transparent sheet can form pores of an open-cell structure (bubbles (Fig. 17), porous particles (Fig. 18), and hollow particles (Fig. 19)), as described above. Pores of an open-cell structure can be configured by piercing (Fig. 20 and Fig. 21). The transfer material may be manufactured by laminating (Fig. 20 and Fig. 21) or laminating bonding the transparent sheet as described above to the substrate sheet, and coating a coating liquid for forming the color material receiving layer on the transparent sheet. Alternatively, the transfer material may be manufactured by forming a transparent sheet on the substrate sheet, executing desired pore processing on the transparent sheet using another means, and then coating a coating liquid for the color material receiving layer on the transparent sheet. Alternatively, the transfer material may be manufactured by coating a coating liquid for the color material receiving layer on the laminate in which the substrate sheet and the transparent sheet are sequentially laminated, and executing desired pore processing on the transparent sheet using another means (Fig. 22 and Fig. 23). Alternatively, after a coating liquid for forming the color material receiving layer is applied to the laminate in which the substrate sheet and the transparent sheet are sequentially laminated, an image may be printed on the color material receiving layer, and then, desired pore processing may be executed on the transparent sheet using another means (Fig. 22 and Fig. 23). In the description below, matters already described in the section of the transfer material and the like are omitted, and only matters specific to the manufacturing method will be described.

[1-6-1] Transparent Sheet

The transparent sheet may be pre-subjected to surface modification. Execution of surface modification that roughens the surface of the transparent sheet may allow enhancement of the wettability of the transparent sheet and thus allow the adhesion between the color material receiving layer to be strengthened. A method for surface modification is not particularly limited. Examples of the method for surface modification include pre-execution of corona discharge or plasma discharge on the surface of the transparent sheet and coating with an organic solvent such as IPA or acetone on the surface of the transparent sheet. Such surface treatment allows strengthening of the binding between the color material receiving layer and the transparent sheet to increase the strength, preventing peel-off of the color material receiving layer from the transparent sheet.

The transparent sheet may be used in a laminate form including other layers or sheets. For example, a laminate sheet is preferably used in which the anchor layer, the transparent sheet, the releasable layer that is a composition containing a releasing agent, and the substrate sheet are sequentially laminated.

The transparent sheet may be formed by coating two types of resin solutions or a coating liquid containing the resin solutions containing the foaming material, the hollow particles, and the porous particles on the transparent sheet by roll coating, rod bar coating, spray coating, air knife coating, or slot die coating and then drying the coating liquid. In this case, the drying temperature after the coating is preferably equal to or higher than the Tg of the resin E1 and lower than the Tg of the resin E2. Producing a transparent sheet at this temperature enables a transparent sheet in which one of the resins is formed into a film, whereas the other remains particles. When the resins are heated and dried at temperatures equal to or higher than the Tg2 during formation of a transparent sheet, both E1 and E2 are formed into films, and during a peeling step, a crack is difficult to form, hindering the adequate cutoff of the color material receiving layer at the end thereof, peel-off of the transparent sheet from the substrate sheet, and prevention of stickiness. When the resin E1 and E2 are heated at a temperature lower than the Tg1 during formation of a transparent sheet, both the emulsions E1 and E2 remain particles, the emulsions are difficult to be formed into a film. Even when successfully formed into a film, the film has reduced smoothness. This prevents the transparent sheet from adequately adhering to the color material receiving layer. Furthermore, the strength of the transparent sheet decreases significantly, and when immersed in a chemical or the like, the transparent sheet is likely to peel off. A higher drying temperature during formation of a transparent sheet enables an increase in coating speed. Consequently, in view of productivity, the drying temperature during formation of a transparent sheet is as high as possible within the above-described range. Furthermore, the transparent sheet may be formed by stretching the above-described material contained in the transparent sheet. During the process of forming a transparent sheet, pores are preferably formed using the method described in [1-1-2] Formation Method for Pores.

The releasable layer can be formed by coating a coating liquid containing the resin or wax for forming the releasable layer on the resin film or the like forming the substrate sheet and then drying the coating liquid. A coating method may be a well-known coating method such as gravure printing, screen printing, or reverse scroll coating using a gravure plate.

[1-6-2] Coating Liquid

The color material receiving layer is formed by mixing at least the water-soluble resin with an appropriate medium to prepare a coating liquid, applying the coating liquid to the surface of the transparent sheet, and drying the coating liquid. When the color material receiving layer is of a gap absorbing type, the coating liquid is prepared by mixing at least the water-soluble resin, the inorganic particulates, and the cationic resin with the appropriate medium.

As the medium for the coating liquid, an aqueous medium is preferably used. Examples of the aqueous medium include water and a mixed solvent of water and a water-soluble organic solvent. Examples of the water-soluble organic solvent include

alcohols such as methanol, ethanol, and propanol;
lower alkyl ethers of polyalcohols such as ethylene glycol monomethyl ether and ethylene glycol dimethyl ether;
ketones such as acetone and methylethyl ketone; and
ethers such as tetrahydrofuran.

The coating liquid may contain various additives so long as nothing inhibits the effects of the present invention. When dye ink is used as the ink with which the inversed image is printed, the ink preferably contains a dye fixative. The dye fixative bonds to an anionic group in each dye molecule to form salt to make the dye insoluble to water, allowing prevention of possible migration.

Other examples of the additive include a surfactant, a pigment dispersant, a thickener, a defoamer, an ink fixative, a dot regulator, a colorant, fluorescent whitening agent, an antioxidant, an ultraviolet absorber, a preservative, and a pH regulator.

The concentration of the inorganic particulates in the coating liquid may be determined as needed with coatability with the coating liquid and the like taken into account and is not particularly limited. However, the weight percentage of the inorganic particulates in the total coating liquid is preferably 10 to 30 wt%.

[1-6-3] Coating

Formation of a color material receiving layer is performed, for example, by applying the coating liquid to the surface of the transparent sheet forming the laminate of the substrate sheet and the transparent sheet. After the coating, the coating liquid is dried as needed. Consequently, as depicted in Fig. 1B, the transfer material 1 can be obtained which has a laminate structure in which the substrate sheet 50, the transparent sheet 52, and the color material receiving layer 53 are sequentially laminated.

When a laminate sheet is used in which the transparent sheet, the releasable layer, and the substrate sheet are sequentially laminated, the coating liquid may be applied to the surface of the transparent sheet included in the laminate sheet. Consequently, as depicted in Fig. 1C, the transfer material 1 is obtained which has a laminate structure in which the color material receiving layer 53, , the transparent sheet 52, the releasable layer 51, and the substrate sheet 50 are sequentially laminated.

A well-known coating method may be used. Examples of the well-known coating method include blade coating, air knife coating, curtain coating, slot die coating, bar coating, gravue coating, and roll coating.

The amount of coating liquid applied is preferably 10 to 40 $g/m^2$ in terms of solid content. When the amount of coating liquid applied is set preferably to 10 $g/m^2$ or more and more preferably to 15 $g/m^2$ or more, the color material receiving layer can be formed which effectively and efficiently absorbs moisture in the ink. Consequently, flowing of the ink in the printed inverted and bleeding of the inverted image can be restrained. When the amount of coating liquid applied is set preferably to 40 $g/m^2$ or less and more preferably to 20 $g/m^2$ or less, the transfer material is hindered from being curled when the coating layer is dried. A reduced thickness of the color material receiving layer enables a reduction in the thickness of the final printed material. The Japanese Industrial Standards (JIS-X-6305) strictly specify the thickness of plastic cards such as credit cards, and thus, setting the above-described amount of coating is effective when the image substrate is a plastic card. When the coating with the coating liquid for the color material receiving layer involves a drying step, the drying temperature needs to be lower than the Tg2 of the resin E2. The drying step during formation of the transparent sheet allows the resin E1 to be formed into a film while keeping the resin E2 in particle form before the coating liquid for the color material receiving layer is applied. When the drying temperature is equal to or higher than Tg2 during formation of the color material receiving layer, the resinE2 is formed into a film, and both E1 and E2 are formed into films throughout the transparent sheet. Then, when the transfer material is transferred, a crack is difficult to form, preventing the color material receiving layer from being appropriately cut off at the end thereof.

[1-7] Image

In the transfer material, an image is printed on the color material receiving layer. In the color material receiving layer 53, the inverted image 72 is preferably printed which appears as a mirror image as viewed from the color material receiving layer 53 and as a normal image as viewed from the transparent sheet 52. The inverted image 72 is printed on the surface of the color material receiving layer 53 to which the transparent sheet 52 has not been laminated. Compared to the conventional thermal transfer system, the ink jet printing system allows printed materials to be efficiently produced and enhances information security, enabling a reduction in printing costs.

The image printed on the transfer material may be formed with dye ink or pigment ink. However, the image is preferably formed with pigment ink. Forming an inverted image with pigment ink hinders the moisture and solvent in the ink from remaining on the surface of the color material receiving layer, facilitating drying. This allows effective suppression of inappropriate adhesion between the image substrate and the transfer material (specifically, the color material receiving layer) resulting from the moisture or solvent and of migration (movement of the ink). Forming an inverted image with pigment ink also enhances the light resistance of the inverted image.

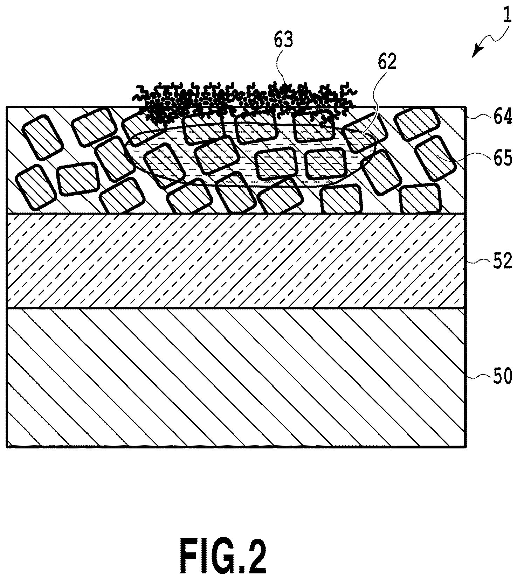

In the pigment ink, a pigment component 63 has a large particle size as depicted in Fig. 2. Thus, the pigment component 63 fails to permeate the inside of pores composed of inorganic particulates 65 contained in a gap absorbing color material receiving layer 64 and settles on the printing surface of the color material receiving layer 64. Unlike a swelling color material receiving layer, the gap absorbing color material receiving layer 64 remains smooth rather than being swollen. For a swelling absorbing color material receiving layer, the color material receiving layer 67 is swollen with the moisture 66 in the ink, making the surface of the color material receiving layer 67 uneven. Thus, the adhesion of the color material receiving layer 67 to the image substrate is degraded. Furthermore, the remaining moisture and solvent in the ink may remain on the surface of a color material receiving layer 67 and may be vaporized during the attaching step, degrading the adhesion between the image substrate and the color material receiving layer 67. This is not preferable.

As depicted in Fig. 2, the pigment component 63 in the pigment ink settles on the surface of the color material receiving layer 64, whereas the moisture and solvent component 62 in the ink permeate the inside of the color material receiving layer 64 and are separated from the pigment component 63 (solid-liquid separation). Thus, during drying, the surface of the color material receiving layer 64 is dried, inappropriate bonding resulting from vaporization of moisture can be suppressed, allowing the bonding to be strengthened. The remaining moisture and the solvent component 62 remain inside the color material receiving layer 64, the pigment component 63 is prevented from coming into contact with the remaining moisture and the solvent component 62 again, allowing suppression of movement (migration) of the ink. For the dye ink, the remaining moisture causes a dye component 68 to move (migrate) like a solvent component 69, leading to bleeding.

The pigment component in the pigment ink may be self-dispersing pigment to which at least one functional group selected from a group consisting of a carbonyl group, a carboxyl group, a hydroxyl group, and a sulfone group or a salt thereof is bonded, or a resin dispersing pigment in which pigment particles are coated with resin. The rein dispersing pigment is preferable because the pigment enhances the abrasion resistance of a printed image. Furthermore, the use of the resin dispersing pigment increases the binding force between the pigment particles separated from the moisture and solvent in the ink, allowing a pigment film to be formed on the surface of the color material receiving layer. In this case, only a small amount of moisture remains on the surface of the pigment film. This is because the pigment film substantially blocks the moisture in the layer under the color material receiving layer and also blocks the supply of moisture from the underlayer. Thus, the resin dispersing pigment component is preferably suitable for high-speed fixture of the ink and high-speed printing. When a small amount of moisture remains on the surface of the pigment film, such a moisture can be dried by natural drying. When the resin coating the periphery of the pigment particles or and the water-soluble resin in the color material receiving layer is dissolved by heat during transfer, the pigment film firmly adheres to the color material receiving layer. Moreover, when the resin cortibt the periphery of the pigment particles or and the water-soluble resin in the color material receiving layer is dissolved by heat during transfer, the pigment film also firmly adheres to the image substrate. Therefore when the resin dispersing pigment component having pigment particles whose periphery are coated by the resin is used as the pigment ink, the transfer material on which an image is printed by the pigment ink can be appropriately adhered to the image substrate. As a dispersing resin in the pigment ink, an acrylic resin such as an ester (meth)acrylate copolymer is preferably used.

The resin with which the periphery of the pigment particles is coated is preferably an ester (meth) acrylate-based copolymer having an acid value of 100 to 160 mg KOH/g. An acid value of 100 mg KOH/g or more allows the ink to be more stably ejected in the ink jet printing system that thermally ejects the ink. On the other hand, an acid value of 160 mg KOH/g or less makes the resin hydrophobic relative to the pigment particles, improving the fixability and the bleeding resistance of the ink. Therefore, the resin is suitable for high-speed fixation of the ink and high-speed printing.

The acid value refers to the amount (mg) of KOH needed to neutralize 1 g of resin and may be an indicator of hydrophilicity of the resin. The acid value in this case may be calculated from the composition ratio of monomers contained in the resin dispersant. As a specific method for measuring the acid value of the resin dispersion element, Titrino (manufactured by Metrohm) may be used which determines the acid value by potentiometric titration.

[1-8] Image Printing

When an image is printed on the transfer material, the image is printed on the surface of the color material receiving layer to which the transparent sheet is not laminated, as described above. The image is an inverted image that appears as a mirror image as viewed from the color material receiving layer and as a normal image as viewed from the transparent sheet. As a result, the inverted image 72 is printed on the color material receiving layer 53 of the transfer material 1 to form a printed material (the transfer material on which the image is printed).

The ink jet printing system is a system that prints an image by ejecting ink (ink droplets) onto the transfer material through a plurality of nozzles formed in the print head. The type of the ink jet printing system is not particularly limited.

The amount of ink ejected from the print head is preferably 20 pl or less. When the amount of ink ejected is set preferably to 20 pl or less, more preferably to 10 pl or less, and particularly preferably to 5 pl or less, the amount of moisture in the ink can be controllably adjusted to an appropriate level during the step of thermocompression bonding between the transfer material and the image substrate. A reduced amount of ink ejected allows the ink to be restrained from spreading through the color material receiving layer and enables printing of inverted images with a sufficient density. A reduced amount of ink ejected also allows prevention of an increase in the thickness of an image layer (ink layer) .

[1-9] Pore Processing

As described above, when the transfer material with no pores pre-formed therein is used, a desired pore processing unit may be used for the transfer material with an image printed thereon to form pores in the transparent sheet. In this case, the pores may be formed from the surface of the color material receiving layer 53 or from the surface of the substrate sheet 50, as depicted in Fig. 6. To keep image quality high, the pores are preferably formed from the surface of the substrate sheet 50

[1-10] Primer Layer

In the present embodiment, a primer layer 56 is further provided on the surface of the color material receiving layer 53 of the transfer material 1 on which an image has been printed. For example, a primer layer described in Japanese Patent Laid-Open No. 2015-110321 may be preferably used.

[2] Printed Material

The printed material may be configured as depicted in Figs. 14A to 14F described above. The color material receiving layer 53 of the transfer material 1 on which the image has been printed is transferred to the image substrate 55. As described above, the pores 52A are formed or the open-cell structure 553, 554, or 555 is configured in the transparent sheet 52 covering the color material receiving layer 53.

[3] Manufacturing Method for the Printed Material

The printed material with the image substrate, the color material receiving layer, and the transparent sheet is manufactured using a manufacturing method including steps 1, 2, and 3. In step 1, the transfer material is provided in which the substrate sheet, the transparent sheet, and the color material receiving layer containing at least the water-soluble resin are laminated, and an image is printed on the color material receiving layer using the ink jet printing system or the like. Thus, the transfer material (print medium) with the image printed thereon is obtained. In step 2, the color material receiving layer of the print medium is thermocompression-bonded to the image substrate. In step 3, the substrate sheet is peeled off from the print medium to provide a printed material. Pores may be pre-formed in the transparent sheet as depicted in Fig. 5 and Figs. 26 to 28. Furthermore, pores may be formed in the transparent sheet by executing the piercing step as described above. The transparent sheet is pierced to form pores therein before step 2 in the case of Fig. 6, after step 2 in the case of Fig. 7, and after step 3 in the case of Fig. 8.

Step 2 and step 3 of the manufacturing method for the printed material will be specifically described below.

The color material receiving layer 53 of the transfer material 1 is stuck to the image substrate 55. Thus, the laminate is formed in which the image substrate 55, the color material receiving layer 53, and the transparent sheet 52 are sequentially laminated. An inverted image printed on the color material receiving layer 53 is stuck to the image substrate 55.

When the transfer material 1 with no pores pre-formed in the transparent sheet 52 is used, pores may be formed in the transparent sheet 52 from the surface of the substrate sheet 50 after the laminate is formed, as described above. In this case, the pores 50A and 52A may be formed in the substrate sheet 50 and the transparent sheet 52, respectively, as depicted in Fig. 7. Alternatively, the pores 50A, 52A, and 53A may be formed in the substrate sheet 50, the transparent sheet 52, and the color material receiving layer 53, respectively. The pores may be formed by mechanical piercing using the needles 657 in Fig. 25A, the spur 650 in Fig. 25B, the tooth form, or the like, or using the laser processing apparatus 658 in Fig. 25C as described above. To keep image quality high, the pores 50A and 52A are preferably formed in the substrate sheet 50 and the transparent sheet 52, respectively.

When the transfer material 1 with no pores pre-formed in the transparent sheet 52 is used, pores 52A may be formed in the transparent sheet 52 by the piercing process as illustrated in Fig. 25A, Fig. 25B, or Fig. 25C after the printed material 73 is formed, as described below.

[3-1] Image Substrate

The configuration of the image substrate is not particularly limited. Examples of the component material of the image substrate include resin (resin-based substrate) and paper (paper-based substrate). Examples of the resin-based substrate include resin cards such as credit cards and IC cards. Examples of the paper-based substrate include paper booklets such as passports and paper cards.

[3-1-1] Resin-based Substrate

The resin contained in the resin-based substrate may be selected as needed depending on the intended use of the image substrate and is not particularly limited. Examples of the resin include

polyester resins such as polyethylene terephthalate, polybutylene terephthalate, and polyethylene terephthalate/isophthalate copolymer;

polyolefin resins such as polyethylene, polypropylene and polymethylpentene;

polyethylene fluoride-based resins such as polyvinyl fluoride, polyvinylidene fluoride, polytetrafluoroethylene, and an ethylene-polytetrafluoroethylene copolymer;

aliphatic polyamide resins such as nylon 6 and nylon 6, 6,

vinyl polymer resins such as polyvinyl chloride, a vinyl chloride/vinyl acetate copolymer, an ethylene/vinyl acetate copolymer, an ethylene/vinyl alcohol copolymer, polyvinyl alcohol, and vilylon;

cellurose-based resins such as cellulose triacetate and cellophane;

acrylic-based resins such as polymethyl methacrylate, polyethyl methacrylate, polyethyl acrylate, and polybutyl acrylate; and

other synthetic resins such as polystyrene, polycarbonate, polyarylate, and polyamide.

Examples of the resin contained in the resin-based substrate may include bidegradable resins such as alipatic polyester, polycarbonate, polactic acid, polyvinyl alcohol, cellulose acetate, and polycaprolactone. Any resin-based substrate may be used so long as the substrate contains resin as a main component material. The resin-based substrate may contain materials other than the resins, for example, a metal foil.

[3-1-2] Paper-based Substrate

The type of the paper contained in the paper-based substrate is not particularly limited. Examples of the paper contained in the paper-based substrate include capacitor paper, glassine paper, parchment paper, paper with a high sizing degree, synthetic paper (polyolefin-based or polystyrene-based), high-quality paper, art paper, coat paper, cast-coated paper, wall paper, backing paper, synthetic-resin or emulsion impregnated paper, synthetic-rubber-latex impregnated paper, synthetic resin-containing paper, paperboards, and cellulose fiber paper.

[3-1-3] Miscellaneous

The resin-based substrate and the paper-based substrate may include embossment, a signature, an IC memory (IC chip), optic memory, a magnetic recording layer, forgery-preventive recording paper (a pearl pigment layer, a watermark recording layer, micro characters, or the like), an embossment recording layer, and an IC chip masking layer as needed. The resin-based substrate and the paper-based substrate may be configured as a single-layer element containing any of the above-described materials or a multilayer element in which two or more sheets or films having different materials or thicknesses are laminated together.

The total thickness of the image substrate is preferably 30 to 800 $\mu$m. The thickness of the image substrate is preferably 30 $\mu$m or more, more preferably 500 $\mu$m or more, and particularly preferably 650 $\mu$m or more. On the other hand, the thickness of the image substrate is preferably 800 $\mu$m or less and more preferably 770 $\mu$m or less. When a plastic card is used as the image substrate, the total thickness of the ink jet printed material may be controllably set to 0.68 to 0.84 mm as specified in JIS6301.

[3-2] Laminate Structure

The printed material 73 has a laminate structure in which the image substrate 55, the color material receiving layer 53, and the transparent sheet 52 are sequentially laminated. The transparent sheet 52 of the printed material 73 has the pores 52A penetrating the transparent sheet 52.

[3-3] Thermocompression Bonding of the Image Medium and the Image Substrate

Preferably, a temperature for thermocompression bonding is controllably set to 60 to 160°C. When the temperature for thermocompression bonding is preferably set to 60°C or higher, water-soluble resin in the color material receiving layer can be dissolved sufficiently for adhesion to allow the image substrate and the transfer material to be compression-bonded together. When the temperature for thermocompression bonding is preferably set to 160°C or lower, the ink components can be restrained from being rapidly vaporized when the image substrate and the print medium are thermocompression-bonded together. Thus, a possible decrease in the adhesion strength between the image substrate and the print medium can be suppressed, and for example, bubbles can be restrained from remaining in the color material receiving layer.

The resin E2 in the printed material may be transferred after being sufficiently formed into a film or while partly remaining particles by adjusting transfer conditions (for example, a transfer temperature and a transfer speed) . As depicted in Fig. 39A, during thermocompression bonding, the film state can be controllably varied between the portion 980 of the transparent sheet in the portion 963 in which the image substrate 55 adheres to the color material receiving layer and the portion 981 of the transparent sheet in the portion 964 in which the image substrate 55 does not adhere to the color material receiving layer. That is, during thermocompression bonding, heat from a heat roll is easily transmitted through the portion 980 of the transparent sheet, and thus, the resin E2 is partly formed into a film and partly remains particles (Fig. 39B) or the resin E2 in the transparent sheet is totally formed into a film (Fig. 39C). At this time, the force of bonding between the resin E2 partly or totally formed into a film and the resin E1 previously formed into a film is strengthened, enabling an increase in the film strength of the transparent sheet. In the portion 981 of the transparent sheet, no heat is transmitted, allowing the resin E2 to remain particles. Since the film state varies between the portion 980 of the transparent sheet and the portion 981 of the transparent sheet, a crack is easy to form starting at the boundary portion 982 during the peeling step. As described above, the transparent sheet and the color material receiving layer can be appropriately cut off by using the two types of resins and varying the film state of the resin E2 utilizing the temperature during thermocompression bonding. The state where the resin E2 is partly formed into a film and the state where the resin E2 remains particles can be selectively used depending on performance demanded by a user.

A method for thermocompression bonding is not particularly limited. An example of the method for thermocompression bonding is to laminate the print medium to the image substrate to form a laminate, then to sandwich the laminate between a pair of heat rollers, and to thermocompression-bond the image substrate and the print medium. In this case, the surface temperature of the heat rollers is preferably set to 100 to 180°C. This allows the laminate to be heated at 60 to 160°C even when the laminate is conveyed at a high conveying speed so as to preclude a sufficient heating time from being provided.

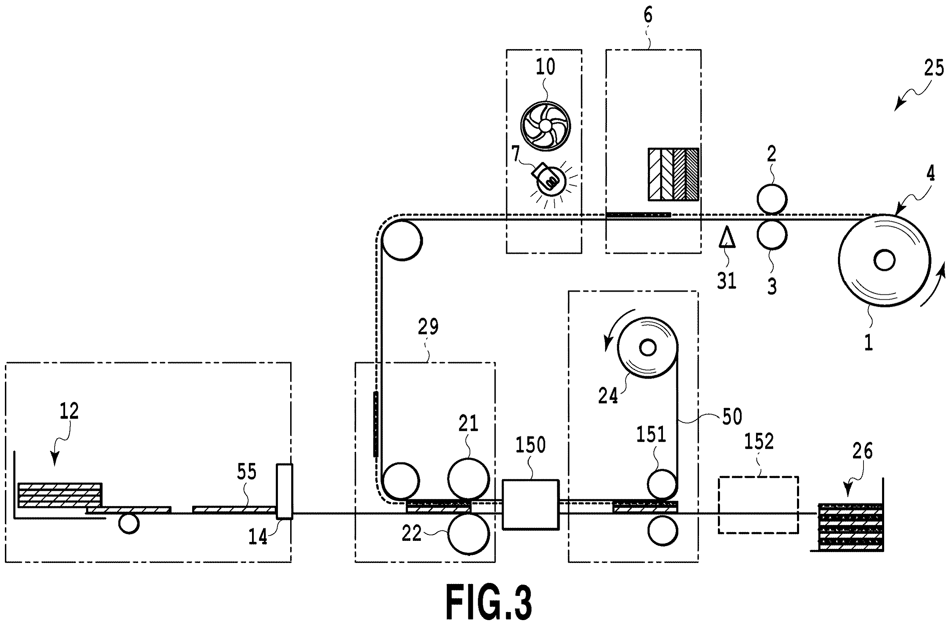

When manufacturing apparatuses 25 as depicted in Fig. 3 and Figs. 9 to 12 and described below are used, a silicone roller is preferably used as a heat roller 22 that contacts the image substrate 55. The silicone roller has a peel-off function, and thus, when the image substrate 55 is not present between the heat rollers 21 and 22, in other words, when the color material receiving layer 53 contacts the heat roller 22, the color material receiving layer 53 is difficult to attach to the heat roller 22. Therefore, the color material receiving layer 53 can be prevented from being transferred to the heat roller 22. The heat roller 21 heats the print medium from the substrate sheet 50 side.

[3-4] Peel-off of the Substrate Sheet and the Releasable Layer

The substrate sheet 50 is peeled off from the laminate to provide the ink jet print medium (printed material) 73.

When the transfer material is of the hot peel-off type, the substrate sheet is preferably peeled off immediately after thermocompression bonding before the temperature starts to lower.

When the transfer material is of the cool peel-off type, the substrate sheet can be peeled off even when the temperature lowers. A peeling angle θ is 0 to 165°and more preferably 90°to 165°. The conveying angle θ is not limited to the above-described values.

[3-5] Formation of Pores in the Transparent Sheet

As described above, when the transfer material 1 with no pores pre-formed in the transparent sheet 52 is used, pores may be formed in the transparent sheet 52 from the surface of the substrate sheet 50 after the laminate is formed. That is, the pores 50A and 52A may be formed in the substrate sheet 50 and the transparent sheet 52, respectively, as depicted in Fig. 7. Alternatively, the pores 50A, 52A, and 53A may be formed in the substrate sheet 50, the transparent sheet 52, and the color material receiving layer 53, respectively. The pores may be formed by mechanical piercing using the needles 657 in Fig. 25A, the spur 650 in Fig. 25B, the tooth form, or the like, or using the laser processing apparatus 658 as depicted in Fig. 25C, as described above. To keep image quality high, the pores 50A and 52A are preferably formed in the substrate sheet 50 and the transparent sheet 52, respectively.

[4] Ink Jet Printing Apparatus

A printing apparatus includes a feeding unit that feeds the transfer material out to a conveying path and a printing unit 6 that prints an image by applying a color material to the color material receiving layer of the transfer material fed out to the conveying path. When the transfer material with no pores formed in the transparent sheet is used, the printing apparatus includes a piercing unit 659 that allows pores to be formed in the transparent sheet before step 2 (Fig. 6), after step 2 (Fig. 7), and after step 3 (Fig. 8).

[4-1] Ink Jet Printing Apparatus

Specifically, as the printing apparatus, a printing apparatus based on an ink jet system (ink jet printer) may be used which prints an image by ejecting ink (ink droplets) to the transfer material through a plurality of nozzles formed in a print head. Such a printing apparatus is preferable in that the print head avoids coming contact with the transfer material during printing of images, allowing images to be very stably printed. The ink jet printing system is not particularly limited, and both a thermal system and a piezoelectric system can be suitably used. The thermal ink jet printing system is preferable since high-resolution images can be printed in comparison with other printing systems. In the thermal ink jet printing system, the ink in the nozzles is bubbled by thermal energy of a heater that generates heat in accordance with a driving pulse, so that the resultant bubbling energy is utilized to eject ink droplets through the nozzles. For example, a full-line ink jet printer is preferably used which includes a line head with a large number of multi-nozzle heads arranged orthogonally to the conveying direction of the transfer material; each of the multi-nozzle heads has a plurality of nozzles integrated together and each including an ink ejection port and an ink channel. In the full-line ink jet printer, an image is printed by simultaneously ejecting ink though the ink ejection ports of the plurality of nozzles in conjunction with conveyance of the transfer material. Thus, high-quality high-resolution images can be printed at high speed.

[4-2] Formation of Pores in the Transparent Sheet

As described above, when the transfer material 1 in Fig. 1B is used in which no porous structure is pre-configured in the transparent sheet, pores can be formed in the transparent sheet by mechanical piercing or laser processing .

[5] Manufacturing Apparatus for the Printed material

The manufacturing apparatus for the printed material 73, an image substrate feeding unit that feeds the image substrate out to a conveying path, an attaching unit that attaches the transfer material to the image substrate fed out to the conveying path, and a peeling unit that peels the substrate sheet off from the transfer material. When the transfer material with no porous structure pre-configured in the transparent sheet is used, the manufacturing apparatus includes the piercing unit 659 corresponding to the piercing step as illustrated in Figs. 6 to 8.

[5-1] First Manufacturing Apparatus

Fig. 3 is a side view schematically depicting a first configuration example (hereinafter referred to as a "first manufacturing apparatus") of the manufacturing apparatus 25 that manufactures a printed material. When the transfer material with pores pre-formed in the transfer material is used, a well-known small-sized ink jet printer or a well-known large-sized printer may be used as the printing apparatus of the present invention for printing an image on the transfer material by the pigment ink. As an apparatus for transferring the transfer material to the image substrate and peeling the substrate sheet off, a well-known laminator (for example, Dc-10 manufactured by DYNIC CORPORATION, LPD3223 CLIVIA manufactured by FUJITEX, or the like) may be use. Such a laminator, any laminator may be used if it is capable of thermocompression bonding the color material receiving layer of the transfer material to the image substrate when the transfer material and the image substrate pass through between a pair of a heat roller and a pressure roller. In the thermocompression bonding step and the peeling step, a laminator of a well-known two-roll type or a well-known four-roll type may be used. Compared to the two-roll type, the four-roll type is preferably used because this type facilitates heat transfer during thermocompression bonding to allow the peeling step to be easily executed.
Instead of such a laminator, a manufacturing apparatus 25 as depicted in Fig. 3 may be used. The manufacturing apparatus 25 is integrated with a feeding unit 4, a printing unit 6, a drying unit 7, a fan 10, a backup heating unit 19, an attaching portion 29, a curl removing unit 150, a peeling unit 151, an image inverting unit 152, and a discharge unit 26. The feeding unit 4 feeds the transfer material 1 to the printing unit 6, and the printing unit 6 prints an image by ejecting ink from nozzles of aprinting head in ink jet system. The drying unit 7 vaporizes moisture in the transfer material 1 with ink applied thereto in order to strengthen the adhesion between the transfer material 1 and the image substrate 55, and the fan 10 prevents condensation of vaporized moisture in the apparatus . The backup heating unit 19 heats the image substrate 55 to strengthen the adhesion between the image substrate 55 and the transfer material 1, and the attaching portion 29 attaches the color material receiving layer with an inverted image printed thereon and the transparent sheet to the image substrate 55. The curl removing unit 150 removes curl from the image substrate 55 with the color material receiving layer attached thereto, and the peeling unit 151 peels off the substrate sheet. The image inverting unit 152 inverts the image substrate 55 when double-sided printing is performed, and the discharge unit 26 discharges and collects the image substrates 55 with images printed thereon.

[5-2] Second Manufacturing Apparatus

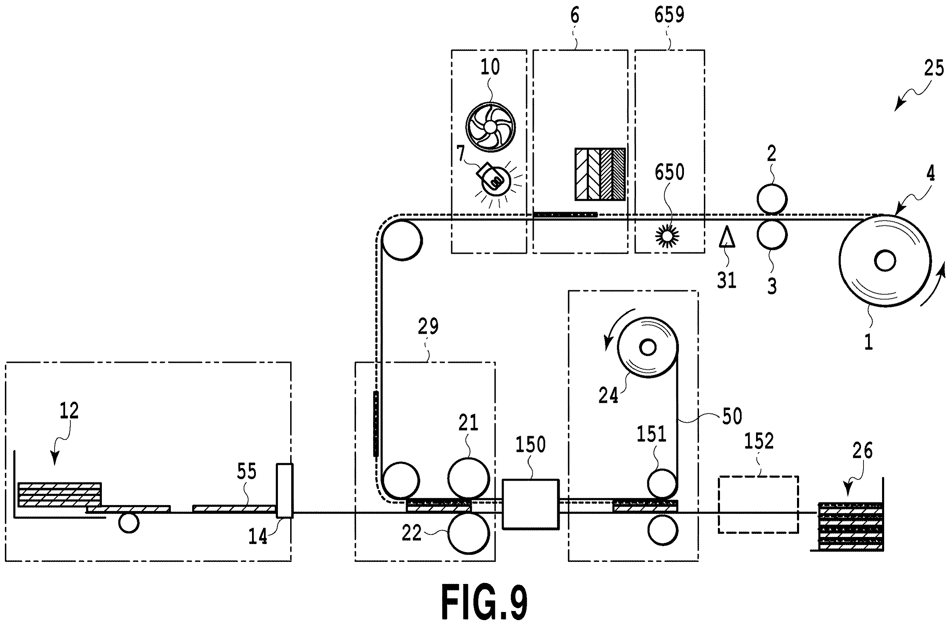

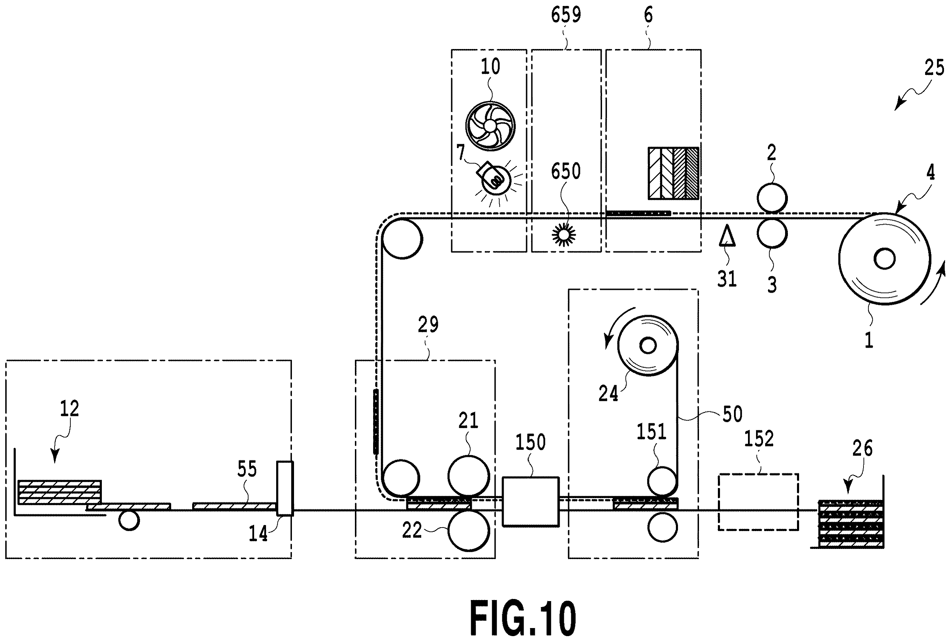

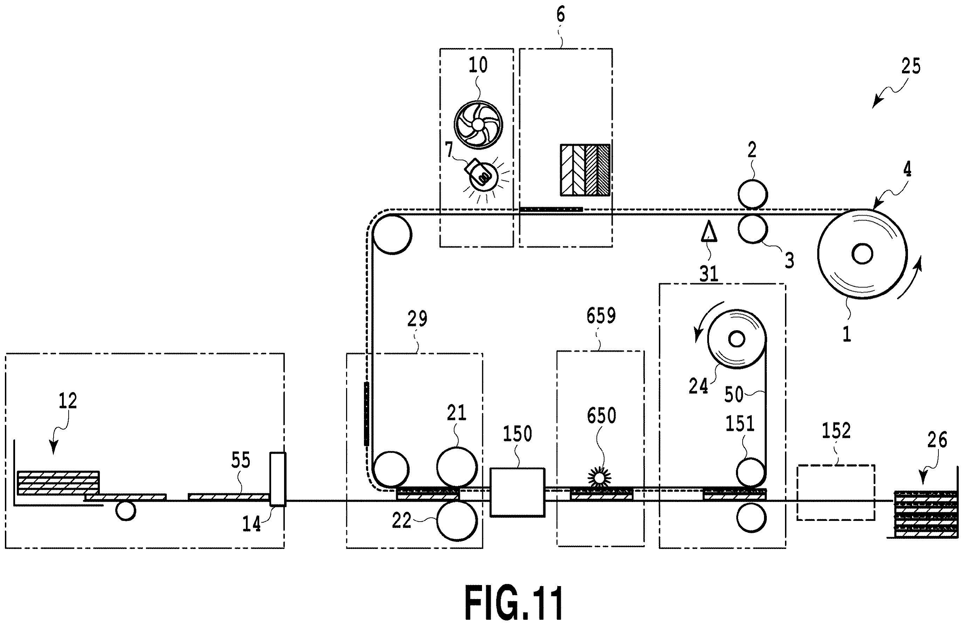

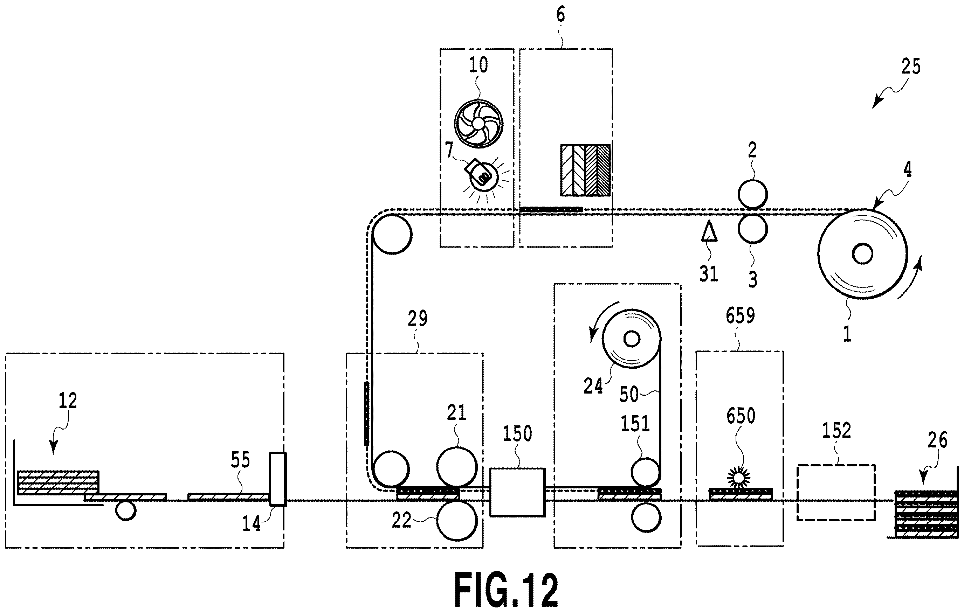

When the transfer material 1 with no porous structure pre-configured in the transparent sheet is used, the manufacturing apparatus 25 includes a piercing unit 659 that allows pores to be formed in the transparent sheet. The piercing unit 659 forms pores in the transparent sheet of the transfer material 1 on which no image has been printed. For example, the piercing unit 659 may be provided at an upstream side of the printing unit 6 in the transporting direction of the transfer material as depicted in Fig. 9. As depicted in Fig. 10, the piercing unit 659 may be provided between the printing unit 6 and the attaching portion 29. As depicted in Fig. 11, the piercing unit 659 may be provided between the attaching portion 29 and the peeling unit 151. Furthermore, as depicted in Fig. 12, the piercing unit 659 may be provided between the peeling unit 151 and the discharge unit 26.

In a case where the printer unit and the transfer unit are separately and independently configured, pores may be formed in the transparent sheet by the piercing unit 659 before or after the image printing step using the print head 311. Alternatively, the pores may be formed in the transparent sheet by the piercing unit 659 before the transfer step using the laminate machine, before the peeling step for the substrate sheet, or after the peeling step for the substrate sheet. The piercing unit 659 may form a piercing apparatus independent of the printer unit and the transfer unit. In this case, to form pores in the state of the transfer material, an independent piercing unit is preferably provided between the printer unit and the transfer unit. To form pores after peel-off of the substrate sheet, an independent piercing unit is preferably provided so as to execute a piercing process after the image transfer step.

The enables pores may be formed in the transparent sheet either from the side of the color material receiving layer or the substrate sheet of the transfer material. To keep the quality of print images high, piercing is preferably performed from the substrate sheet side as depicted in Fig. 9. Any piercing process may be used so long as the process allows pores to be formed at least in the transparent sheet as depicted in Fig. 6. Examples of the piercing process may include the mechanical piercing using the needles 657 as depicted in Fig. 25A, the spur 650 as depicted in Fig. 25B, or the tooth form, or the laser processing using the laser processing apparatus 658 as depicted in Fig. 25C.

In the first to second manufacturing apparatuses, the transfer material includes at least the transparent sheet and the color material receiving layer on the substrate. The step of attaching the transfer material to the color material receiving layer involves controlling the amount of ink moisture in the color material receiving layer and controlling the temperature during attachment. This strengthens the adhesion between the transparent sheet of the transfer material and the image substrate, providing a printed material that appropriately resists weather, water, chemicals, and gas.

(Second Invention)

Now, a second invention will be described.

[6] Transfer Material in the Second Invention

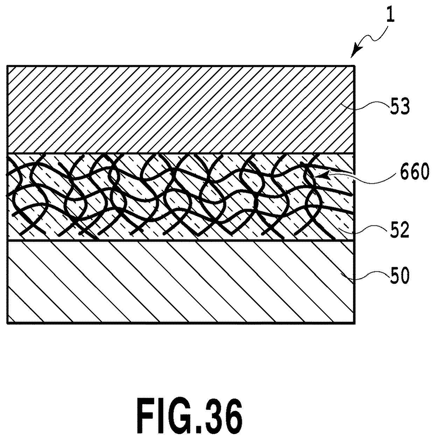

Fig. 36 is a sectional view of a transfer material 1 in the second invention. The transfer material 1 is a laminate structure in which the substrate sheet 50, the transparent sheet 52, and the color material receiving layer 53 are laminated in this order. The transparent sheet 52 has a mechanism that discharges moisture to the outside of the sheet. The color material receiving layer 53 contains a water-soluble resin, and the transparent sheet 52 contains a swelling resin 660.

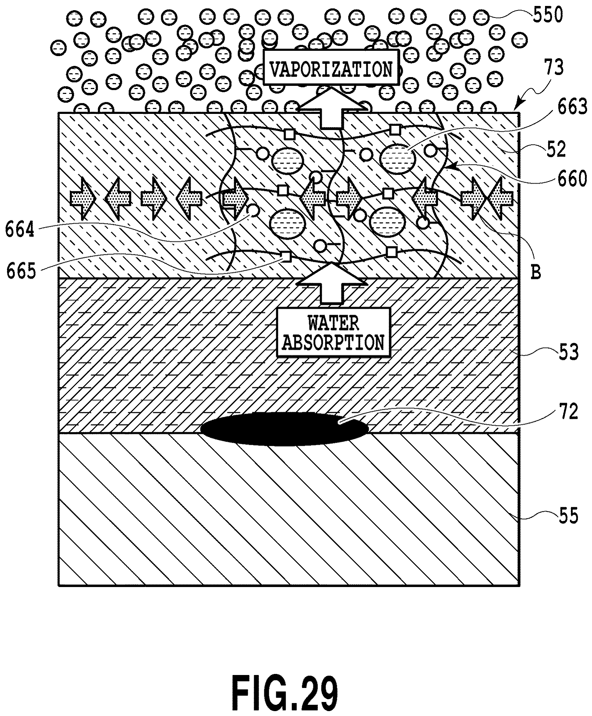

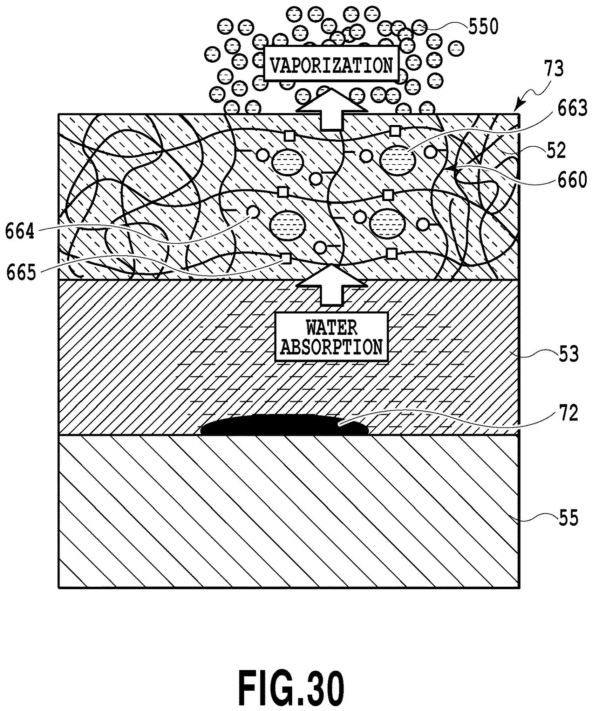

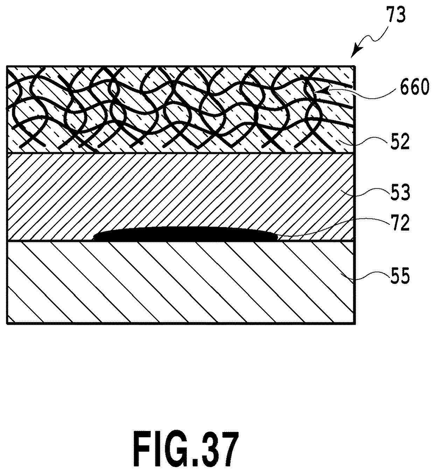

Fig. 30 is a sectional view of a printed material 73 created by transferring the color material receiving layer 53 and the transparent sheet 52 of the transfer material 1 to the image substrate 55. The transparent sheet 52, having the swelling resin 660, can absorb unwanted moisture 663 contained in the color material receiving layer 53 and vaporize the moisture 663 through the surface of the transparent sheet 52 as water vapor 550. Fig. 29 is a sectional view of the printed material 73 in Fig. 37 taken out of the water in which the printed material 73 has been immersed for a long time. When the printed material 73 is taken out of the water, the moisture 663 absorbed into the color material receiving layer 53 vaporizes not only through the end of the color material receiving layer 53 but also through the entire surface of the transparent sheet 52 via the swelling resin 660. Vaporizing moisture through the entire surface of the transparent sheet allows the stress of contraction of the color material receiving layer to be widely dispersed throughout the surface of the transparent sheet as depicted by arrow B. As a result, possible fissuring of the transparent sheet can be suppressed.

Differences between the second invention and the first invention will be described. In the above first invention, the transparent sheet has the pores penetrating the substrate sheet and the color material receiving layer so that the moisture in the color material receiving layer is discharged to the outside of the layer through the physical holes (pores) . In the first invention, through the pores through which water flows, other molecules may pass. For example, molecules of ozone may pass through the pores. Gaseous water molecules are each 0.4 nm in size, and ozone molecules are each 0.44 nm in size. Ozone may pass through a pore having a size sufficient to allow ozone to pass through. Thus, the transparent sheet in the first invention may be a little lower in gas resistance than a non-porous transparent sheet in the second invention. However, using a pigment with high weatherability as a color material prevents the lower gas resistance from posing practical problems.

The transparent sheet in the second invention contains a swelling resin to discharge water through molecules of the swelling resin in the transparent sheet rather than through the physical pores in the transparent sheet. Since the transparent sheet has no pores, gases other than water have difficulty passing through the transparent sheet. Thus, the transparent sheet is excellent in gas resistance. On the other hand, the swelling resin contained in the transparent sheet absorbs liquid water, and thus, when the surface of the transparent sheet attaches to contaminated water or the like for a long time, such contaminated water or the like is also absorbed through the surface of the transparent sheet. Consequently, the transparent sheet in the second invention may be inferior to the transparent sheet in the first invention in the capability of protecting from liquid contamination with chemicals and contaminated water. However, the speed at which the transparent sheet containing the swelling resin is only a few percents of the speed at which water is absorbed into the gap absorbing color material receiving layer including the pores. Thus, the color material receiving layer can be prevented from being contaminated by wiping the liquid contamination off in a short time.

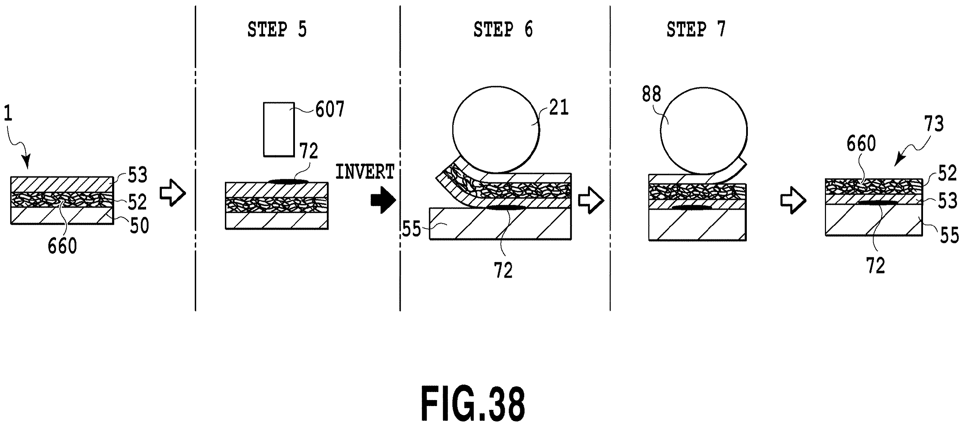

When the printed material 73 in the second invention is manufactured, as depicted in Fig. 38, an inverted image 72 is printed in the color material receiving layer 53 of the transfer material 1 using the print head 607 (step 51). Then, the transfer material 1 and the image substrate 55 are thermocompression-bonded together using the heat roller 21, to transfer the color material receiving layer 53 to the image substrate 55 (step 6). Finally, the substrate sheet 50 is peeled off using the peeling roll 88 (step 7), to provide an ink jet printed material 73.

As described above, the transfer material in the second invention has a laminate structure in which the substrate sheet, the transparent sheet, and the color material receiving layer are laminated in this order. The color material receiving layer contains the water-soluble resin, and the transparent sheet contains the swelling resin.

[6-1] Color Material Receiving Layer

For the color material receiving layer, either the swelling absorbing type or the gap absorbing type may be used as is the case with the first invention.

[6-1-1] Inorganic Particulates

For the inorganic particulates contained in the color material receiving layer, inorganic particulates similar to those described above in [1-1-1] may be used.

[6-1-2] Water-Soluble Resin

For the water-soluble resin contained in the color material receiving layer, a water-soluble resin similar to those described above in [1-1-2] may be used.

[6-1-3] Cationic Resin

The color material receiving layer may contain a cationic resin similar to those described above in [1-1-3].

[6-1-4] Thickness

The thickness of the color material receiving layer may be set as described above in [1-1-5].

[6-2] Transparent Sheet

The transfer material 1 includes the transparent sheet 52 as depicted in Fig. 36. The transparent sheet 52 contains a swelling resin 660 and has a structure in which the swelling resin disperses uniformly in the transparent sheet 52. That is, as depicted in Fig. 37, the swelling resin 664 is dispersed uniformly from the color material receiving layer 53 to the surface of the transparent sheet 52 so as to allow the color material receiving layer 53 and the transparent sheet 52 to communicate with each other. The swelling resin 664 has a large number of hydrophilic groups in each molecule of the resin and has the property of absorbing water when the hydrophilic groups capture water molecules 663. Thus, in spite of the lack of pores, the presence of the swelling resin in the transparent sheet allows excess moisture in the color material receiving layer to be absorbed and vaporized through the surface of the color material receiving layer. The transparent sheet, upon vaporizing the moisture through the surface thereof, absorbs new moisture from the color material receiving layer and vaporizes the absorbed moisture. That is, the transparent sheet containing the swelling resin is allowed to provide the function of a pump to discharge the moisture in the printed material to the outside of the material. Thus, when the transparent sheet contains the swelling resin, the swelling resin forms, like the pores, passages through which the moisture in the printed material can be discharged to the outside. Therefore, when the printed material is subjected to water resistance tests in which the color material receiving layer is allowed to absorb a large amount of moisture and then dried, the absorbed moisture can be vaporized and emitted through the entire surface of the transparent sheet, allowing suppression of fissuring caused by stress concentration.

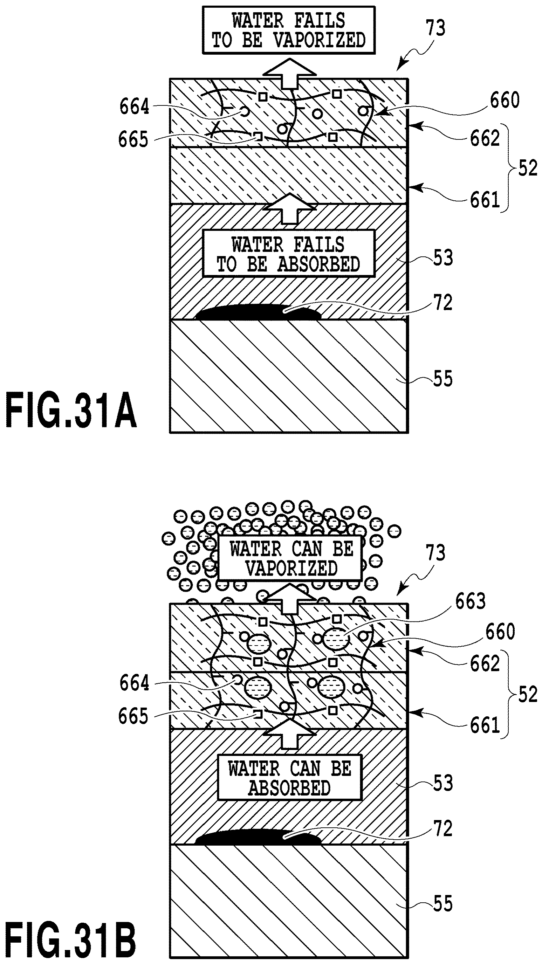

To allow the moisture in the transparent sheet to be discharged to the outside of the sheet, all the layers present between the surface of the transparent sheet and the color material receiving layer preferably contain the swelling resin. For example, in order to make the surface of the transparent sheet smoother and to strengthen the adhesion between the transparent sheet and the color material receiving layer, a layer may be added to the substrate sheet side or the color material receiving layer side of the transparent sheet to provide a transparent sheet including a plurality of layers. In this case, to allow the moisture in the transparent sheet to be discharged to the outside of the sheet, as depicted in Fig. 31B, all of a plurality of layers 661 and 662 in the transparent sheet 52 need to contain the swelling resin 660. Given that no water discharge mechanism is present between the transparent sheet and the color material receiving layer, discharge of water to the outside of the transparent sheet is significantly hindered as depicted in Fig. 31A. As a result, the amount of moisture vaporized through the surface of the transparent sheet decreases to concentrate stress on the transparent sheet, which is then likely to fissure.

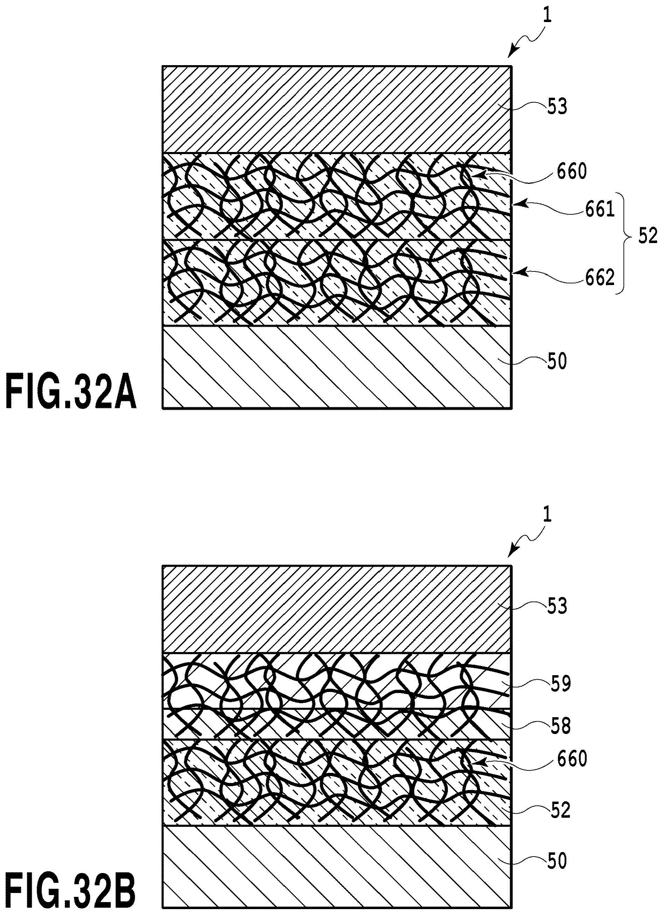

Between the transparent sheet and the color material receiving layer, an anchor layer may be provided which strengthens the adhesion between the transparent sheet and the color material receiving layer, and a hologram layer or the like may also be provided which enhances security and designability. In this case, as depicted in Fig. 32A and Fig. 32B, layers 161, 162, 58, and 59 present between the surface of the transparent sheet and the color material receiving layer all preferably contain a water-soluble resin or a water-absorbing resin.

[6-2-1] Thickness

The thickness of the transparent sheet is not particularly limited. Water resistance can be enhanced by, in addition to utilizing the water discharge effect of the transparent sheet, controllably adjusting the thickness of the transparent sheet with respect to the thickness of the color material receiving layer. That is, when the thickness of the transparent sheet is sufficiently large compared to the thickness of the color material receiving layer, the transparent sheet is strong enough to absorb the stress of contraction and is thus unlikely to fissure. When the thickness of the transparent sheet is small compared to the thickness of the color material receiving layer, the transparent sheet becomes relatively weak, the contraction of the color material receiving layer becomes relatively large, and thus, the transparent sheet is more likely to fissure. Thus, the humidity permeability and the water permeability need to be enhanced. The degrees of the water permeability and the humidity permeability can be controllably adjusted based on the type of the water-soluble resin and the degrees of saponification and polymerization for polyvinyl alcohol. The ratio (A/B) of the thickness of the transparent sheet (A) to the thickness of the color material receiving layer (B) is preferably $0.07 \leq (A/B) \leq 3.00$.

When the ratio (A/B) is high and the transparent sheet is sufficiently thick compared to the color material receiving layer, the transparent sheet is strong enough to absorb the stress of contraction to some degree and is thus unlikely to fissure. Depending on the intended use of the printed material, the thickness of the transparent sheet, which is a protective layer, may need to be several tens of $\mu$m or more in order to allow the image to be stored over a long period and to enhance weatherability and security. Also in this case, possible stress can be relieved by setting the porous structure in the transparent sheet to deal with swelling caused by absorption and contraction caused by drying of the color material receiving layer containing the water-soluble resin according to the adhesive force between the image substrate and the color material receiving layer and the adhesive force between the color material receiving layer and the transparent sheet. That is, an increased thickness of the transparent sheet enables a reduction in the content of the swelling resin in the transparent sheet. A low ratio (A/B) makes the transparent sheet thin compared to the color material receiving layer, a leading to relatively low strength of the transparent sheet and relatively significant contraction of the color material receiving layer. Thus, the transparent sheet is likely to fissure. In this case, the water permeability and the humidity permeability need to be increased.

The transparent sheet is preferably 2 to 40 $\mu$m in thickness in practical terms. Setting the thickness of the transparent sheet more preferably to 5 $\mu$m or more allows the water resistance and the abrasion resistance of the transparent sheet to be further enhanced. On the other hand, an excessively large thickness of the transparent sheet results in the need for high energy for heat transfer during thermocompression bonding of the transparent sheet to the image substrate and hinders vaporization of moisture from the color material receiving layer via the swelling resin in the transparent sheet. Therefore, the transparent sheet is desirably 40 $\mu$m or less in thickness. More preferably, a thickness of 20 $\mu$m or less not only provides transparency and a protection function as a basic function of the transparent sheet but also allows achievement of a balance with incidental functions such as energy during transfer adhesion and moisture permeability.

[6-2-2] Humidity Permeability

In a normal environment, the printed material having absorbed moisture is dried in approximately 30 minutes. Thus, the water resistance can be more enhanced when the transparent sheet has a humidity permeability of (5 g/m$^2$·h) or more. That is, when the humidity permeability of the transparent sheet is set to the above-described value or larger, possible stress involved in contraction of the color material receiving layer having absorbed water is more widely dispersed, allowing possible fissuring to be more appropriately suppressed.

[6-2-3] Swelling Resin

Examples of the swelling resin include water-soluble resins that are swollen with water and that are soluble to water and water-absorbing resins that is insoluble to water.

The water-soluble resin is a resin that sufficiently mixes with water at 25°C or that has a water solubility of 1 (g/100 g) or more. The type of the water-soluble resin is not particularly limited. For example, any of the examples of the water-soluble resin in the color material receiving layer described in section [1-1-2] may be used. Among these resins, the following are preferably used: polyvinyl alcohols (completely saponified polyvinyl alcohol, partially saponified polyvinyl alcohol, low saponified polyvinyl alcohol, or the like) and modified resins thereof (cation modified resin, anion modified resin, silanol modified resin, and the like). In particular, saponified polyvinyl alcohol is preferable which is obtained by hydrolyzing (saponifying) polyvinyl acetate. The saponified polyvinyl alcohol is preferably used for the color material receiving layer described below. The saponified polyvinyl alcohol is also used for the transparent sheet to allow the adhesion (transfer performance) between the transparent sheet and the color material receiving layer to be enhanced. Furthermore, acrylic-based resin, polyester-based resin, polyurethane-based resin, polyamide-based resin, or nylon-based resin that is soluble to water due to hydrophilic groups added into each molecule, or a copolymer thereof. The swelling resin is a swelling water-insoluble resin that has a water absorption rate under pressurization (CRC) of 0.1 g/g or more. The swelling resin is not limited to a composition in which a total amount (100%) of the resin is composed of a polymer and may contain any amount of additives described below so long as the above-described performance can be maintained in spite of the addition. That is, in the present invention, swelling resins and compositions of swelling resins containing additives are collectively referred to as swelling resins. The swelling resin is not particularly limited. Examples of the swelling resin include (meth)acrylate-based resin, (meth)acrylamide-based resin, vinyl alcohol-based resin, maleic anhydride (salt)-based resin, polyurethane-based resin, and copolymers thereof, (meth)acrylamide-(meth)acrylate salt copolymers, sulfonic acid group-containing acrylate acid-based resin and copolymers thereof, vinyl acetate-maleic anhydride copolymers, vinyl acetate-ester acrylate copolymers, starch- or cellulose-based polymers, and a partially crosslinked polymers and a graft modified polymers thereof.

One type of swelling resin may be used alone or two or more types of swelling resins may be mixed together. The "two or more types" include resins with different characteristics such as different degrees of saponification and different weight-average degrees of polymerization.

[6-2-4] Amount of the swelling resin

The amount of the swelling resin is preferably 0.05 wt% or more and 2.00 wt% or less of the whole transparent sheet. The amount of the swelling resin is more preferably 0.09 wt% or more and 1.00 wt% or less and much more preferably 0.15 wt% or more and 0.60wt% or less of the whole transparent sheet. When the amount of the swelling resin is set to 0.05 wt% or more, preferably to 0.09 wt% or more, and more preferably to 0.15 wt% or more, the swelling resin is uniformly dispersed through the transparent sheet, and the surface of the transparent sheet and the color material receiving layer are allowed to communicate with each other with a sufficient amount of swelling resin. As a result, a larger amount of moisture can be vaporized through the surface of the transparent sheet to widely disperse the stress of contraction, suppressing possible fissuring of the transparent sheet. When the amount of the swelling resin is set to 2.00 wt% or less, preferably to 1.00 wt% or less, or more preferably to 0.6 wt% or less, possible fissuring of the transparent sheet can be suppressed without a decrease in the mechanical strength of the transparent sheet caused by dissolution or excess swelling. When the amount of the swelling resin is more than 2.00 wt%, the mechanical strength of the transparent sheet decreases to make the transparent sheet more likely to fissure due to the stress of contraction, and the abrasion resistance may decrease. When the transparent sheet contains particulate resin, a large amount of swelling resin may contribute to destruction of the particulate resin to significantly vary the particle size of the particulate resin, degrading the transparency of the transparent sheet. Moreover, the transparent sheet may absorb an excessively large amount of water and thus be likely to be contaminated when liquid dirt adheres to the transparent sheet. When the amount of the swelling resin is less than 0.05 wt%, an insufficient amount of moisture vaporizes from the transparent sheet, which may be likely to fissure.

When the rate at which the swelling resin is swollen with absorbed water (hereinafter referred to as a water absorption swelling rate) is high, if the printed material is immersed into water, strain on the transparent sheet resulting from swelling may make the transparent sheet likely to fissure.

In the present invention, in view of the balance of the rate at which the swelling resin is swollen with absorbed water, the swelling resin particularly preferably contains polyvinyl alcohol (PVA) with the degree of saponification and the degree of polymerization strictly controlled. PVA has a large number of hydroxy groups in molecules that generate hydrogen bonds in or between the PVA molecules . When the degree of polymerization and the degree of saponification are high, polyvinyl alcohol molecules are more firmly bonded together due to a large number of hydrogen bonds, keeping down the swelling volume when the swelling resin is swollen with absorbed water. Polyvinyl alcohol with a high degree of polymerization and a high degree of saponification is a relatively hard resin among the water-soluble resins due to the hydrogen bonds in the molecules, and is thus effective for enhancing the abrasion resistance of the transparent sheet. Moreover, the polyvinyl alcohol is preferably used for the color material receiving layer, and thus, the transparent sheet containing polyvinyl alcohol allows the adhesion between the transparent sheet and the color material receiving layer to be strengthened.

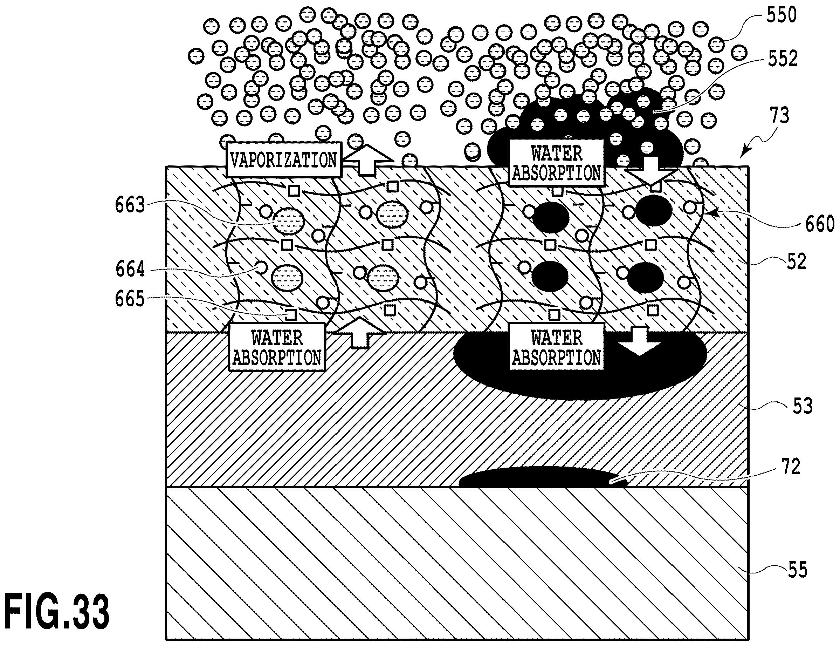

If the swelling resin in the transparent sheet absorbs a large amount of water, the performance of protection from liquid contamination may be slightly degraded. That is, as depicted in Fig. 33, if liquid contamination such as the contaminated water 552 attaches to the surface of the transparent sheet 52, the swelling resin in the transparent sheet 52 absorbs the contaminated water 552, which may come into contact with the color material receiving layer 53 and be absorbed by the color material receiving layer 53. If the contaminated water 552 is colored, the print information of the inverted image 72 may be colored by the contaminated water 552 from the background side, and the print information may partly disappear.

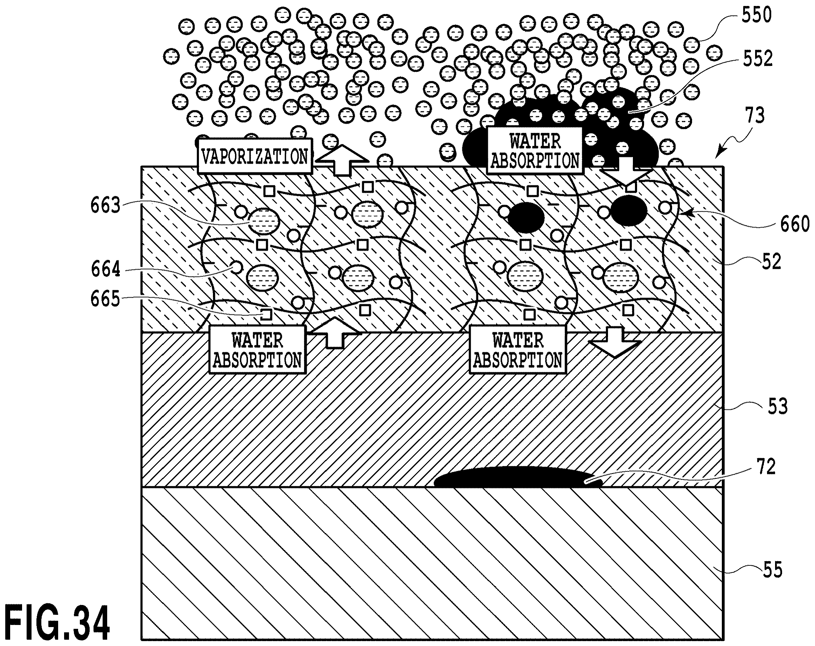

However, degradation of the protection performance can be suppressed by containing polyvinyl alcohol with a degree of saponification and a degree of polymerization falling within preferred ranges. Polyvinyl alcohol with a high degree of saponification and a high degree of polymerization contains a large number of hydrogen bonds between the polyvinyl alcohol molecules, leading to the need for a very long time to neutralize water. Therefore, if the contaminated water 552 attaches to the surface of the transparent sheet 52 as depicted in Fig. 34, the speed at which the contaminated water is absorbed is kept low, hindering the contamination from spreading through the transparent sheet 52 and the color material receiving layer 53.

[6-2-5] Degrees of Saponification and Polymerization of Polyvinyl Alcohol

The polyvinyl alcohol used for the transparent sheet is preferably a composition containing polyvinyl alcohol with a degree of saponification of 75 to 100 mol%.

When the degree of saponification is set preferably to 86 mol% or more and more preferably to 98 mol%, the swelling amount of the polyvinyl alcohol due to absorbing water can be optimized. Consequently, moisture can be vaporized through the surface of the transparent sheet to more appropriately suppress possible fissuring. Moreover, the moisture absorption speed can be kept down, protecting the print information from liquid contamination. A degree of saponification of less than 86 mol% increases the swelling amount of the polyvinyl alcohol due to absorbing water when the printed material is immersed into water, increasing the likelihood of fissuring. Moisture is also absorbed at a higher speed to increase the likelihood of liquid contamination. Moreover, the strength of the polyvinyl alcohol may decrease to reduce the abrasion resistance of the transparent sheet.

Examples of saponified polyvinyl alcohol with an appropriate degree of saponification include completely saponified polyvinyl alcohol (degree of saponification of 98 to 100 mol%), partially saponified polyvinyl alcohol (degree of saponification of 87 to 89 mol%), and low saponified polyvinyl alcohol (degree of saponification of 78 to 82 mol%) . In particular, the completely saponified polyvinyl alcohol is preferable.

The transparent sheet is a composition containing polyvinyl alcohol with a weight-average degree of polymerization of 1,500 to 5,000.

When the weight-average degree of polymerization is set to 1,500 or more and preferably to 2,000 or more, the amount by which the polyvinyl alcohol is swollen with absorbed water can be optimized. Consequently, moisture can be vaporized through the surface of the transparent sheet to more appropriately suppress possible fissuring. Moreover, the moisture absorption speed can be kept down, protecting the print information from liquid contamination. When the weight-average degree of polymerization is set to 5,000 or less and preferably to 4,500 or less, the transparent sheet can be made more unlikely to fissure when subjected to stress without the need to excessively harden the transparent sheet. The values of the weight-average degree of polymerization are calculated in compliance with a method described in JIS-K-6726. A weight-average degree of polymerization of less than 1500 increases the amount by which the transparent sheet is swollen with water absorbed by polyvinyl alcohol when the printed material is immersed into water, increasing the likelihood of fissuring. Moisture is also absorbed at a higher speed to increase the likelihood of liquid contamination. Moreover, the strength of the polyvinyl alcohol may decrease to reduce the abrasion resistance of the transparent sheet. A weight-average degree of polymerization of more than 5,000 increases the number of hydrogen bonds in the polyvinyl alcohol molecules to make the transparent sheet difficult to swell with absorbed water, hindering the transparent sheet from serving as a pump to discharge moisture. Thus, the transparent sheet may be likely to fissure when subjected to stress.

[6-2-6] Resin

For the resin contained in the transparent sheet, an emulsion similar to those described above in [1-2-4] may be used.

[6-2-7] Thickness

The thickness of the transparent sheet is not particularly limited, and a value similar to those described above in [1-2-2] may be used. In the second invention, the ratio (A/B) of the thickness (A) of the transparent sheet to the thickness (B) of the color material receiving layer is preferably falls within the range indicated by Expression (1A) .

$$0.07 \leq (A/B) \leq 3.00 \quad (1A)$$

When the ratio (A/B) is 0.07 or more, the thickness of the transparent sheet is sufficiently large compared to the thickness of the color material receiving layer and allows a sufficient strength to be achieved. Thus, fissuring is unlikely to occur even when the water permeability and the humidity permeability are low. When the ratio (A/B) is equal to or lower than 3.00, the thickness of the transparent sheet is reduced compared to the thickness of the color material receiving layer and improves heat conduction during thermocompression bonding. Thus, the adhesion between the transparent sheet and the color material receiving layer (transfer performance) can be strengthened. When the ratio (A/B) is lower than 0.07, the thickness of the transparent sheet is small compared to the thickness of the color material receiving layer and fails to achieve a sufficient strength to resist the contraction of the color material receiving layer. Thus, fissuring is likely to occur when the water permeability and the humidity permeability are low. When the ratio (A/B) is higher than 3.00, the thickness of the transparent sheet is large compared to the thickness of the color material receiving layer and degrades heat conduction during thermocompression bonding. Thus, the performance of the transfer between the transparent sheet and the color material receiving layer is degraded.

As described above, when the ratio (A/B) is high and the thickness of the transparent sheet is sufficiently large compared to the thickness of the color material receiving layer, the transparent sheet is sufficiently strong and absorbs the stress of contraction to some degree. Thus, the transparent sheet is unlikely to fissure.

[6-3] Substrate Sheet

For the substrate sheet, a substrate sheet similar to that described above in [1-3] may be used.

[6-4] Releasable Sheet

For the releasable sheet, a releasable sheet similar to that described above in [1-4] may be used.

[6-5] Laminate Structure

As depicted in FIG. 36, the transparent sheet 52 has a laminate structure in which the substrate sheet 50, the transparent sheet 52, and the color material receiving layer 53 are sequentially laminated. The phrase "the substrate sheet, the transparent sheet, and the color material receiving layer are sequentially laminated" means that the substrate sheet, the transparent sheet, and the color material receiving layer are laminated in this order regardless of whether any other layer is interposed between the substrate sheet and the transparent sheet and between the transparent sheet and the color material receiving layer. That is, a structure in which the anchor layer 59 or the hologram layer 58 is present between the transparent sheet 52 and the color material receiving layer 53, like the transfer material 1 in Fig. 32A and Fig. 32B, is also included in the laminate structure in which "the substrate sheet, the transparent sheet, and the color material receiving layer are sequentially laminated".

The transfer material 1 preferably has a laminate structure in which the substrate sheet 50, the transparent sheet 52, and the color material receiving layer 53 are in abutting contact with one another, as depicted in Fig. 36. That is, in a preferred structure, no other layer (and no sheet) is interposed between the substrate sheet 50 and the transparent sheet 52 or between the transparent sheet 52 and the color material receiving layer 53. This is because strict thickness limitation is imposed on credit cards and the like, which are target printed materials, so that the printed material is desirably thinned by reducing the number of laminated layers and sheets.

When the transfer material includes the releasable layer 51, the transfer material is preferably a laminate structure in which the color material receiving layer 53, the transparent sheet 52, the releasable layer 51, and the substrate sheet 50 are sequentially laminated.

[6-6] Shape and Thickness of the Transfer Material

The shape and thickness of the transfer material may be set as described above in [1-8].

[6-7] Manufacturing Method

The transfer material may be manufactured in a manner similar to that described above in [1-9] . That is, the substrate sheet is coated with the coating liquid containing the water-soluble resin or the water-absorbing resin, which allows a transparent sheet to be formed. Thus, the transparent sheet is laminated to the substrate sheet. Subsequently, the resultant laminate may be coated with the coating liquid containing at least the water-soluble resin, to form a transfer material. For a gap absorbing configuration, the resultant laminate may be coated with the coating liquid containing at least the inorganic particulates, the water-soluble resin, and the cationic resin to form a transfer material.

[6-8] Image

For the image, an image similar to those described above in [1-10] may be printed.

[6-9] Image Printing

For image printing, an operation similar to that described above in [1-11] may be performed.

[6-10] Primer Layer

For the primer layer, a primer layer similar to that described above in [1-12] may be used.

[7] Printed Material

The printed material in the second invention includes the image substrate, the color material receiving layer, and the transparent sheet as depicted in Fig. 36. The substrate sheet, the transparent sheet, and the color material receiving layer containing at least the swelling resin are laminated together to form a transfer material. An image is printed in the color material receiving layer of the transfer material. The transfer material is laminated to the image substrate. The substrate sheet is then peeled off to form a printed material. The transfer material with the image printed thereon (printed material) is obtained using the transfer material described above in [6].

[8] Method for Manufacturing a Printed material in the Second Invention

The printed material in the second invention is manufactured through steps 5, 6, and 7 as depicted in Fig. 38. In step 5, an image is printed on the color material receiving layer of the transfer material described above in [6]. In step 6, the color material receiving layer of the print medium is thermocompression-bonded to the image substrate. In step 7, the substrate sheet is peeled off.

[8-1] Image Substrate

For the image substrate, an image substrate similar to those described above in [3-1] may be used.

[8-2] Laminate Structure

The printed material has a laminate structure in which the image substrate 55, the color material receiving layer 53, and the transparent sheet 52 are sequentially laminated.

[8-3] Thermocompression Bonding between the Transfer Material and the Image Substrate

The thermocompression bonding between the transfer material and the image substrate may be performed as described in [3-3] using the manufacturing apparatus 25 in Fig. 3.

[8-4] Peel-off of the Substrate Sheet and the Releasable Layer

The printed material 73 in Fig. 23 has a structure in which the image substrate 55, the color material receiving layer 53, and the transparent sheet 52 are sequentially laminated, as a result of peel-off of the substrate sheet 50. The substrate sheet 50 may be peeled off as described above in [3-4].

[8-5] Simultaneous Peel-off from the Opposite Surfaces

The simultaneous peel-off from the opposite surfaces may be performed as described above in [3-5].

[9] Printing Apparatus in the Second Invention

For the printing apparatus in the second invention, a printing apparatus similar to the first manufacturing apparatus described above in [5-1] may be used.

In the above-described manufacturing apparatuses in the second invention, when the transfer material has, on the substrate, at least the transparent sheet containing the swelling resin and the color material receiving layer, the step of attaching the transparent sheet to the image substrate involves controlling the amount of ink moisture in the color material receiving layer and controlling the temperature during attachment. This strengthens the adhesion between the transparent sheet of the transfer material and the image substrate, providing a printed material that appropriately resists weather, water, chemicals, and gas.

(Examples)

Specific examples of the present invention will be described below. However, the present invention is not limited by the examples described below. In the description below, "pts" and "%" refer to mass standards unless otherwise specified.

(Example 1)

[Synthesis of a Coating Liquid for Transparent Sheet Formation]

Nine pts water solution of acrylic emulsion (JONCRYL 352D manufactured by BASF, Tg: 56°C, solid content concentration: 45%) and 1 pts water solution of urethane emulsion (SUPERFLEX 130 manufactured by DKS Co., Ltd., Tg: 101°C, solid content concentration: 35%) were added together. The solution was stirred and mixed for five minutes to prepare a coating liquid for a laminate sheet.

[Manufacture of a Laminate Sheet (Component Material for the Transfer Material)]

The surface of a PET substrate sheet was coated with the coating liquid for transparent sheet formation (to a thickness of 25 $\mu$m) and then dried. Thus, a laminate sheet serving as a component material for the transfer material was obtained which included the transparent sheet with no pores formed therein and the substrate sheet. For coating, a die coater was used, a coating speed was 5 m/min, and the weight of coating resulting from drying was 5 g/m$^2$. The drying temperature was 90°C. The thickness of the transparent sheet (B) was 5 $\mu$m.

[Pore Formation]

The laminate sheet was mechanically pierced using the pore formation method to form a transfer material including the transparent sheet with pores formed therein. For the piercing process, the needles 657 as depicted in Fig.

25A were used. The pore distribution density indicated the presence of one pore per 1 square mm, and the pore diameter was 0.02 $\mu$m. In the passage location section in Tables 2-1 to 2-4, the layer with pores formed therein (in Example 1, the protective sheet (transparent sheet)) is denoted by a blank circle. The layers with no blank circle in Tables 2-1 to 2-4 have no pores formed therein.

[Preparation of a Hydrated Alumina Dispersion Liquid]

Into pure water, 20 pts hydrated alumina A (trade name "Disperal HP14" manufactured by SASOL) having a boehmite structure (a pseudo boehmite structure) was added, and 0.4 pts acetic acid was further added. The mixture was peptized to prepare a hydrated alumina dispersion liquid. Hydrated alumina particulates in the hydrated alumina dispersion liquid had an average particle size of 140 nm. Then, 0.3 pts boric acid was added to the dispersion liquid to prepare a hydrated alumina dispersion liquid with boric acid addition.

[Preparation of a Water Solution of Polyvinyl Alcohol]

Polyvinyl alcohol (trade name "PVA235" manufactured by KURARAY CO., LTD.) was dissolved into ion exchange water to prepare a water solution of polyvinyl alcohol with a solid content concentration of 8%. The polyvinyl alcohol had a weight-average degree of polymerization of 3,500, a degree of saponification of 87 to 89 mol%.

[Preparation of a Coating Liquid for Color Material Receiving Layer Formation]

To 100 pts hydrated alumina dispersion liquid with boric acid addition, 27.8 pts water solution of polyvinyl alcohol was added, and 3.0 pts polyallylamine was added as cationic resin. The resultant solution was mixed using a static mixer to prepare a coating liquid for color material receiving layer formation. As the polyallylamine, polyallylamine having a melting point of 83.3°C and a weight-average degree of polymerization of 1600 (trade name "PAA-01" manufactured by Nitto Boseki Co., Ltd.) was used.

[Manufacture of a Transfer Material]

Immediately after mixture of the coating liquid for color material receiving layer formation, the surface of the transparent sheet of the laminate sheet with pores formed therein was coated with the coating liquid and then dried to form a transfer material with a gap absorbing color material receiving layer. To apply the coating liquid, the die coater was used. The coating speed was set to 5 m/min, and the weight of coating resulting from drying was 5 g/m$^2$. The drying temperature was set to 60°C. The transfer material was wound into a roll such that the color material receiving layer was located on the outer side of the roll, whereas the substrate sheet was located on the inner side of the roll. The thickness A of the color material receiving layer was 10 $\mu$m. The ratio (A/B) of the thickness A of the color material receiving layer to the thickness B of the transparent sheet was 0.5.

[Measurement of the Humidity Permeability]

The humidity permeability of the transparent sheet of the transfer material was measured using the method specified in JIS L1099B-2. The humidity permeability of the transparent sheet was 10 g/m$^2 \cdot$h.
A 60% solid image with a print duty of 60% was printed with pigment ink on the transfer material obtained in Example 1, using the above-described first manufacturing apparatus. Subsequently, the transfer material was thermocompression-bonded to the image substrate, and the substrate sheet was peeled off to form a printed material in Example 1. A method for preparing the pigment ink will be described below. As the printing unit of the manufacturing apparatus, a print module with a line head (trade name "PM-200Z" manufactured by Canon Finetech Inc.) was used. As the image substrate, a vinyl chloride card (trade name "C-4002" manufactured by EVOLIS) was used. Conditions for the thermocompression bonding were a temperature of 160°C, a pressure of 3.9 Kg/cm, and a conveying speed of 50 mm/sec. A peeling angle for the peel-off of the substrate sheet 50 was 90°.

[Preparation of Pigment Ink]

<Synthesis of a (Meth) Acrylic Acid Ester-Based Copolymer>

One thousand pts methylethylketone was fed into a reaction container equipped with a stirring apparatus, a dropping apparatus, a temperature sensor, a reflux apparatus with a nitrogen introducing apparatus at the top thereof. The interior of the reaction container was purged with nitrogen, with the methylethylketone stirred. The interior of the reaction container was elevated to 80°C with the interior kept in a nitrogen atmosphere, and then 63 pts methacrylic acid 2-hydroxyethyl, 141 pts methacrylic acid, 417 pts styrene, 188 pts benzyl methacrylate, 25 pts glycidyl methacrylate, 33 pts degree-of-polymerization regulator (trade name "BLEMMER TGL" manufactured by NOF CORPORATION), and 67 pts peroxy-2-ethyl hexane acid-t-butyl were mixed together, the resultant mixture was dropped in four hours. After the dropping, the reaction was allowed to continue at the same temperature for 10 hours to prepare a solution (resin content: 45.4%) of (meth)acrylic acid ester-based copolymer (A-1) with an acid value of 110 mg KOH/g, a glass transition temperature (Tg) of 89°C, and a weight-average molecular weight of 8,000.

<Preparation of an Aqueous-Pigment Dispersion Element>

One thousand pts phthalocyanine-based blue pigment, the solution of (meth) acrylic acid ester-based copolymer (A-1) resulting from the above-described synthesis, a 25% water solution of potassium hydroxide, and water were fed into a mixing tank with a cooling function and mixed together to prepare a mixture. The amount of the (meth) acrylic acid ester-based copolymer (A-1) was used such that the nonvolatile content of the (meth) acrylic acid ester-based copolymer (A-1) was 40% with respect to the phthalocyanine-based blue pigment. The 25% water solution of potassium hydroxide had such an amount as allows the (meth) acrylic acid ester-based copolymer (A-1) to be 100% neutralized. The water had such an amount as set the nonvolatile content of the resultant mixture to 27%. The resultant mixture was passed through a dispersing apparatus filled with zirconia beads each with a diameter of 0.3 mm. The mixture was thus dispersed for four hours using a circulation method. The temperature of the dispersion liquid was maintained at 40°C or lower.

The dispersion liquid was extracted from the mixing tank, and then, the channel between the mixing tank and the dispersing apparatus was cleaned with 10,000 pts water. The cleaning solution and the dispersion liquid were mixed together to prepare a diluted dispersion liquid. The resultant diluted dispersion liquid was fed into a distillation apparatus, in which a total amount of methylethylketone and a fraction of the water were distilled away to prepare a concentrated dispersion liquid. The concentrated dispersion liquid was left and cooled down to the room temperature, and then, 2% hydrochloric acid was dropped to the resultant concentrated dispersion liquid, which was simultaneously stirred. The concentrated dispersion liquid was thus adjusted to pH 4.5, and a solid content of the liquid was filtered using a Nutsche filtration apparatus and washed in water. The resultant solid content (cake) was placed in a container, into which water was added. The solid content was re-dispersed using a dispersing stirrer and then adjusted to pH 9.5 using a water solution of potassium hydroxide. Subsequently, a centrifugal separator was used to remove coarse particles at 6,000 G in 30 minutes, and then, the nonvolatile content was regulated to prepare an aqueous cyan pigment dispersion element (pigment content: 14%, acid value: 110).

A process similar to the process for the aqueous cyan pigment dispersion element was executed except that the phthalocyanine blue pigment was changed to a carbon black-based black pigment, a quinacridone-based magenta pigment, or a diazo-based yellow pigment, to prepare an aqueous black pigment dispersion element, an aqueous magenta pigment dispersion element, or an aqueous yellow pigment dispersion element.

<Ink Preparation>

The aqueous pigment dispersion element and components indicated in Table 1 were fed into a container so as to achieve a composition indicated in Table 1 (total: 100 pts). The solution was stirred for 30 minutes or longer using a propeller stirrer. Subsequently, the solution was filtered using a filter with a pore diameter of 0.2 $\mu$m (manufactured by NIHON PALL LTD.) to prepare pigment ink. In Table 1, "AE-100" indicates acetylene glycol 10 mol ethylene oxide additive (trade name "ACETYLENOL E100 manufactured by Kawaken Fine Chemicals Co., Ltd.).

Table 1

|  | Bk | C | M | Y |
|---|---|---|---|---|
| Acid value (mgKOH) | 110 | 110 | 110 | 110 |
| Pigment (pts) | 2.5 | 2.5 | 2.5 | 2.5 |
| Glycerin (pts) | 7 | 7 | 7 | 7 |
| Triethylene glycol (pts) | 5 | 5 | 5 | 5 |
| Ethylene urea | 12 | 12 | 12 | 12 |
| AE-100 (pts) | 0.5 | 0.5 | 0.5 | 0.5 |
| Pure water (pts) | Remaining portion | Remaining portion | Remaining portion | Remaining portion |

(Example 2)

A transfer material and a printed material were obtained as is the case with Example 1 except that a swelling color material receiving layer was formed by changing the coating liquid for color material receiving layer formation to NS625XC manufactured by TAKAMATSU OIL & FAT CO., LTD. The pore diameter, the humidity permeability, and the thickness ratio A/B in Example 2 are indicated in Tables 2-1 and 2-2 described below.

(Example 3)

A transfer material and a printed material were obtained as is the case with Example 1 except that the diameter of each pore in the transparent sheet was changed from 0.02 $\mu$m was changed to 0.002 $\mu$m. The humidity permeability and the thickness ratio A/B in Example 3 are indicated in Tables 2-1 and 2-2 described below.

(Example 4)

A transfer material and a printed material were obtained as is the case with Example 1 except that the diameter of each pore in the transparent sheet was changed from 0.02 $\mu$m was changed to 0.7 $\mu$m. The humidity permeability and the thickness ratio A/B in Example 4 are indicated in Tables 2-1 and 2-2 described below.

(Example 5)

A transfer material and a printed material were obtained as is the case with Example 1 except that the diameter of each pore in the transparent sheet was changed from 0.02 $\mu$m was changed to 0.001 $\mu$m. The humidity permeability and the thickness ratio A/B in Example 5 are indicated in Tables 2-1 and 2-2 described below.

(Example 6)

A transfer material and a printed material were obtained as is the case with Example 1 except that the diameter of each pore in the transparent sheet was changed from 0.02 $\mu$m was changed to 1 $\mu$m. The humidity permeability and the thickness ratio A/B in Example 6 are indicated in Tables 2-1 and 2-2 described below.

(Example 7)

A transfer material and a printed material were obtained as is the case with Example 1 except that the diameter of each pore in the transparent sheet was changed from 0.02 $\mu$m was changed to 10 $\mu$m. The humidity permeability and the thickness ratio A/B in Example 7 are indicated in Tables 2-1 and 2-2 described below.

(Example 8)

A transfer material and a printed material were obtained as is the case with Example 1 except that the diameter of each pore in the transparent sheet was changed from 0.02 $\mu$m was changed to 100 $\mu$m. The humidity permeability and the thickness ratio A/B in Example 8 are indicated in Tables 2-2 and 2-4 described below.

(Example 9)

A transfer material and a printed material were obtained as is the case with Example 1 except that the pore distribution density in the transparent sheet was changed from one pore per 1 square mm to one pore per 5 square mm. The pore diameter, the humidity permeability, and the thickness ratio A/B in Example 9 are indicated in Tables 2-2 and 2-4 described below.

(Example 10)

A transfer material and a printed material were obtained as is the case with Example 1 except that the pore distribution density in the transparent sheet was changed from one pore per 1 square mm to one pore per 10 square mm. The humidity permeability was 2 g/m$^2$·h. The pore diameter and the thickness ratio A/B in Example 10 are indicated in Tables 2-2 and 2-4 described below.

(Example 11)

A transfer material and a printed material were obtained as is the case with Example 1 except that the thickness A of the transparent sheet was changed from 5 $\mu$m to 15 $\mu$m and that the thickness B of the color material receiving layer was changed from 10 $\mu$m to 5 $\mu$m. The ratio (A/B) of the thickness A of the transparent sheet to the thickness B of the color material receiving layer was 3.

(Example 12)

A transfer material and a printed material were obtained as is the case with Example 1 except that the thickness A of the transparent sheet was changed from 5 $\mu$m to 1 $\mu$m and that the thickness B of the color material receiving layer was changed from 10 $\mu$m to 15 $\mu$m. The ratio (A/B) of the thickness A of the transparent sheet to the thickness B of the color material receiving layer was 0.07.

(Example 13)

A transfer material and a printed material were obtained as is the case with Example 1 except that the thickness A of the transparent sheet was changed from 5 $\mu$m to 20 $\mu$m and that the thickness B of the color material receiving layer was changed from 10 $\mu$m to 5 $\mu$m. The ratio (A/B) of the thickness A of the transparent sheet to the thickness B of the color material receiving layer was 4.

(Example 14)

A transfer material and a printed material were obtained as is the case with Example 1 except that the thickness A of the transparent sheet was changed from 5 $\mu$m to 0.5 $\mu$m and that the thickness B of the color material receiving layer was changed from 10 $\mu$m to 0.5 $\mu$m. The ratio (A/B) of the thickness A of the transparent sheet to the thickness B of the color material receiving layer was 0.03.

(Example 15)

[Manufacture of a Laminate Sheet (Component Material for the Transfer Material)]

As a film with a porous structure, a waterproof humidity-permeable film with a thickness of 5 $\mu$m obtained by combining a polyurethane polymer with an ePTFE film resulting from stretching of a polytetrafluoroethylene (PTFE) was laminated to a PET substrate sheet (thickness: 25 $\mu$m) to form a laminate sheet. The transparent sheet of the laminate sheet includes 1,400 million fine pores per 1 square centimeter and can achieve both waterproofness and humidity permeability. The laminate sheet had a water pressure resistance of 45,000 mm or more and a humidity permeability of 13,500 g/m$^2$/24 hrs as measured in accordance with the JIS L1099B-2 method.

[Manufacture of the Transfer Material]

A transfer material and a printed material were obtained as is the case with Example 1 except that the laminate sheet was changed.

(Example 16)

[Manufacture of a Laminate Sheet (Component Material for the Transfer Material)]

As a transparent film with a porous structure, a waterproof humidity-permeable film with a thickness of 5 $\mu$m obtained by crazing polyvinylidene fluorine was laminated to a PET substrate sheet (thickness: 25 $\mu$m) to form a laminate sheet. The laminate sheet as the transparent sheet includes 400 million fine pores per 1 square centimeter and can achieve both waterproofness and humidity permeability. The laminate sheet had a humidity permeability of 3800 g/m$^2$/24 hrs as measured in accordance with the JIS L1099B-2 method.

[Manufacture of the Transfer Material]

A transfer material and a printed material were obtained as is the case with Example 1 except that the laminate sheet was changed.

(Example 17)

[Synthesis of a Coating Liquid for Transparent Sheet Formation]

Nine pts water solution of acrylic emulsion (JONCRYL 352D manufactured by BASF, Tg: 56°C), 1 pts water solution of urethane emulsion (SUPERFLEX 130 manufactured by DKS Co., Ltd., Tg: 101°C), and 1 pts foaming agent were added together. The resultant solution was stirred and mixed for five minutes to prepare a coating liquid for a laminate sheet.

[Manufacture of the Laminate Sheet]

The surface of the PET substrate sheet (thickness: 25 $\mu$m) was coated with the coating liquid for transparent sheet formation in accordance with the method described in the portion (c) of Fig. 18 and then dried to form a laminate sheet. To apply the coating liquid, the die coater was used. The coating speed was set to 5 m/min, and the weight of coating resulting from drying was 5 g/m$^2$. The drying temperature was set to 90°C. The thickness B of the transparent sheet was 5 $\mu$m. The pore distribution density indicated the presence of 10 thousand pores per 1 square mm, and the pore diameter was 0.02 $\mu$m. The humidity permeability was 10 g/m$^2$·h.

[Manufacture of the Transfer Material]

A transfer material and a printed material were obtained as is the case with Example 1 except that the laminate sheet was changed.

(Example 18)

[Synthesis of a Coating Liquid for Transparent Sheet Formation]

Nine pts water solution of acrylic emulsion (JONCRYL 352D manufactured by BASF, Tg: 56°C), 1 pts water solution of urethane emulsion (SUPERFLEX 130 manufactured by DKS Co., Ltd., Tg: 101°C), and 1 pts porous resin particles were added together. The resultant solution was stirred and mixed for five minutes to prepare a coating liquid for transparent sheet formation.

[Manufacture of the Laminate Sheet]

The surface of the PET substrate sheet (thickness: 25 $\mu$m) was coated with the coating liquid for transparent sheet formation in accordance with the method described in the portion (c) of Fig. 18 and then dried to form a laminate sheet. To apply the coating liquid, the die coater was used. The coating speed was set to 5 m/min, and the weight of coating resulting from drying was 5 g/m$^2$. The drying temperature was set to 90°C. The thickness B of the transparent sheet was 5 $\mu$m. The pore distribution density indicated the presence of 10 thousand pores per 1 square mm, and the pore diameter was 0.02 $\mu$m. The humidity permeability was 10 g/m$^2$·h.

[Manufacture of the Transfer Material]

A transfer material and a printed material were obtained as is the case with Example 1 except that the laminate sheet was changed.

(Example 19)

[Synthesis of a Coating Liquid for Transparent Sheet Formation]

Nine pts water solution of acrylic emulsion (JONCRYL 352D manufactured by BASF, Tg: 56°C), 1 pts water solution of urethane emulsion (SUPERFLEX 130 manufactured by DKS Co., Ltd., Tg: 101°C), and 1 pts hollow resin particles were added together. The resultant solution was stirred and mixed for five minutes to prepare a coating liquid for transparent sheet formation.

[Manufacture of the Laminate Sheet]

The surface of the PET substrate sheet (thickness: 25 $\mu$m) was coated with the coating liquid for transparent sheet formation in accordance with the method described in the portion (c) of Fig. 18 and then dried to form a laminate sheet. To apply the coating liquid, the die coater was used. The coating speed was set to 5 m/min, and the weight of coating resulting from drying was 5 g/m$^2$. The drying temperature was set to 90°C. The thickness B of the transparent sheet was 5 μm. The pore distribution density indicated the presence of one pore per 4 square mm, and the pore diameter was 0.02 μm. The humidity permeability was 10 g/m$^2$·h.

[Manufacture of the Transfer Material]

A transfer material and a printed material were obtained as is the case with Example 1 except that the laminate sheet was changed.

(Example 20)

A transfer material and a printed material were obtained as is the case with Example 1 except that the piercing method was changed from the use of the needles 657 as depicted in Fig. 25A to the use of the spur 650 as depicted in Fig. 25B.

(Example 21)

A transfer material and a printed material were obtained as is the case with Example 1 except that the piercing method was changed from the use of the needles 657 as depicted in Fig. 25A to the use of the laser processing apparatus 658 as depicted in Fig. 25C.

(Example 22)

A laminate sheet with pores formed in the transparent sheet and the substrate sheet was manufactured in accordance with a method similar to that in Example 1 except that the pore formation method was changed from the method illustrated in the portion (a) of Fig. 22 to the method illustrated in the portion (a) of Fig. 23. A transfer material and a printed material were obtained using such a laminate sheet and a method similar to that in Example 1.

(Example 23)

A laminate sheet with pores formed in the transparent sheet and the substrate sheet was manufactured in accordance with a method similar to that in Example 1 except that the pore formation method was changed from the method illustrated in the portion (a) of Fig. 22 to the method illustrated in the portion (a) of Fig. 21. A transfer material and a printed material were obtained using such a laminate sheet and a method similar to that in Example 1.

(Example 24)

A laminate sheet with pores formed in the transparent sheet, the color material receiving layer, and the substrate sheet was manufactured in accordance with a method similar to that in Example 1 except that the pore formation method was changed from the method illustrated in the portion (a) of Fig. 22 to the method illustrated in the portion (b) of Fig. 23. A transfer material and a printed material were obtained using such a laminate sheet and a method similar to that in Example 1.

(Example 25)

[Manufacture of the Transfer Material 25]

A transfer material was obtained as is the case with Example 1 except that no pores were formed in the laminate sheet.

[Manufacture of a Printed material]

Before image printing, the transfer material 25 was mechanically pierced using the above-described second manufacturing apparatus (the manufacturing apparatus in Fig. 9) to form pores in the substrate sheet and the transparent sheet. Then, a 60% solid image with a print duty of 60% was printed with pigment ink. Subsequently, the transfer material was thermocompression-bonded to the image substrate, and then, the substrate sheet was peeled off to form a printed material. As the printing unit of the manufacturing apparatus, a print module with a line head (trade name "PM-200Z" manufactured by Canon Finetech Inc.) was used. As the image substrate, a vinyl chloride card (trade name "C-4002" manufactured by EVOLIS) was used.

(Example 26)

[Manufacture of a Printed material]

A 60% solid image with a print duty of 60% was printed on the transfer material 25 with pigment ink using the above-described third manufacturing apparatus (the manufacturing apparatus in Fig. 10). Then, the transfer material was mechanically pierced to form pores in the substrate sheet and the transparent sheet. Subsequently, the transfer material was thermocompression-bonded to the image substrate, and then, the substrate sheet was peeled off to form a printed material. As the printing unit of the manufacturing apparatus, a print module with a line head (trade name "PM-200Z" manufactured by Canon Finetech Inc.) was used. As the image substrate, a vinyl chloride card (trade name "C-4002" manufactured by EVOLIS) was used.

(Example 27)

[Manufacture of a Printed material]

A 60% solid image with a print duty of 60% was printed on the transfer material 25 with pigment ink using the above-described fourth manufacturing apparatus (the manufacturing apparatus in Fig. 11). Then, the transfer material was thermocompression-bonded to the substrate sheet. Subsequently, the substrate sheet and the transparent sheet were mechanically pierced to form pores therein. The substrate sheet was then peeled off to form a printed material. As the printing unit of the manufacturing apparatus, a print module with a line head (trade name "PM-200Z" manufactured by Canon Finetech Inc.) was used. As the image substrate, a vinyl chloride card (trade name "C-4002" manufactured by EVOLIS) was used.

(Example 28)

[Manufacture of a Printed material]

A 60% solid image with a print duty of 60% was printed on the transfer material 25 with pigment ink using the above-described fifth manufacturing apparatus (the manufacturing apparatus in Fig. 12). The transfer material was thermocompression-bonded to the substrate sheet, and then, the substrate sheet was peeled off. When the substrate sheet was peeled off, the transparent sheet was mechanically pierced to form pores therein to provide a printed material. As the printing unit of the manufacturing apparatus, a print module with a line head (trade name "PM-200Z" manufactured by Canon Finetech Inc.) was used. As the image substrate, a vinyl chloride card (trade name "C-4002" manufactured by EVOLIS) was used.

(Example 29)

[Synthesis of a Water Solution of PVA 1]

Polyvinyl alcohol (trade name "PVA123" manufactured by KURARAY CO., LTD.) was dissolved into ion exchange water to prepare a water solution of polyvinyl alcohol with a solid content concentration of 8%. The polyvinyl alcohol had a weight-average degree of polymerization of 2,300 and a degree of saponification of 98 to 99 mol%.

[Synthesis of a Water Solution of PVA 2]

Polyvinyl alcohol (trade name "PVA235", manufactured by KURARAY CO., LTD.) was dissolved into ion exchange water to prepare a water solution of polyvinyl alcohol with a solid content concentration of 8%. The polyvinyl alcohol had a weight-average degree of polymerization of 3,500 and a degree of saponification of 87 to 89 mol%.

[Synthesis of a Water Solution of PVA 3]

Polyvinyl alcohol (trade name "PVA117" manufactured by KURARAY CO., LTD.) was dissolved into ion exchange water to prepare a water solution of polyvinyl alcohol with a solid content concentration of 8%. The polyvinyl alcohol had a weight-average degree of polymerization of 2,300 and a degree of saponification of 98 to 99 mol%.

[Synthesis of a Water Solution of PVA 4]

Polyvinyl alcohol (trade name "PVA110" manufactured by KURARAY CO., LTD.) was dissolved into ion exchange water to prepare a water solution of polyvinyl alcohol with a solid content concentration of 8%. The polyvinyl alcohol had a weight-average degree of polymerization of 2,300 and a degree of saponification of 98 to 99 mol%.

[Synthesis of a Water Solution of PVA 5]

Polyvinyl alcohol (trade name "PVA424H" manufactured by KURARAY CO., LTD.) was dissolved into ion exchange water to prepare a water solution of polyvinyl alcohol with a solid content concentration of 8%. The polyvinyl alcohol had a weight-average degree of polymerization of 2,400 and a degree of saponification of 78.5 to 80.5 mol%.

[Synthesis of a Coating Liquid for Transparent Sheet Formation]

Nine pts water solution of acrylic emulsion (JONCRYL 352D manufactured by BASF, Tg: 56°C, solid content concentration: 45%), 1 pts water solution of urethane emulsion (SUPERFLEX 130 manufactured by DKS Co., Ltd., Tg: 103°C, solid content concentration: 35%), and 0.5 pts water solution of PVA were added together. The resultant solution was stirred and mixed for five minutes to prepare a coating liquid for transparent sheet formation. The content of the swelling resin is indicated in Tables 4-1 and 4-2.

[Manufacture of a Laminate Sheet (Component Material for the Transfer Material)]

The surface of the PET substrate sheet (thickness: 25 $\mu$m) was coated with the coating liquid for transparent sheet formation and then dried to form a laminate sheet. To apply the coating liquid, the die coater was used. The coating speed was set to 5 m/min, and the weight of coating resulting from drying was 5 g/m$^2$. The drying temperature was set to 90°C.

[Manufacture of a Transfer Material]

Immediately after the mixing, the surface of the transparent sheet of the laminate sheet was coated with the coating liquid for color material receiving layer formation and then dried to form the transfer material with the gap absorbing color material receiving layer in Example 1. To apply the coating liquid, the die coater was used. The coating speed was set to 5 m/min, and the weight of coating resulting from drying was 15 g/m$^2$. The drying temperature was set to 60°C. The transfer material was wound into a roll such that the color material receiving layer was located on the outer side of the roll whereas the substrate sheet was located on the inner side of the roll. The thickness A of the color material receiving layer was 10 $\mu$m. The ratio A/B of the thickness A of the transparent sheet to the thickness B of the color material receiving layer was 0.5.

A 60% solid image with a print duty of 60% was printed with pigment ink on the transfer material obtained as described above using the above-described first manufacturing apparatus. The transfer material was thermocompression-bonded to the substrate sheet, and then, the substrate sheet was peeled off to form a printed material. As the printing unit of the manufacturing apparatus, a print module with a line head (trade name "PM-200Z" manufactured by Canon Finetech Inc.) was used. As the image substrate, a vinyl chloride card (trade name "C-4002" manufactured by EVOLIS) was used. The conditions for the thermocompression bonding were a temperature of 160°C, a pressure of 3.9 Kg/cm, and a conveying speed of 50 mm/sec. The peeling angle for the peel-off of the substrate sheet was 90°.

(Example 30)

A transfer material and a printed material were obtained as is the case with Example 29 except that a swelling color material receiving layer was formed by changing the coating liquid for color material receiving layer formation to NS625XC manufactured by TAKAMATSU OIL & FAT CO., LTD.

(Example 31)

A transfer material and a printed material were obtained as is the case with Example 29 except that the thickness A of the transparent sheet was changed from 5 $\mu$m to 15 $\mu$m and that the thickness B of the color material receiving layer was changed from 10 $\mu$m to 5 $\mu$m. The ratio (A/B) of the thickness A of the transparent sheet to thickness B of the color material receiving layer was 3.

(Example 32)

A transfer material and a printed material were obtained as is the case with Example 29 except that the thickness A of the transparent sheet was changed from 5 μm to 1 μm and that the thickness B of the color material receiving layer was changed from 10 μm to 15 μm. The ratio (A/B) of the thickness A of the transparent sheet to thickness B of the color material receiving layer was 0.07.

(Example 33)

A transfer material and a printed material were obtained as is the case with Example 29 except that the thickness A of the transparent sheet was changed from 5 μm to 20 μm and that the thickness B of the color material receiving layer was changed from 10 μm to 5 μm. The ratio (A/B) of the thickness A of the transparent sheet to thickness B of the color material receiving layer was 4.0.

(Example 34)

A transfer material and a printed material were obtained as is the case with Example 29 except that the thickness A of the transparent sheet A was changed from 5 μm to 0.5 μm and that the thickness B of the color material receiving layer was changed from 10 μm to 15 μm. The ratio (A/B) of the thickness A of the transparent sheet to thickness B of the color material receiving layer was 0.03.

(Example 35)

[Preparation of a Water Solution of Polyethylene Glycol]

Polyethylene glycol (PEG, a degree of polymerization of 1,000) was dissolved into ion exchange water to prepare a water solution of polyethylene glycol with a solid content concentration of 8%.

[Manufacture of a Transfer Material]

A transfer material and a printed material were obtained as is the case with Example 29 except that, in the preparation of the coating liquid for transparent sheet formation, the 0.5 pts water solution of PVA 1 was changed to 0.5 pts water solution of polyethylene glycol (PEG).

(Example 36)

A transfer material and a printed material were obtained as is the case with Example 29 except that, in the preparation of the coating liquid for transparent sheet formation, the 0.5 pts water solution of PVA 1 was changed to 0.1 pts water solution of polyethylene glycol. The content of the swelling resin is indicated in Tables 4-1 and 4-2.

(Example 37)

A transfer material and a printed material were obtained as is the case with Example 29 except that, in the preparation of the coating liquid for transparent sheet formation, the 0.5 pts water solution of PVA 1 was changed to 1 pts water solution of PVA 1. The content of the swelling resin in the transparent sheet is indicated in Tables 4-1 and 4-2.

(Example 38)

A transfer material and a printed material were obtained as is the case with Example 29 except that, in the preparation of the coating liquid for transparent sheet formation, the 0.5 pts water solution of PVA 1 was changed to 0.1 pts water solution of PVA 1. The content of the swelling resin in the transparent sheet is indicated in Tables 4-3 and 4-4.

(Example 39)

A transfer material and a printed material were obtained as is the case with Example 29 except that, in the preparation of the coating liquid for transparent sheet formation, the 0.5 pts water solution of PVA 1 was changed to 0.3 pts water solution of PVA 1. The content of the swelling resin in the transparent sheet is indicated in Tables 4-3 and 4-4.

(Example 40)

A transfer material and a printed material were obtained as is the case with Example 29 except that, in the preparation of the coating liquid for transparent sheet formation, the 0.5 pts water solution of PVA 1 was changed to 3 pts water solution of PVA 1. The content of the swelling resin in the transparent sheet is indicated in Tables 4-3 and 4-4.

(Example 41)

A transfer material and a printed material were obtained as is the case with Example 29 except that, in the preparation of the coating liquid for transparent sheet formation, the 0.5 pts water solution of PVA 1 was changed to 0.01 pts water solution of PVA 1. The content of the swelling resin in the transparent sheet is indicated in Tables 4-3 and 4-4.

(Example 42)

A transfer material and a printed material were obtained as is the case with Example 29 except that, in the preparation of the coating liquid for transparent sheet formation, the 0.5 pts water solution of PVA 1 was changed to 0.5 pts water solution of PVA 2.

(Example 43)

A transfer material and a printed material were obtained as is the case with Example 29 except that, in the preparation of the coating liquid for transparent sheet formation, the 0.5 pts water solution of PVA 1 was changed to 0.5 pts water solution of PVA 3.

(Example 44)

A transfer material and a printed material were obtained as is the case with Example 29 except that, in the preparation of the coating liquid for transparent sheet formation, the 0.5 pts water solution of PVA 1 was changed to 0.5 pts water solution of PVA 4.

(Example 45)

A transfer material and a printed material were obtained as is the case with Example 29 except that, in the preparation of the coating liquid for transparent sheet formation, the 0.5 pts water solution of PVA 1 was changed to 0.5 pts water solution of PVA 5.

(Example 46)

[Manufacture of a Transfer Material]

A transfer material and a printed material were obtained as is the case with Example 29 except that, in the preparation of the coating liquid for transparent sheet formation, the 0.5 pts water solution of PVA 1 was changed to 1 pts water solution of NS625XC (solid content concentration: 8%) manufactured by TAKAMATSU OIL & FAT CO., LTD.
On the above-described examples, the following evaluation was executed.

[Evaluation <Fissuring of the Transparent Sheet>]

The printed material was immersed in city water for 48 hours. The printed material was then taken out of the water, and the surface of the printed material was slightly wiped. The transparent sheet was checked for fissuring visually and with a microscope.

⊙: No fissure was observed.
○: No fissure but small creases were observed.
△: No fissure but large creases were observed.
×: Creases remained and a large number of fissures were visually observed.

[Evaluation <Transferability and Releasability>]

The transfer material in any of the examples or comparative examples was used, and the color material receiving layer was transferred to the image substrate to form a printed material. At that time, the levels of transfer of the color material receiving layer and of peel-off of the substrate sheet were evaluated. Evaluation was visually performed. The results are indicated in Tables 2, 3, 4, and 5 below.

○: The color material receiving layer was appropriately transferred to the image substrate, and the substrate sheet was appropriately peeled off. The transparent sheet was prevented from being peeled off.
Δ: The color material receiving layer partly failed to be transferred to the image substrate, the transparent sheet was partly peeled off, or the substrate sheet partly failed to be peeled off.
×: The color material receiving layer and the transparent sheet failed to be transferred to the image substrate.

[Evaluation <Contaminated Water>]

A drop of dye ink with a color material concentration of 5% was placed on the transparent sheet. Thirty seconds later, the dye ink was wiped off, and the transparent sheet was visually checked for dyeing.

○: The transparent sheet was not dyed.
Δ: The transparent sheet was partly dyed but the print information on the color material receiving layer was recognizable.
×: The transparent sheet and the color material receiving layer were dyed, and the print information on the color material receiving layer was unrecognizable.

[Table 2-1]

| Embodiment | | 1 | 2 | 3 | 4 | 5 | 6 | 7 |
|---|---|---|---|---|---|---|---|---|
| Transfer material | | 1 | 2 | 3 | 4 | 5 | 6 | 7 |
| Transparent sheet | Pore diameter ($\mu$m) | 0.02 | 0.02 | 0.002 | 0.7 | 0.001 | 1 | 10 |
| | Pore density distribution | One pore in 2 mm$^2$ | One pore in 2 mm$^2$ | One pore in 2 mm$^2$ | One pore in 2 mm$^2$ | One pore in 2 mm$^2$ | One pore in 2 mm$^2$ | One pore in 2 mm$^2$ |
| | Humidity permeability (g/m$^2$ ▪ h) | 10 | 10 | 10 | 10 | 10 | 10 | 10 |
| | Thickness of transparent sheet (A) | 5 | 5 | 5 | 5 | 5 | 5 | 5 |
| | Thickness of color material receiving layer (B) | 10 | 10 | 10 | 10 | 10 | 10 | 10 |
| | A/B (thickness ratio) | 0.5 | 0.5 | 0.5 | 0.5 | 0.5 | 0.5 | 0.5 |
| Color material receiving layer | | Gap absorbing type | Swelling absorbing type | Gap absorbing type | Gap absorbing type | Gap absorbing type | Gap absorbing type | Gap absorbing type |

[Table 2-2]

| Embodiment | | 1 | 2 | 3 | 4 | 5 | 6 | 7 |
|---|---|---|---|---|---|---|---|---|
| Transfer material | | 1 | 2 | 3 | 4 | 5 | 6 | 7 |
| Passage formation method | | Needle | Needle | Needle | Needle | Needle | Needle | Needle |
| Passage location | Color material receiving layer | | | | | | | |
| | Transparent sheet | ○ | ○ | ○ | ○ | ○ | ○ | ○ |
| | Substrate sheet | | | | | | | |
| Ink jet image printing apparatus | | 1 | 1 | 1 | 1 | 1 | 1 | 1 |
| Evaluati on results | Fissure | ⊙ | ⊙ | ⊙ | ⊙ | ○ | ○ | ○ |
| | Transferability | ○ | Δ | ○ | ○ | ○ | ○ | ○ |
| | Contaminated water | ○ | ○ | ○ | ○ | ○ | ○ | ○ |

[Table 2-3]

| | | 8 | 9 | 10 | 11 | 12 | 13 | 14 |
|---|---|---|---|---|---|---|---|---|
| Embodiment | | 8 | 9 | 10 | 11 | 12 | 13 | 14 |
| Transfer material | | 8 | 9 | 10 | 11 | 12 | 13 | 14 |
| Transparent sheet | Pore diameter ($\mu$m) | 100 | 0.02 | 0.02 | 0.02 | 0.02 | 0.02 | 0.02 |
| | Pore density distribution | One pore in 2 $mm^2$ | One pore in 5 $m^2$ | One pore in 10 $m^2$ | One pore in 2 $mm^2$ | One pore in 2 $mm^2$ | One pore in 2 $mm^2$ | One pore in 2 $mm^2$ |
| | Humidity permeability ($g/m^2 \cdot h$) | 10 | 5 | 3 | 10 | 10 | 10 | 10 |
| | Thickness of transparent sheet (A) | 5 | 5 | 5 | 15 | 1 | 20 | 0.5 |
| | Thickness of color material receiving layer (B) | 10 | 10 | 10 | 5 | 15 | 5 | 15 |
| | A/B (thickness ratio) | 0.5 | 0.5 | 0.5 | 3.00 | 0.07 | 4.00 | 0.03 |
| Color material receiving layer | | Gap absorbing type | Gap absorbing type | Gap absorbing type | Gap absorbing type | Gap absorbing type | Gap absorbing type | Gap absorbing type |

[Table 2-4]

| Embodiment | | 8 | 9 | 10 | 11 | 12 | 13 | 14 |
|---|---|---|---|---|---|---|---|---|
| Transfer material | | 8 | 9 | 10 | 11 | 12 | 13 | 14 |
| Passage formation method | | Needle | Needle | Needle | Needle | Needle | Needle | Needle |
| Passage location | Color material receiving layer | | | | | | | |
| | Transparent sheet | ○ | ○ | ○ | ○ | ○ | ○ | ○ |
| | Substrate sheet | | | | | | | |
| Ink jet image printing apparatus | | 1 | 1 | 1 | 1 | 1 | 1 | 1 |
| Evaluation results | Fissure | Δ | ○ | Δ | ⊙ | ⊙ | ⊙ | Δ |
| | Transferability | ○ | ○ | ○ | ○ | ○ | Δ | ○ |
| | Contaminated water | Δ | ○ | ○ | ○ | ○ | ○ | ○ |

[Table 3-1]

| Embodiment | | 15 | 16 | 17 | 18 | 19 | 20 | 21 |
|---|---|---|---|---|---|---|---|---|
| Color material receiving layer | | 15 | 16 | 17 | 18 | 19 | 20 | 21 |
| Transpare nt sheet | Pore diameter ($\mu$m) | 0.02 | 0.02 | 0.02 | 0.02 | 0.02 | 0.02 | 0.02 |
| | Pore density distribution | 1400 million pores in 1 cm$^2$ | 400 million pores in 1 cm$^2$ | 10 thousand pores in 1 cm$^2$ | 10 thousand pores in 1 cm$^2$ | One pore in 2 mm$^2$ | One pore in 2 mm$^2$ | One pore in 2 mm$^2$ |
| | Humidity permeability (g/m$^2$ ▪ h) | 10 | 10 | 10 | 10 | 10 | 10 | 10 |
| | Thickness of transparent sheet (A) | 5 | 5 | 5 | 5 | 5 | 5 | 5 |
| | Thickness of color material receiving layer (B) | 10 | 10 | 10 | 10 | 10 | 10 | 10 |
| | A/B (thickness ratio) | 0.5 | 0.5 | 0.5 | 0.5 | 0.5 | 0.5 | 0.5 |
| Color material receiving layer | | Gap absorbing type | Gap absorbing type | Gap absorbing type | Gap absorbing type | Gap absorbing type | Gap absorbing type | Gap absorbing type |

[Table 3-2]

| Embodiment | | 15 | 16 | 17 | 18 | 19 | 20 | 21 |
|---|---|---|---|---|---|---|---|---|
| Passage formation method | | Stretching | Crazing | Foaming agent | Porous particles | Hollow particles | Spur | Laser |
| Passage location | Color material receiving layer | | | | | | | |
| | Transparent sheet | ○ | ○ | ○ | ○ | ○ | ○ | ○ |
| | Substrate sheet | | | | | | | |
| Ink jet image printing apparatus | | 1 | 1 | 1 | 1 | 1 | 1 | 1 |
| Evaluation results | Fissure | ⊙ | ⊙ | ⊙ | ⊙ | ⊙ | ⊙ | ⊙ |
| | Transferability | ○ | ○ | ○ | ○ | ○ | ○ | ○ |
| | Contaminated water | ○ | ○ | ○ | ○ | ○ | ○ | ○ |

[Table 3-3]

| Embodiment | | 22 | 23 | 24 | 25 | 26 | 27 | 28 |
|---|---|---|---|---|---|---|---|---|
| Color material receiving layer | | 22 | 23 | 24 | 25 | 25 | 25 | 25 |
| Transparent sheet | Pore diameter ($\mu$m) | 0.02 | 0.02 | 0.02 | 0.02 | 0.02 | 0.02 | 0.02 |
| | Pore density distribution | One pore in 2 mm 2 | One pore in 2 mm 2 | One pore in 2 mm 2 | One pore in 2 mm 2 | One pore in 2 mm 2 | One pore in 2 mm 2 | One pore in 2 mm 2 |
| | Humidity permeability (g/m$^2$ ▪ h) | 10 | 10 | 10 | 10 | 10 | 10 | 10 |
| | Thickness of transparent sheet (A) | 5 | 5 | 5 | 5 | 5 | 5 | 5 |
| | Thickness of color material receiving layer (B) | 10 | 10 | 10 | 10 | 10 | 10 | 10 |
| | A/B (thickness ratio) | 0.5 | 0.5 | 0.5 | 0.5 | 0.5 | 0.5 | 0.5 |
| Color material receiving layer | | Gap absorbing type | Gap absorbing type | Gap absorbing type | Gap absorbing type | Gap absorbing type | Gap absorbing type | Gap absorbing type |

[Table 3-4]

| Embodiment | | 22 | 23 | 24 | 25 | 26 | 27 | 28 |
|---|---|---|---|---|---|---|---|---|
| Passage formation method | | Needle | Needle | Needle | Needle | Needle | Needle | Needle |
| Passage | Color material | | ○ | ○ | | | | |

| location | receiving layer | | | | | | | |
|---|---|---|---|---|---|---|---|---|
| | Transparent sheet | ○ | ○ | ○ | ○ | ○ | ○ | ○ |
| | Substrate sheet | ○ | | ○ | ○ | ○ | ○ | |
| Ink jet image printing apparatus | | 1 | 1 | 1 | 2 | 3 | 4 | 5 |
| Evaluation results | Fissure | ⊙ | ⊙ | ⊙ | ⊙ | ⊙ | ⊙ | ⊙ |
| | Transferability | ○ | ○ | ○ | ○ | ○ | ○ | ○ |
| | Contaminated water | ○ | ○ | ○ | ○ | ○ | ○ | ○ |

[Table 4-1]

| Embodiment | 29 | 30 | 31 | 32 | 33 | 34 | 35 | 36 | 37 |
|---|---|---|---|---|---|---|---|---|---|
| Color material | 29 | 30 | 31 | 32 | 33 | 34 | 35 | 36 | 37 |

| | receiving layer | | | | | | | | | |
|---|---|---|---|---|---|---|---|---|---|---|
| | Humidity permeability $(g/m^2 \cdot h)$ | 10 | 10 | 10 | 10 | 10 | 10 | 5 | 1 | 10 |
| | Thickness of transparent sheet (A) | 5 | 5 | 15 | 1 | 20 | 0.5 | 5 | 5 | 5 |
| Transparent sheet | Thickness of color material rece | 10 | 10 | 5 | 15 | 5 | 15 | 10 | 10 | 10 |

| iving g Layl a (B) | | | | | | | | | |
|---|---|---|---|---|---|---|---|---|---|
| A/B (thickness ratio) | 0.5 | 0.5 | 3 | 0.07 | 4 | 0.03 | 0.5 | 0.5 | 0.5 |
| Swelling resin | Water solution of PVA1 | Water solution of PVA1 | Water solution of PVA1 | Water solution of PVA1 | Water solution of PVA1 | Water solution of PVA1 | Water solution of PEG | Water solution of PEG | Water solution of PVA1 |
| Degree of polymerization | 2300 | 2300 | 2300 | 2300 | 2300 | 2300 | | | 2300 |
| Degree of saponification | 98~99 | 98~99 | 98~99 | 98~99 | 98~99 | 98~99 | | | 98~99 |

| | fication ion | mol% | mol% | mol% | mol% | mol% | mol% | / | / | mol% |
|---|---|---|---|---|---|---|---|---|---|---|

[Table 4-2]

| | | | | | | | | | | |
|---|---|---|---|---|---|---|---|---|---|---|
| Embodiment | | 29 | 30 | 31 | 32 | 33 | 34 | 35 | 36 | 37 |
| Color material receiving layer | | 29 | 30 | 31 | 32 | 33 | 34 | 35 | 36 | 37 |
| Transparent sheet | Amount of resin E1 added (g) | 4.05 | 4.05 | 4.05 | 4.05 | 4.05 | 4.05 | 4.05 | 4.05 | 4.05 |
| | Amount of resin E2 added (g) | 0.35 | 0.35 | 0.35 | 0.35 | 0.35 | 0.35 | 0.35 | 0.35 | 0.35 |
| | Amount of swelling | 0.04 | 0.04 | 0.04 | 0.04 | 0.04 | 0.04 | 0.04 | 0.008 | 0.08 |

| | | | | | | | | | | |
|---|---|---|---|---|---|---|---|---|---|---|
| | resin added (g) | | | | | | | | | |
| | Content of swelling resin (%) | 0.9 | 0.9 | 0.9 | 0.9 | 0.9 | 0.9 | 0.9 | 0.2 | 1.8 |
| Color material receiving layer | | Gap absorbing type | Swelling absorbing type | Gap absorbing type | Gap absorbing type | Gap absorbing type | Gap absorbing type | Gap absorbing type | Gap absorbing type | Gap absorbing type |
| Ink jet image processing apparatus | | 1 | 1 | 1 | 1 | 1 | 1 | 1 | 1 | 1 |
| Evaluation | Fissur | ⊙ | ⊙ | ⊙ | ⊙ | ⊙ | △ | ○ | △ | ⊙ |

| resul ts | e | | | | | | | | | |
|---|---|---|---|---|---|---|---|---|---|---|
| | Transferability | ○ | △ | ○ | ○ | △ | ○ | ○ | ○ | ○ |
| | Contaminated water | ○ | ○ | ○ | ○ | ○ | ○ | ○ | ○ | ○ |

[Table 4-3]

| | Embodiment | 38 | 39 | 40 | 41 | 42 | 43 | 44 | 45 | 46 |
|---|---|---|---|---|---|---|---|---|---|---|
| | Color material receiving layer | 38 | 39 | 40 | 41 | 42 | 43 | 44 | 45 | 46 |
| Transparent sheet | Humidity permeability (g/m² | 10 | 10 | 10 | 10 | 10 | 10 | 10 | 10 | 5 |

| | ·h) | | | | | | | | | |
|---|---|---|---|---|---|---|---|---|---|---|
| | Thickness of transparent sheet (A) | 5 | 5 | 5 | 5 | 5 | 5 | 5 | 5 | 5 |
| | Thickness of color material receiving Layla (B) | 10 | 10 | 10 | 10 | 10 | 10 | 10 | 10 | 10 |
| | A/B (thickness | 0.5 | 0.5 | 0.5 | 0.5 | 0.5 | 0.5 | 0.5 | 0.5 | 0.5 |

| ratio) | | | | | | | | | |
|---|---|---|---|---|---|---|---|---|---|
| Swelling resin | Water solution of PVA 1 | Water solution of PVA 1 | Water solution of PVA 1 | Water solution of PVA 1 | Water solution of PVA 2 | Water solution of PVA 3 | Water solution of PVA 4 | Water solution of PVA 5 | NS 625X C |
| Degree of polymerization | 2300 | 2300 | 2300 | 2300 | 3500 | 1700 | 1100 | 2400 | |
| Degree of saponification | 98~99 mol% | 98~99 mol% | 98~99 mol% | 98~99 mol% | 87~89 mol% | 98~99 mol% | 98~99 mol% | 78.5~80.5 mol% | |

[Table 4-4]

| Embodiment | | 38 | 39 | 40 | 41 | 42 | 43 | 4 4 | 45 | 46 |
|---|---|---|---|---|---|---|---|---|---|---|
| Color material receiving layer | | 38 | 39 | 40 | 41 | 42 | 43 | 4 4 | 45 | 46 |
| Transparent sheet | Amount of resin E1 added (g) | 405 | 405 | 405 | 4.05 | 405 | 405 | 405 | 405 | 405 |
| | Amount of resin E2 added (g) | 0.35 | 0.35 | 0.35 | 0.35 | 0.35 | 0.35 | 0.35 | 0.35 | 0.35 |
| | Amount of swelling resin adde d (g) | 0.008 | 0.024 | 0.24 | 0.0008 | 0.08 | 0.08 | 0.08 | 0.08 | 0.08 |
| | Content of swelling resin (%) | 0.2 | 0.5 | 5.2 | 0.02 | 1.8 | 1.8 | 1.8 | 1.8 | 1.8 |
| Color material receiving layer | | Gap absorbing type | Gap absorbing type | Gap abs orbing type | Gap abs orbing type | Gap absorbing type | Gap absorbing type | Gap absorbing type | Gap absorbing type | Gap ab sorbing type |
| Ink jet image processing apparatus | | 1 | 1 | 1 | 1 | 1 | 1 | 1 | 1 | 1 |
| Evaluation results | Fissure | ⊙ | ○ | Δ | Δ | ○ | ○ | Δ | Δ | ○ |
| | Transferability | ○ | ○ | ○ | ○ | ○ | ○ | ○ | ○ | ○ |
| | Contaminated water | ○ | ○ | Δ | ○ | ○ | ○ | Δ | Δ | ○ |

EP 3 398 789 B1

65

[Table 5]

| Comparative example | | 1 |
|---|---|---|
| Color material transfer material | | 25 |
| Ink jet image printing apparatus | | 1 |
| Evaluation results | Fissure | × |
| | Transferability | ○ |
| | Contaminated water | ○ |

While the present invention has been described with reference to exemplary embodiments, it is to be understood that the invention is limited only by the appended claims and not limited to the disclosed exemplary embodiments. The scope of the following claims is to be accorded the broadest interpretation so as to encompass all such modifications and equivalent structures and functions.

## Claims

1. A transfer material (1) in which a substrate sheet (50), a protective sheet (52), and a color material receiving layer (53) are laminated in this order,
   **characterized in that**
   the protective sheet (52) contains polyvinyl alcohol with an average degree of polymerization of 1,500 to 5,000.

2. The transfer material (1) according to claim 1, wherein a degree of saponification of polyvinyl alcohol is 86 mol% or more.

3. The transfer material (1) according to claim 1 or 2, wherein a content of polyvinyl alcohol in the protective sheet (52) is 0.05 wt% or more and 2.0 wt% or less.

4. The transfer material (1) according to any one of claims 1 to 3, wherein the protective sheet (52) has a humidity permeability of 5 $g/m^2 \cdot h$ or more.

5. The transfer material (1) according to any one of claims 1 to 4, wherein a ratio (A/B) of a thickness A of the protective sheet (52) to a thickness B of the color material receiving layer (53) falls within a range indicated by:

$$0.07 \leq (A/B) \leq 3.00$$

6. The transfer material (1) according to any one of claims 1 to 5, wherein the protective sheet (52) is formed to contain an acrylic-based resin and/or a urethane-based resin as a main component.

7. The transfer material (1) according to any one of claims 1 to 6, wherein the color material receiving layer (53) contains water-soluble resin.

8. The transfer material (1) according to any one of claims 1 to 7, wherein the substrate sheet (50) is capable of being peeled off.

9. A printed material (73) in which an image substrate (55), a color material receiving layer (53) with an image printed thereon, and a protective sheet (52) are sequentially laminated,
   **characterized in that**
   the protective sheet (52) contains polyvinyl alcohol with an average degree of polymerization of 1,500 to 5,000.

10. A manufacturing method for a printed material (73) in which an image substrate (55), a color material receiving layer (53) with an image printed thereon, and a protective sheet (52) are sequentially laminated, the manufacturing method comprising:

a step 1 of printing an image in the color material receiving layer (53) of the transfer material (1) according to any one of claims 1 to 8 by ink jet printing;

a step 2 of thermocompression-bonding the color material receiving layer (53) of the transfer material (1) to the image substrate (55); and

a step 3 of peeling the substrate sheet (50) off from the transfer material (1).


**Patentansprüche**

1. Übertragungsmaterial (1), in dem eine Substratfolie (50), eine Schutzfolie (52) und eine Farbmaterialaufnahmeschicht (53) in dieser Reihenfolge übereinandergeschichtet sind,
**dadurch gekennzeichnet, dass**
die Schutzfolie (52) Polyvinylalkohol mit einem durchschnittlichen Polymerisationsgrad von 1.500 bis 5.000 enthält.

2. Übertragungsmaterial (1) nach Anspruch 1, wobei ein Verseifungsgrad von Polyvinylalkohol 86 Mol% oder mehr beträgt.

3. Übertragungsmaterial (1) nach Anspruch 1 oder 2, wobei ein Gehalt an Polyvinylalkohol in der Schutzfolie (52) 0,05 Gew.-% oder mehr und 2,0 Gew.-% oder weniger beträgt.

4. Übertragungsmaterial (1) nach einem der Ansprüche 1 bis 3, wobei die Schutzfolie (52) eine Feuchtigkeitsdurchlässigkeit von 5 g/m$^2$·h oder mehr hat.

5. Übertragungsmaterial (1) nach einem der Ansprüche 1 bis 4, wobei ein Verhältnis (A/B) einer Dicke A der Schutzfolie (52) zu einer Dicke B der Farbmaterialaufnahmeschicht (53) in einen wie folgt angegebenen Bereich fällt:

$$0,07 \leq (A/B) \leq 3,00$$

6. Übertragungsmaterial (1) nach einem der Ansprüche 1 bis 5, wobei die Schutzfolie (52) so ausgebildet ist, dass sie als einen Hauptbestandteil ein Harz auf Acrylbasis und/oder ein Harz auf Urethanbasis enthält.

7. Übertragungsmaterial (1) nach einem der Ansprüche 1 bis 6, wobei die Farbmaterialaufnahmeschicht (53) wasserlösliches Harz enthält.

8. Übertragungsmaterial (1) nach einem der Ansprüche 1 bis 7, wobei die Substratfolie (50) abgezogen werden kann.

9. Bedrucktes Material (73), in dem aufeinanderfolgend ein Bildsubstrat (55), eine Farbmaterialaufnahmeschicht (53) mit einem darauf aufgedruckten Bild und eine Schutzfolie (52) übereinandergeschichtet sind,
**dadurch gekennzeichnet, dass**
die Schutzfolie (52) Polyvinylalkohol mit einem durchschnittlichen Polymerisationsgrad von 1.500 bis 5.000 enthält.

10. Herstellungsverfahren für ein bedrucktes Material (73), in dem aufeinanderfolgend ein Bildsubstrat (55), eine Farbmaterialaufnahmeschicht (53) mit einem darauf aufgedruckten Bild und eine Schutzfolie (52) übereinandergeschichtet sind, wobei das Herstellungsverfahren Folgendes umfasst:

einen Schritt 1, in dem in der Farbmaterialaufnahmeschicht (53) des Übertragungsmaterials (1) gemäß einem der Ansprüche 1 bis 8 durch Tintenstrahldruck ein Bild gedruckt wird;
einen Schritt 2, in dem die Farbmaterialaufnahmeschicht (53) des Übertragungsmaterials 1 mit dem Bildsubstrat (55) thermokompressionsverbunden wird; und
einen Schritt 3, in dem die Substratfolie (50) von dem Übertragungsmaterial (1) abgezogen wird.


**Revendications**

1. Matériau de transfert (1) dans lequel une feuille de substrat (50), une feuille protectrice (52) et une couche réceptrice de matériau coloré (53) sont stratifiées dans cet ordre,

**EP 3 398 789 B1**

**caractérisé en ce que** la feuille protectrice (52) contient du poly(alcool vinylique) ayant un degré moyen de polymérisation de 1500 à 5000.

2. Matériau de transfert (1) selon la revendication 1, dans lequel un degré de saponification du poly(alcool vinylique) est supérieur ou égal à 86 % en moles.

3. Matériau de transfert (1) selon la revendication 1 ou 2, dans lequel une teneur de la feuille protectrice (52) en poly(alcool vinylique) est supérieure ou égale à 0,05 % en poids et inférieure ou égale à 2,0 % en poids.

4. Matériau de transfert (1) selon l'une quelconque des revendications 1 à 3, dans lequel la feuille protectrice (52) a une perméabilité à l'humidité supérieure ou égale à 5 g/m²•h.

5. Matériau de transfert (1) selon l'une quelconque des revendications 1 à 4, dans lequel le rapport (A/B) de l'épaisseur A de la feuille protectrice (52) à l'épaisseur B de la couche réceptrice de matériau coloré (53) est situé dans la plage représentée par :

$$0,07 \leq (A/B) \leq 3,00$$

6. Matériau de transfert (1) selon l'une quelconque des revendications 1 à 5, dans lequel la feuille protectrice (52) est formée de manière à contenir une résine à base d'acrylique et/ou une résine à base d'uréthane en tant que composant principal.

7. Matériau de transfert (1) selon l'une quelconque des revendications 1 à 6, dans lequel la couche réceptrice de matériau coloré (53) contient une résine soluble dans l'eau.

8. Matériau de transfert (1) selon l'une quelconque des revendications 1 à 7, dans lequel la feuille de substrat (50) peut être retirée par pelage.

9. Matériau imprimé (73) dans lequel un substrat d'image (55), une couche réceptrice de matériau coloré (53) avec une image imprimée sur celle-ci, et une feuille protectrice (52) sont stratifiés en séquence,
**caractérisé en ce que**
la feuille protectrice (52) contient du poly(alcool vinylique) ayant un degré moyen de polymérisation de 1500 à 5000.

10. Procédé de fabrication d'un matériau imprimé (73) dans lequel un substrat d'image (55), une couche réceptrice de matériau coloré (53) avec une image imprimée sur celle-ci, et une feuille protectrice (52) sont stratifiés en séquence, le procédé fabrication comprenant :

une étape 1 consistant à imprimer une image dans la couche réceptrice de matériau coloré (53) du matériau de transfert (1) selon l'une quelconque des revendications 1 à 8 au moyen d'une impression par jet d'encre ;
une étape 2 consistant à coller par thermocompression la couche réceptrice de matériau coloré (53) du matériau de transfert (1) avec le substrat d'image (55) ; et
une étape 3 consistant à retirer par pelage la feuille de substrat (50) du matériau de transfert (1).

73

52
53

55

**FIG.1A**

1

53
52
50

**FIG.1B**

1

53
59
58
52
51
50

**FIG.1C**

FIG.2

FIG.3

FIG.4A FIG.4B FIG.4C
FIG.4D FIG.4E
FIG.4F FIG.4G FIG.4H

EP 3 398 789 B1

FIG.5

EP 3 398 789 B1

FIG.6

EP 3 398 789 B1

FIG.7

EP 3 398 789 B1

FIG.8

FIG.9

**FIG.10**

EP 3 398 789 B1

**FIG.11**

EP 3 398 789 B1

FIG.12

BEFORE IMMERSION            AFTER IMMERSION          DRYING

# FIG.13

EP 3 398 789 B1

EP 3 398 789 B1

FIG.14C

FIG.14B

FIG.14A

FIG.14F

FIG.14E

FIG.14D

82

C

521　52A

52

517　53

55

72

**FIG.15A**

550

551

52A
52

53

55

72

**FIG.15B**

FIG.16A

FIG.16B

**FIG.17**

FIG.18

EP 3 398 789 B1

FIG.19

EP 3 398 789 B1

**FIG.20**

EP 3 398 789 B1

FIG.21

FIG.22

FIG.23

EP 3 398 789 B1

EP 3 398 789 B1

FIG.24A

FIG.24B

FIG.24C

92

657

**FIG.25A**

52

52A

650

**FIG.25B**

52    52A

658

**FIG.25C**

52    52A

**FIG.26**

**FIG.27**

EP 3 398 789 B1

**FIG.28**

**FIG.29**

FIG.30

WATER FAILS
TO BE VAPORIZED

73

664

665

660

662

52

661

WATER FAILS
TO BE ABSORBED

53

72

55

**FIG.31A**

WATER CAN BE
VAPORIZED

73

663

660

662

52

661

664

665

WATER CAN BE
ABSORBED

53

72

55

**FIG.31B**

**FIG.32A**

**FIG.32B**

FIG.33

FIG.34

FIG.35A  FIG.35B  FIG.35C  FIG.35D  FIG.35E  FIG.35F  FIG.35G  FIG.35H

EP 3 398 789 B1

**FIG.36**

**FIG.37**

**FIG.38**

EP 3 398 789 B1

FIG.39A

FIG.39B

FIG.39C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006517871 A
- JP H08207450 A
- EP 2845744 A2
- JP 2007051271 A
- JP 2002121515 A
- JP 2706498 B
- JP 2015110321 A

### Non-patent literature cited in the description

- Chapter 1 Light Scattering in Structure of Polymer (2) Scattering Experiments and Morphological Observations. KYORITSU SHUPPAN CO., LTD
- *J. Chem. Phys.,* 1979, vol. 70, 3965
- Polymer Handbook. John Wiley & Sons, Inc, 1989